(19) Europäisches Patentamt / European Patent Office / Office européen des brevets

(11) **EP 4 550 685 A1**

(12) **EUROPEAN PATENT APPLICATION**
published in accordance with Art. 153(4) EPC

(43) Date of publication:
07.05.2025   Bulletin 2025/19

(21) Application number: 23850402.1

(22) Date of filing: 01.08.2023

(51) International Patent Classification (IPC):
H04B 7/06 (2006.01)    H04B 7/0408 (2017.01)
H04B 7/08 (2006.01)    H04B 17/309 (2015.01)
H04W 24/08 (2009.01)   H04W 24/10 (2009.01)
H04L 5/00 (2006.01)

(52) Cooperative Patent Classification (CPC):
H04B 7/0408; H04B 7/06; H04B 7/08;
H04B 17/309; H04L 5/00; H04W 24/08;
H04W 24/10

(86) International application number:
PCT/KR2023/011260

(87) International publication number:
WO 2024/029901 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:   01.08.2022   KR 20220095698

(71) Applicant: Samsung Electronics Co., Ltd.
Suwon-si, Gyeonggi-do 16677 (KR)

(72) Inventors:
• ABEBE, Ameha Tsegaye
Suwon-si, Gyeonggi-do 16677 (KR)
• LIM, Yeongeun
Suwon-si, Gyeonggi-do 16677 (KR)
• PARK, Kyoungmin
Suwon-si, Gyeonggi-do 16677 (KR)
• CHOI, Kyungjun
Suwon-si, Gyeonggi-do 16677 (KR)
• JANG, Youngrok
Suwon-si, Gyeonggi-do 16677 (KR)
• JI, Hyoungju
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND APPARATUS FOR MEASURING AND REPORTING CSI FOR BEAM MANAGEMENT IN WIRELESS COMMUNICATION SYSTEM**

(57)   The present disclosure relates to a 5th generation (5G) or 6th generation (6G) communication system for supporting a higher data rate. The present disclosure may be applied to intelligent services (e.g., smart homes, smart buildings, smart cities, smart cars or connected cars, health care, digital education, retail business, and security and safety related services) based on 5G communication technology and IoT related technology. The present disclosure relates to a method and apparatus for performing channel state information (CSI) measurement and reporting for artificial intelligence (AI)-based beam management in a wireless communication system.

FIG. 17

EP 4 550 685 A1

## Description

## Technical Field

The present disclosure relates to a method and apparatus for measuring and reporting channel state information (CSI) for beam management in a wireless communication system.

## Background Art

The 5th generation (5G) mobile communication technology defines a broad frequency band to enable a fast transmission speed and a new service, and is implemented not only in a sub 6 gigahertz (GHz) frequency band, such as 3.5 GHz, but also in an above 6 GHz ultra-high frequency band referred to as millimeter wave (mmWave), such as 28 GHz and 39 GHz. Also, in the 6th generation (6G) mobile communication technology also referred to as a beyond 5G system, implementation in a terahertz (THz) band (e.g., a 3 THz in 95 GHz) is considered to achieve a transmission speed 50 times faster than 5G mobile communication technology and an ultra-low latency time reduced to 1/10 of 5G mobile communication technology.

In early stages of 5G mobile communication technology, standardization has been performed on beamforming and massive multiple-input multiple-output (MIMO) for alleviating a pass loss of radio waves and increasing a transmission distance of radio waves in an ultra-high frequency band, support of various numerologies (an operation of a plurality of subcarrier intervals) and a dynamic operation of slot formats for efficient use of ultra-high frequency resources, initial access technology for supporting multi-bean transmission and wideband, definition and operation of a bandwidth part (BWP), a new channel coding method, such as polar code, for highly reliable transmission of control information and low density parity check (LDPC) code for massive data transmission, L2 pre-processing, and network slicing providing a dedicated network specialized for a specific service, targeting at service support and performance requirement satisfaction for enhanced mobile broadband (eMBB), ultra-reliable low-latency communications (URLLC), and massive machine-type communications (mMTC).

Currently, discussions are being held to improve and enhance initial 5G mobile communication technology in consideration of services that were to be supported by 5G mobile communication technology, and physical layer standardization is being performed on vehicle-to-everything (V2X) for assisting driving determination of an autonomous vehicle and increasing user convenience, based on its location and status information transmitted by the vehicle, new radio unlicensed (NR-U) targeting at a system operation matching various regulatory requirements in an unlicensed band, NR user equipment (UE) low power consumption technology (UE power saving), non-terrestrial network (NTN) that is direct UE-satellite communication for coverage securement in areas where communication with terrestrial networks is impossible, and positioning.

In addition, standardization of wireless interface architectures/protocols is being performed for industrial Internet of things (IIoT) for supporting new services through linkage and convergence with other industries, integrated access and backhaul (IAB) providing nodes for expanding network service areas by integrally supporting wireless backhaul links and access links, mobility enhancement including conditional handover and dual active protocol stack (DAPS) handover, and 2-step random access channel (RACH) for NR for simplifying random access procedures, and standardization of system architectures/services is also being performed for 5G baseline architectures (e.g., service-based architectures and service-based interfaces) for grafting network functions virtualization (NFV) onto software-defined networking (SDN) technology, and mobile edge computing (MEC) for receiving services based on locations of UEs.

When such a 5G mobile communication system is commercialized, connected devices that have been explosively increased may be connected to a communication network and accordingly, it is anticipated that functions and performance of the 5G mobile communication system need to be reinforced and the connected devices need to be integrally operated. In this regard, new studies will be conducted on extended reality (XR) for efficiently supporting augmented reality (AR), virtual reality (VR), and mixed reality (MR), 5G performance improvement and complexity reduction using artificial intelligence (AI) and machine learning (ML), AI service support, metaverse service support, and drone communication.

Such development of a 5G mobile communication system may serve as the basis for development of not only multi-antenna transmission technology, such as new waveform, full dimensional (FD)-MIMO, array antenna, and large scale antenna, for coverage securement in THz band of 6G mobile communication technology, higher-dimensional space multiplexing technology using metamaterial-based lens and antenna and orbital angular momentum (OAM) for improving coverage of a THz band signal, and reconfigurable intelligent surface (RIS) technology, but also full duplex technology for improving frequency efficiency and enhancing a system network of 6G mobile communication technology, AI-based communication technology that uses a satellite and AI from a design stage and realizes system optimization by internalizing end-to-end AI support function, and next-generation distributed computing technology that realizes a service with complexity exceeding limits of UE computing capability by using ultra-high performance communication and computing resources.

## Disclosure of Invention

### Technical Problem

The present disclosure relates to a method and apparatus for measuring and reporting channel state information (CSI) for beam management in a wireless communication system.

The present disclosure provides a method of receiving a CSI-reference signal (CSI-RS) of a terminal in a wireless communication system and a method of reporting measured CSI.

According to the present disclosure, beam management conforming to an existing system in which an amount of CSI-RSs is not reduced may be achieved even if an amount of CSI-RSs for beam management is reduced in a wireless communication system.

### Solution to Problem

An operating method of a terminal in a wireless communication system, according to an embodiment of the present disclosure, may include receiving, from a base station, configuration information (CSI-ReportConfig) about an application time of channel state information (CSI), and reporting, to the base station, the CSI predicted from the application time estimated based on the configuration information.

The configuration information may include at least two of a number (F) of pieces of CSI to be reported, a total application time (T) of the F pieces of CSI, or an application time (L) per CSI, and an application time (X) of first predicted CSI, L=T/F, and among the predicted CSI, an application time of an i-th predicted CSI may be X+(i-1)*L.

The configuration information may be configured through radio resource control (RRC).

The configuration information may be configured for each CSI report according to a report configuration type (reportConfigType).

When the report configuration type is aperiodic CSI report, the configuration information may be configured as a table in which each row includes at least two of F, T, and L, and X.

The row of the table may be indicated through downlink control information (DCI) or a medium access control (MAC) control element (CE).

The reporting may include reporting on an assumption that an application time of periodic CSI report or semi-persistent CSI report does not overlap an application time of aperiodic CSI report.

The reporting may include, when an application time of aperiodic CSI report overlaps an application time of following periodic CSI report or semi-persistent CSI report, not performing the following periodic CSI report or semi-persistent CSI report.

An operating method of a base station in a wireless communication system, according to an embodiment of the present disclosure, includes transmitting, to a terminal, configuration information (CSI-ReportConfig) about an application time of channel state information (CSI), and receiving, from the terminal, reporting of the CSI predicted from the application time estimated based on the configuration information.

The configuration information may include at least two of a number (F) of pieces of CSI to be reported, a total application time (T) of the F pieces of CSI, or an application time (L) per CSI, and an application time (X) of first predicted CSI, L=T/F, and among the predicted CSI, an application time of an i-th predicted CSI may be X+(i-1)*L.

A terminal in a wireless communication system, according to an embodiment of the present disclosure, includes a transceiver and at least one processor connected to the transceiver, wherein the at least one processor is configured to receive, from a base station, configuration information (CSI-ReportConfig) about an application time of channel state information (CSI), and report, to the base station, the CSI predicted from the application time estimated based on the configuration information.

### Advantageous Effects of Invention

According to the present disclosure, a service, in which not only a data rate is increased but also reliability is high, may be provided in a wireless communication system by reducing an amount of channel state information-reference signals (CSI-RSs) required for a beam management method providing a high beamforming gain and maintaining high-quality beam receive sensitivity.

### Brief Description of Drawings

FIG. 1 is a diagram showing a base structure of a time-frequency domain that is a radio resource region in which data or a control channel is transmitted in a 5th generation (5G) wireless communication system.

FIG. 2 is a diagram showing a slot structure used in a 5G wireless communication system.

FIG. 3 is a diagram showing an example of a configuration for a bandwidth part (BWP) in a 5G wireless communication system.

FIG. 4 is a diagram showing an example of a control resource set in which a downlink control channel is transmitted, in a 5G wireless communication system.

FIG. 5 is a diagram showing a structure of a downlink control channel of a 5G wireless communication system.

FIG. 6 is a diagram showing an example of a method of configuring uplink and downlink resources of a 5G wireless communication system.

FIG. 7 is a diagram showing an example of base station beam allocation according to a transmission configuration indication (TCI) state configuration in a wireless communication system, according to an embodiment of the present disclosure.

FIG. 8 is a diagram showing an example of a TCI state allocation method regarding a physical downlink control channel (PDCCH) in a wireless communication system, according to an embodiment of the present disclosure.

FIG. 9 is a diagram showing a structure of TCI indication media access control (MAC) control element (CE) signaling for PDCCH demodulation reference signal (DMRS).

FIG. 10 is a diagram showing an example of a beam configuration considering a control resource set (CORESET) and a search space, according to the above description.

FIG. 11 is a diagram for describing a method of selecting a receivable CORESET, considering a priority when a terminal receives a downlink control channel, in a wireless communication system, according to an embodiment of the present disclosure.

FIG. 12 is a diagram showing an example of a frequency axis resource allocation of a physical downlink shared channel (PDSCH) in a wireless communication system, according to an embodiment of the present disclosure.

FIG. 13 illustrates a process for beam configuration and activation of PDSCH.

FIG. 14 illustrates an example of a physical uplink shared channel (PUSCH) repetition type B according to an embodiment of the present disclosure.

FIG. 15 is a diagram showing an example of an aperiodic channel state report according to an embodiment of the present disclosure.

FIG. 16 is a diagram showing an example of an aperiodic channel state report according to an embodiment of the present disclosure.

FIG. 17 illustrates an example of a method of configuring a beam set of beam measurement and reporting for beam estimation, according to an embodiment of the present disclosure.

FIG. 18 illustrates an example of an application time of predicted CSI, according to an embodiment of the present disclosure.

FIG. 19 illustrates an example of MAC CE for configuring an application time of predicted CSI in an aperiodic (AP) CSI report, according to an embodiment of the present disclosure.

FIG. 20 illustrates another example of MAC CE for configuring an application time of predicted CSI in an AP CSI report, according to an embodiment of the present disclosure.

FIG. 21 illustrates an example of MAC CE for configuring an application time of predicted CSI in a CSI report, according to an embodiment of the present disclosure.

FIG. 22 illustrates an example of a method of implicatively configuring an application time of predicted CSI in an AP CSI report, according to an embodiment of the present disclosure.

FIG. 23 illustrates an example of a method by which a terminal reports an application time of predicted CSI in a semi-persistent (SP)-CSI report, according to an embodiment of the present disclosure.

FIG. 24 illustrates an example of a method by which a terminal reports an application time of predicted CSI in a periodic (P)-CSI report, according to an embodiment of the present disclosure.

FIG. 25 is a block diagram showing a structure of a terminal, according to an embodiment of the present disclosure.

FIG. 26 is a block diagram showing a structure of a base station, according to an embodiment of the present disclosure.

Mode for **the** Invention

Hereinafter, embodiments of the present disclosure will be described with reference to accompanying drawings.

In describing the embodiments, descriptions of technical contents that are well known in the technical field to which the present disclosure belongs and are not directly related to the present disclosure will be omitted. By omitting the unnecessary description, the gist of the present disclosure may be more clearly conveyed without obscuring the subject matter.

For the same reasons, some elements are exaggerated, omitted, or schematically illustrated in drawings. Also, the size of each component does not completely reflect the actual size. In the drawings, like elements are denoted by like reference numerals.

Advantages and features of the present disclosure and methods of accomplishing the same may be understood more readily by reference to the following detailed description of the embodiments and the accompanying drawings. In this regard, the embodiments of the present disclosure may have different forms and should not be construed as being limited to the descriptions set forth herein. Rather, these embodiments are provided so that the present disclosure will be thorough and complete and will fully convey the concept of the present disclosure to one of ordinary skill in the art, and the present disclosure will only be defined by the appended claims. Throughout the specification, like reference numerals denote like elements. While describing the present disclosure, detailed description of related well-known functions or configurations may be omitted when it is deemed that they may unnecessarily obscure the essence of the present disclosure. Also, terms used below are defined in consideration of functions in the present disclosure, and may have different meanings according to an intention of a user or operator, customs, or the like. Therefore, the terms used herein have to be defined based on the meaning of the terms together with the description throughout the specification.

Hereinafter, a base station is an entity that allocates resources to a terminal, and may be at least one of a gNode B (gNB), an eNode B (eNB), a Node B (NB), a base station (BS), a wireless access unit, a BS controller, or a node on a network. Examples of a terminal may include user equipment (UE), a mobile station (MS), a cellular phone, a smartphone, a computer, and a multimedia system capable of performing a communication function. In the present disclosure, a downlink (DL) is a wireless transmission path of a signal transmitted from a base station to a terminal, and an uplink (UL) is a wireless transmission path of a signal transmitted from a terminal to a base station. Also, hereinbelow, a long-term evolution (LTE), long-term evolution advanced (LTE-A), or 5th generation (5G) system may be described as an example, but an embodiment of the present disclosure may also be applied to other communication systems having a similar technical background or channel form. An example of the other communication may include a 5G mobile communication technology (5G or new radio (NR)) developed after LTE-A, and hereinafter, 5G may have a concept including existing LTE, LTE-A, and another similar service. Also, it will be understood by one of ordinary skill in the art that the present disclosure may be applied to other communication systems through some modifications without departing from the scope of the present disclosure.

It will be understood that blocks in flowcharts or combinations of the flowcharts may be performed by computer program instructions. Because these computer program instructions may be loaded into a processor of a general-purpose computer, special purpose computer, or other programmable data processing apparatus, the instructions, which are executed via the processor of the computer or other programmable data processing apparatus generate means for implementing the functions specified in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" in the embodiments means a software component or hardware component such as a field-programmable gate array (FPGA) or an application-specific integrated circuit (ASIC), and performs a specific function. However, the term "unit" or "-er/or" is not limited to software or hardware. The "unit" or "-er/or" may be formed so as to be in an addressable storage medium, or may be formed so as to operate one or more processors. Thus, for example, the term "unit" or "-er/or" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" or "-ers/ors" may be associated with the smaller number of components and "units" or "-ers/ors", or may be divided into additional components and "units" "-ers/ors". Furthermore, the components and "units" or "-ers/ors" may be embodied to reproduce one or more central processing units (CPUs) in a device or security multimedia card. Also, in the embodiments, the "unit" may include at least one processor.

Wireless communication systems have been developed from wireless communication systems providing voice centered services in the early stage toward broadband wireless communication systems providing high-speed, high-quality packet data services, like communication standards of high speed packet access (HSPA), long term evolution (LTE or evolved universal terrestrial radio access (E-UTRA)), LTE-advanced (LTE-A), and LTE-Pro of the 3GPP, high rate packet data (HRPD) and ultra mobile broadband (UMB) of 3GPP2, IEEE 802.16e or the like.

As a representative example of the broadband wireless communication system, the LTE system has adopted an orthogonal frequency division multiplexing (OFDM) scheme in a downlink (DL) and has adopted a single carrier frequency division multiple access (SC-FDMA) scheme in an uplink (UL). The UL refers to a radio link through which a terminal (a UE or an MS) transmits data or a control signal to a base station (BS) (e.g., eNode B), and the DL refers to a radio link through which a BS transmits data or a control signal to a terminal. In such a multiple access scheme, data or control information of each user is classified by generally allocating and managing the data or control information such that time-frequency resources for transmitting data or control information for each user do not overlap each other, that is, such that orthogonality is established.

As a future communication system after the LTE system, that is, a 5G communication system, has to be able to freely reflect various requirements of a user and a service provider, and thus, services satisfying various requirements at the same time need to be supported. The services considered for the 5G communication system include enhanced mobile broadband (eMBB), massive machine type communication (mMTC), ultra reliability low latency communication (hereinafter, URLLC), etc.

The eMBB aims to provide a higher data rate than a data rate supported by the LTE, LTE-A, or LTE-Pro system. For example, in the 5G communication system, the eMBB should be able to provide a peak data rate of 20 Gbps in a downlink and a peak data rate of 10 Gbps in an uplink from the viewpoint of one base station. In addition, the 5G communication system needs to provide the increased user perceived data rate of the terminal simultaneously with providing the peak data rate. In order to satisfy such requirements, improvement of various transmitting/receiving technologies including a further improved multiple-input and multiple-output (MIMO) transmission technology may be demanded. In addition, signals are transmitted using a transmission bandwidth of up to 20 MHz in a 2 GHz band used by the current LTE system, but the 5G communication system uses a bandwidth wider than 20 MHz in a frequency band of 3 to 6 GHz or more than 6 GHz, thereby satisfying a data rate required in the 5G communication system.

At the same time, the mMTC is being considered to support application services such as Internet of things (IoT) in the 5G communication system. The mMTC is required for an access support of a large-scale terminal in a cell, coverage enhancement of a terminal, improved battery time, and cost reduction of a terminal in order to efficiently provide the IoT. The IoT needs to be able to support a large number of terminals (e.g., 1,000,000 terminals/km$^2$) in a cell because it is attached to various sensors and various devices to provide communication functions. In addition, the terminals supporting the mMTC are more likely to be positioned in shaded areas not covered by a cell, such as the underground of a building due to nature of services, and thus, the terminal may require a wider coverage than other services provided by the 5G communication system. The terminals that support the mMTC should be configured as inexpensive terminals and require very long battery lifetime, such as 10 to 15 years, because it is difficult to frequently replace batteries of the terminals.

Lastly, the URLLC is a cellular-based wireless communication system used for a specific purpose (mission-critical). For example, a service used in remote control for a robot or machinery, industrial automation, unmanned aerial vehicle, remote health care, or emergency alert may be considered. Accordingly, communication provided by the URLLC should provide very low latency and very high reliability. For example, a service supporting the URLLC should satisfy air interface latency smaller than 0.5 milliseconds and at the same time, has a packet error rate of $7^5$ or less. Accordingly, for URLLC-supportive services, the 5G communication system may be required to provide a transmit time interval (TTI) shorter than those for other services while securing reliable communication links by allocating a broad resource in a frequency band.

The three services, that is, eMBB, URLLC, and mMTC, of the 5G system may be multiplexed in one system and may be transmitted. In this case, the services may use different transmission and reception methods and transmission and reception parameters in order to meet their different requirements. Obviously, the 5G system are not limited by the above three services.

[NR Time-Frequency Resource]

Hereinafter, a frame structure of a 5G system will be described in detail with reference to accompanying drawings.

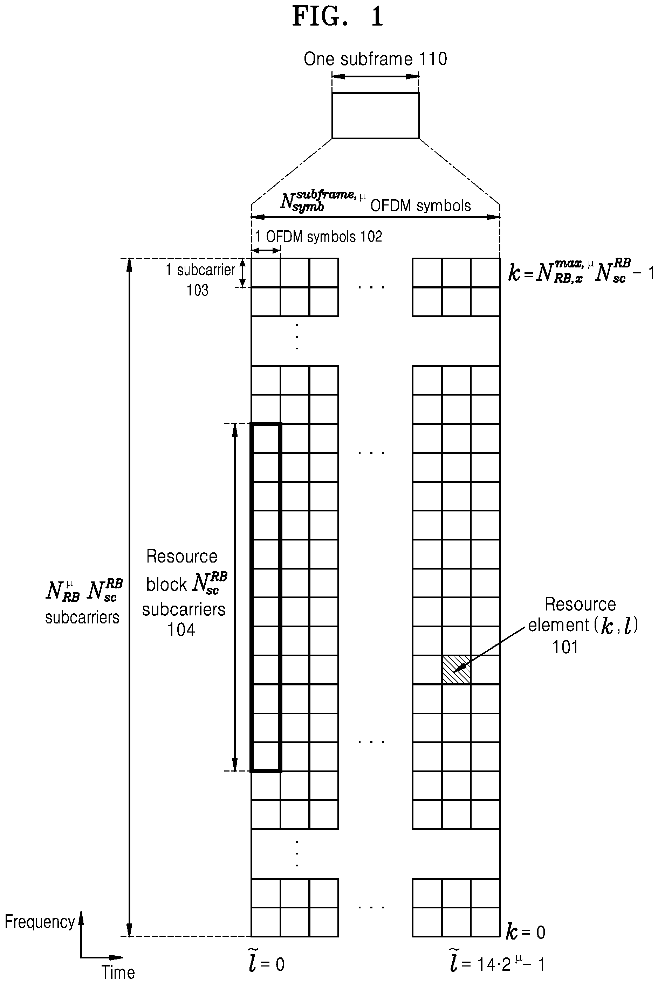

FIG. 1 is a diagram showing a base structure of a time-frequency domain that is a radio resource region in which data or a control channel is transmitted in a 5G wireless communication system.

Referring to FIG. 1, a horizontal axis represents a time domain and a vertical axis represents a frequency domain. In the time and frequency domains, a base unit of a resource is a resource element (RE) 101, and may be defined by one OFDM symbol 102 on a time axis and one subcarrier 103 on a frequency axis. In the frequency domain, $N_{RB}^{RB}$ (for example, 12) consecutive REs may configure one resource block (RB) 104.

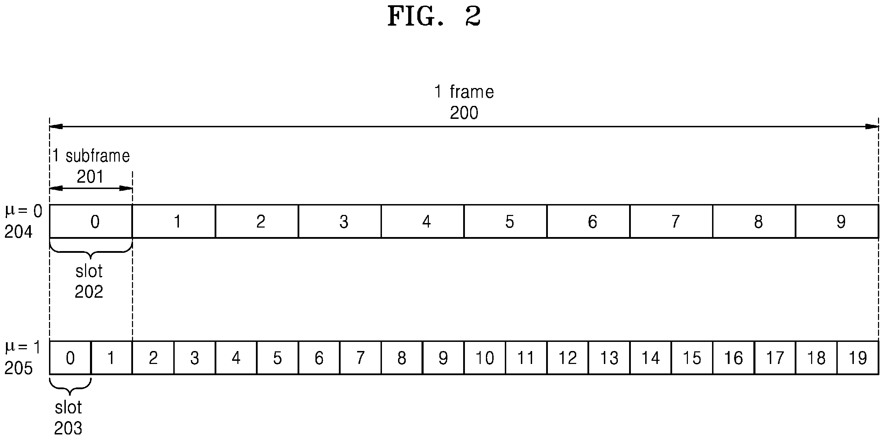

FIG. 2 is a diagram showing a slot structure used in a 5G wireless communication system.

FIG. 2 illustrates an example of structures of a frame 200, a subframe 201, and a slot 202. One frame 200 may be defined to be 10 ms. One subframe 201 may be defined to be 1 ms, and accordingly, one frame 200 may include total 10 subframes 201. One slot 202 or 203 may be defined by 14 OFDM symbols (i.e., the number $N_{symb}^{slot}$ of symbols per slot = 14). One subframe 201 may include one or more slots 202 and 203, and the number of slots 202 and 203 per subframe 201 may vary depending on configuration values $\mu$ 204 and 205 for subcarrier spacings. FIG. 2 illustrates cases where the configuration value $\mu$ 204 is 0 and the configuration value $\mu$ 205 is 1, as configuration values for subcarrier spacings. When the configuration value $\mu$ 204 is 0, one subframe 201 may include one slot 202, and when the configuration value $\mu$ 205 is 1, one subframe 201 may include two slots 203. In other words, the number ($N_{slot}^{subframe,\mu}$) of slots per subframe may vary depending on a configuration value $\mu$ for subcarrier spacing, and accordingly, the number ($N_{slot}^{frame,\mu}$) of slots per frame may vary. $N_{slot}^{subframe,\mu}$ and $N_{slot}^{frame,\mu}$ according to the configuration value $\mu$ for each subcarrier spacing may be defined as Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, a BWP configuration in a 5G communication system will be described in detail with reference to the drawings.

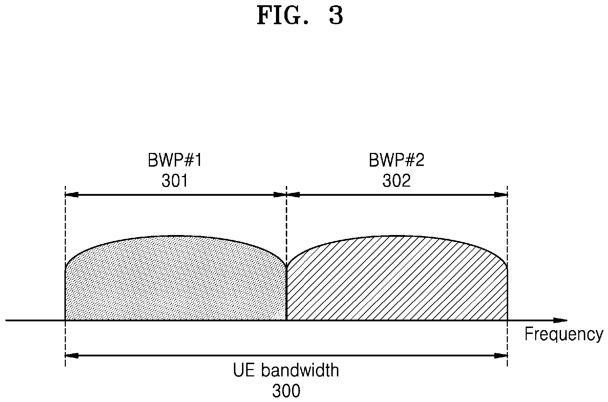

FIG. 3 is a diagram showing an example of a configuration for a BWP in a 5G wireless communication system.

Referring to FIG. 3, an example in which a UE bandwidth 300 is configured in two BWPs, that is, a BWP#1 301 and a BWP#2 302, is illustrated. A base station may configure one or a plurality of BWPs for a UE, and may configure following pieces of information for each BWP.

[Table 2]

| BWP ::=          SEQUENCE { |
|---|
|    bwp-Id                 BWP-Id, |
|    (Bandwidth Part Identifier) |

```
        locationAndBandwidth        INTEGER (1..65536),
        (Bandwidth Part Location)
        subcarrierSpacing           ENUMERATED {n0, n1, n2, n3, n4, n5},
        (Subcarrier Spacing)
        cyclicPrefix                ENUMERATED { extended }
        (Cyclic Prefix)
}
```

However, the configuration for BWP is not limited to the above example, and in addition to the information configured as described above, various parameters related to a BWP may be configured for the UE. The configuration information may be transmitted by the base station to the UE through higher layer signaling, for example, radio resource control (RRC) signaling. At least one BWP from among the configured one or plurality of BWPs may be activated. Whether to activate the configured BWP may be semi-statically transmitted from the base station to the UE through RRC signaling or may be dynamically transmitted through downlink control information (DCI).

According to an embodiment, an initial BWP for an initial access may be configured for the UE before an RRC connection, by the base station through a master information block (MIB). More specifically, the UE may receive configuration information related to a control resource set (CORESET) and a search space, in which a physical downlink control channel (PDCCH) may be transmitted, the PDCCH being designed to receive system information (may correspond to remaining system information (RMSI) or system information block 1 (SIB1)) required for the initial access, through the MIB in an initial access stage. The CORESET and search space that are configured through the MIB may be assumed to be identities (IDs) 0, respectively. The base station may notify the UE of configuration information, such as frequency allocation information, time allocation information, or numerology, for a CORESET#0, through the MIB. Also, the base station may notify the UE of configuration information for a monitoring cycle and occasion for the CORESET#0, i.e., configuration information for a search space#0, through the MIB. The UE may consider a frequency domain configured by the CORESET#0 obtained from the MIB, as an initial BWP for the initial access. Here, an ID of the initial BWP may be considered to be 0.

A configuration of a BWP supported in the 5G communication system may be used for various purposes.

According to an embodiment, when a bandwidth supported by the UE is smaller than a system bandwidth, the configuration of the BWP may be used. For example, the base station may configure a frequency location (configuration information 1) of the BWP to the UE such that the UE may transmit or receive data at a specific frequency location within the system bandwidth.

Also, according to an embodiment, the base station may configure the UE with a plurality of BWPs for a purpose of supporting different numerologies. For example, to support data transmission/reception using both a subcarrier spacing of 15 kHz and a subcarrier spacing of 30 kHz for the UE, the base station may configure two BWPs respectively having the subcarrier spacings of 15 kHz and 30 kHz. Frequency division multiplexing may be performed on the different BWPs, and when the base station is to transmit/receive data in a specific subcarrier spacing, a BWP configured to have the corresponding subcarrier spacing may be activated.

Also, according to an embodiment, the base station may configure the UE with BWPs, which have different sizes of bandwidths, for a purpose of reducing power consumption of the UE. For example, when the UE supports a very wide bandwidth, for example, a bandwidth of 100 MHz, and always transmits/receives data through the corresponding bandwidth, very large power consumption may occur. In particular, it is very inefficient in terms of power consumption to monitor an unnecessary downlink control channel in a large bandwidth of 100 MHz in a situation where there is no traffic. Accordingly, the base station may configure the UE with BWP of a relatively small bandwidth, for example, a BWP of 20 MHz, for a purpose of reducing the power consumption of the UE. In a situation where there is no traffic, the UE may perform a monitoring operation in a BWP of 20 MHz, and when data is generated, the UE may transmit/receive the data through a BWP of 100 MHz according to an instruction of the base station.

In relation to a method of configuring the BWP, the UEs before RRC-connected may receive configuration information regarding an initial BWP through a MIB in the initial access stage. In detail, the UE may be configured with, from an MIB of a physical broadcast channel (PBCH), a CORESET for a downlink control channel through which DCI for scheduling a system information block (SIB) may be transmitted. A bandwidth of the CORESET configured by the MIB may be considered as the initial BWP, and the UE may receive a physical downlink shared channel (PDSCH) through which the SIB is transmitted, through the configured initial BWP. The initial BWP may be used for other system information (OSI), paging, and random access, in addition to the reception of the SIB.

[BWP Switch]

When the UE is configured with one or more BWPs, the base station may indicate the UE to switch the BWP by using a BWP indicator field in the DCI. For example, in FIG. 3, when a currently activated BWP of the UE is the BWP#1 301, the base station may indicate the BWP#2 302 as a BWP indicator in the DCI to the UE, and the UE may perform a BWP switch to the BWP#2 302 indicated by the BWP indicator in the received DCI.

As described above, because a DCI-based BWP switch may be indicated by the DCI scheduling a PDSCH or physical uplink shared channel (PUSCH), when a BWP switch request is received, the UE needs to perform reception or transmission in the PDSCH or PUSCH scheduled by the DCI, at the switched BWP without any difficulty. In this regard, the standard has stipulated requirements on a delay time $T_{BWP}$ required during the BWP switch, and for example, the requirements may be defined as below.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | [1] | [3] |
| 1 | 0.5 | [2] | [5] |
| 2 | 0.25 | [3] | [9] |
| 3 | 0.125 | [6] | [17] |
| Note 1: Depends on UE capability. Note 2: If the BWP switch involves changing of SCS, the BWP switch delay is determined by the larger one between the SCS before BWP switch and the SCS after BWP switch. | | | |

The requirements on the delay time for the BWP switch may support Type 1 or Type 2 depending on UE capability. The UE may report a supportable type of the delay time for the BWP to the base station.

According to the requirements on the delay time for the BWP switch, when the UE has received, from a slot n, the DCI including a BWP switch indicator, the UE may complete a switch to a new BWP indicated by the BWP switch indicator at a time point not later than a slot $n+T_{BWP}$, and perform transmission/reception for a data channel scheduled by the DCI at the switched new BWP. When the base station is to schedule the data channel in the new BWP, the base station may determine time domain resource allocation for the data channel, considering the delay time $T_{BWP}$ for the BWP switch of the UE. In other words, regarding a method of determining the time domain resource allocation for the data channel when scheduling the data channel in the new BWP, the base station may schedule the data channel after the delay time for the BWP switch. Accordingly, the UE may not expect the DCI indicating the BWP switch to indicate a value of a slot offset K0 or K2 smaller than the delay time $T_{BWP}$ for the BWP switch.

When the UE has received the DCI (for example, a DCI format 1_1 or 0_1) indicating the BWP switch, the UE may not perform any transmission or reception during a time period from a third symbol of a slot that received the PDCCH including the DCI to a starting point of a slot indicated by the value of the slot offset K0 or K2 indicated by a time domain resource allocation indicator field in the DCI. For example, when the UE has received the DCI indicating the BWP switch in the slot n, and a value of the slot offset indicated by the DCI is K, the UE may not perform any transmission or reception from a third symbol of the slot n to a symbol before a slot n+K (i.e., a last symbol of a slot n+K-1).

[Synchronization Signal (SS)/PBCH Block]

Next, an SS/PBCH block in the 5G wireless communication system will be described.

The SS/PBCH block may denote a physical layer channel block including a primary SS (PSS), a secondary SS (SSS), and a PBCH. In detail, the SS/PBCH block may be as below.

- PSS: A PSS is a signal serving as a criterion of downlink time/frequency synchronization, and provides partial information of a cell ID.
- SSS: An SSS is a signal serving as a criterion of the downlink time/frequency synchronization, and provides the remaining cell ID information which is not provided by the PSS. Additionally, the SSS may serve as a reference signal for demodulation of a PBCH.
- PBCH: A PBCH provides essential system information required for transmission/reception for a data channel and a control channel of a UE. The essential system information may include search space-related control information indicating radio resource mapping information of the control channel, and scheduling control information regarding a separate data channel through which system information is transmitted.

- SS/PBCH Block: An SS/PBCH block is configured by a combination of the PSS, the SSS, and the PBCH. One or a plurality of SS/PBCH blocks may be transmitted within a time of 5 ms, and each of the transmitted SS/PBCH blocks may be identified by an index.

The UE may detect the PSS and the SSS in an initial access stage, and may decode the PBCH. An MIB may be obtained from the PBCH, and a CORESET#0 (may correspond to a CORESET having a CORESET index of 0) may be configured from the MIB. The UE may monitor the CORESET#0 under the assumption that the SS/PBCH block selected by the UE and a demodulation reference signal (DMRS) transmitted in the CORESET#0 are at a quasi-co-location (QCL). The UE may receive system information through DCI transmitted in the CORESET#0. The UE may obtain random access channel (RACH)-related configuration information required for the initial access, from the received system information. The UE may transmit a physical RACH (PRACH) to the base station in consideration of the selected SS/PBCH index, and the base station that received the PRACH may obtain information regarding an index of the SS/PBCH block selected by the UE. The base station may identify which block from among the SS/PBCH blocks is selected by the UE, and that the UE is monitoring the CORESET#0 associated with the block.

[PDCCH: Regarding DCI]

Next, DCI in a 5G wireless communication system will be described in detail.

In a 5G system, scheduling information for uplink data (or physical uplink shared channel (PUSCH)) or downlink data (or PDSCH) may be transmitted from the base station to the UE through DCI. The UE may monitor a fallback DCI format and a non-fallback DCI format for the PUSCH or PDSCH. The fallback DCI format may include a fixed field pre-defined between the base station and the UE, and the non-fallback DCI format may include a configurable field.

The DCI may be transmitted through a PDCCH through channel coding and modulating processes. A cyclic redundancy check (CRC) is attached to a DCI message payload, and the CRC may be scrambled to a radio network temporary identifier (RNTI) corresponding to an identity of the UE. Different RNTIs may be used depending on a purpose of a DCI message, for example, UE-specific data transmission, a power control command, or a random access response. In other words, the RNTI is not explicitly transmitted, but is transmitted by being included in a CRC calculation process. Upon receiving the DCI message transmitted on the PDCCH, the UE may check the CRC by using an allocated RNTI, and when a result of checking the CRC is correct, the UE may determine that the corresponding message is transmitted to the UE.

For example, the DCI scheduling the PDSCH for system information (SI) may be scrambled with an SI-RNTI. The DCI scheduling the PDSCH for a random access response (RAR) message may be scrambled with an RA-RNTI. The DCI scheduling the PDSCH for a paging message may be scrambled with a P-RNTI. The DCI notifying a slot format indicator (SFI) may be scrambled with an SFI-RNTI. The DCI notifying transmit power control (TPC) may be scrambled with a TPC-RNTI. The DCI scheduling UE-specific PDSCH or PUSCH may be scrambled with cell RNTI (C-RNTI), modulation coding scheme C-RNTI (MSC-C-RNTI), or configured scheduling RNTI (CS-RNTI).

A DCI format 0_0 may be used as fallback DCI for scheduling the PUSCH and at this time, the CRC may be scrambled with the C-RNTI. The DCI format 0_0 of which the CRC is scrambled with the C-RNTI may include pieces of information as below.

[Table 4]

| |
|---|
| - Identifier for DCI formats - 1 bit |
| - The value of this bit field is always set to 0, indicating an UL DCI format |
| - Frequency domain resource assignment - $\left\lceil \log_2(N_{RB}^{UL,BWP}(N_{RB}^{UL,BWP}+1)/2) \right\rceil$ bits where $N_{RB}^{UL,BWP}$ is defined in clause 7.3.1.0 |
| - For PUSCH hopping with resource allocation type 1: |
| - $N_{UL\_hop}$ MSB bits are used to indicate the frequency offset according to Subclause 6.3 of [6, TS 38.214], where $N_{UL\_hop} = 1$ if the higher layer parameter *frequencyHoppingOffsetLists* contains two offset values and $N_{UL\_hop} = 2$ if the higher layer parameter *frequencyHoppingOffsetLists* contains four offset values |
| - $\left\lceil \log_2(N_{RB}^{UL,BWP}(N_{RB}^{UL,BWP}+1)/2) \right\rceil - N_{UL\_hop}$ bits provide the frequency domain resource allocation according to Subclause 6.1.2.2.2 of [6, TS 38.214] |
| - For non-PUSCH hopping with resource allocation type 1: |

(continued)

- $\left\lceil \log_2(N_{RB}^{UL,BWP}(N_{RB}^{UL,BWP}+1)/2) \right\rceil$ bits provide the frequency domain resource allocation according to Subclause 6.1.2.2.2 of [6, TS 38.214]

- Time domain resource assignment - 4 bits as defined in Subclause 6.1.2.1 of [6, TS 38.214]

- Frequency hopping flag - 1 bit according to Table 7.3.1.1.1-3, as defined in Subclause 6.3 of [6, TS 38.214]

- Modulation and coding scheme - 5 bits as defined in Subclause 6.1.4.1 of [6, TS 38.214]

- New data indicator - 1 bit

- Redundancy version - 2 bits as defined in Table 7.3.1.1.1-2

- HARQ process number - 4 bits

- TPC command for scheduled PUSCH - 2 bits as defined in Subclause 7.1.1 of [5, TS 38.213]

- Padding bits, if required.

- UL/SUL indicator - 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).

- If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured;

- If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.

- If the UL/SUL indicator is not present in DCI format 0_0 and *pucch-Config* is not configured, the corresponding PUSCH scheduled by the DCI format 0_0 is for the uplink on which the latest PRACH is transmitted.

A DCI format 0_1 may be used as non-fallback DCI for scheduling the PUSCH and at this time, the CRC may be scrambled with the C-RNTI. The DCI format 0_1 of which the CRC is scrambled to the C-RNTI may include pieces of information as below.

[Table 5]

- Identifier for DCI formats - 1 bit

- The value of this bit field is always set to 0, indicating an UL DCI format

- Carrier indicator - 0 or 3 bits, as defined in Subclause 10.1 of [5, TS38.213].

- UL/SUL indicator - 0 bit for UEs not configured with *supplementary Uplink* in *ServingCellConfig* in the cell or UEs configured with *supplementary Uplink* in *ServingCellConfig* in the cell but only one carrier in the cell is configured for PUSCH transmission; otherwise, 1 bit as defined in Table 7.3.1.1.1-1.

- Bandwidth part indicator - 0, 1 or 2 bits as determined by the number of UL BWPs $n_{BWP,RRC}$ configured by higher layers, excluding the initial UL bandwidth part. The bitwidth for this field is determined as $\left\lceil \log_2(n_{BWP}) \right\rceil$ bits, where

- $n_{BWP} = n_{BWP,RRC} + 1$ if $n_{BWP,RRC} \leq 3$, in which case the bandwidth part indicator is equivalent to the ascending order of the higher layer parameter *BWP-Id;*

- otherwise $n_{BWP} = n_{BWP,RRC}$, in which case the bandwidth part indicator is defined in Table 7.3.1.1.2-1;

If a UE does not support active BWP change via DCI, the UE ignores this bit field.

- Frequency domain resource assignment - number of bits determined by the following, where $N_{RB}^{UL,BWP}$ is the size of the active UL bandwidth part:

- $N_{RBG}$ bits if only resource allocation type 0 is configured, where $N_{RBG}$ is defined in Subclause 6.1.2.2.1 of [6, TS 38.214],

(continued)

$-\left\lceil \log_2(N_{\text{RB}}^{\text{UL,BWP}}(N_{\text{RB}}^{\text{UL,BWP}}+1)/2) \right\rceil$ bits if only resource allocation type 1 is configured, or

$\max\left( \left\lceil \log_2(N_{\text{RB}}^{\text{UL,BWP}}(N_{\text{RB}}^{\text{UL,BWP}}+1)/2) \right\rceil, N_{\text{RBG}} \right)+1$ bits if both resource allocation type 0 and 1 are configured.

- if both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.
- For resource allocation type 0, the $N_{\text{RBG}}$ LSBs provide the resource allocation as defined in Subclause 6.1.2.2.1 of [6, TS 38.214].

- For resource allocation type 1, the $\left\lceil \log_2(N_{\text{RB}}^{\text{UL,BWP}}(N_{\text{RB}}^{\text{UL,BWP}}+1)/2) \right\rceil$ LSBs provide the resource allocation as follows:
- For PUSCH hopping with resource allocation type 1:
- $N_{\text{UL\_hop}}$ MSB bits are used to indicate the frequency offset according to Subclause 6.3 of [6, TS 38.214], where $N_{\text{UL\_hop}} = 1$ if the higher layer parameter *frequencyHoppingOffsetLists* contains two offset values and $N_{\text{UL\_hop}} = 2$ if the higher layer parameter *frequencyHoppingOffsetLists* contains four offset values

$-\left\lceil \log_2(N_{\text{RB}}^{\text{UL,BWP}}(N_{\text{RB}}^{\text{UL,BWP}}+1)/2) \right\rceil - N_{\text{UL\_hop}}$ bits provide the frequency domain resource allocation according to Clause 6.1.2.2.2 of [6, TS 38.214]
- For non-PUSCH hopping with resource allocation type 1:

$-\left\lceil \log_2(N_{\text{RB}}^{\text{UL,BWP}}(N_{\text{RB}}^{\text{UL,BWP}}+1)/2) \right\rceil$ bits provide the frequency domain resource allocation according to Subclause 6.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, 4, 5, or 6 bits as defined in Subclause 6.1.2.1 of [6, TS38.214]. The bitwidth for this field is determined as $\left\lceil \log_2(I) \right\rceil$ bits, where $I$ is the number of entries in the higher layer parameter *pusch-TimeDomainAllocationList* if the higher layer parameter is configured; otherwise $I$ is the number of entries in the default table.
- Frequency hopping flag - 0 or 1 bit:
- 0 bit if only resource allocation type 0 is configured, or if the higher layer parameter *frequencyHopping* is not configured;
- 1 bit according to Table 7.3.1.1.1-3 otherwise, only applicable to resource allocation type 1, as defined in Subclause 6.3 of [6, TS 38.214].
- Modulation and coding scheme - 5 bits as defined in Subclause 6.1.4.1 of [6, TS 38.214]
- New data indicator - 1 bit
- Redundancy version - 2 bits as defined in Table 7.3.1.1.1-2
- HARQ process number - 4 bits
- 1st downlink assignment index - 1 or 2 bits:
- 1 bit for semi-static HARQ-ACK codebook;
- 2 bits for dynamic HARQ-ACK codebook;
- 2nd downlink assignment index - 0 or 2 bits:
- 2 bits for dynamic HARQ-ACK codebook with two HARQ-ACK sub-codebooks;
- 0 bit otherwise.
- TPC command for scheduled PUSCH - 2 bits as defined in Subclause 7.1.1 of [5, TS38.213]
- Second TPC command for scheduled PUSCH - 2 bits as defined in Clause 7.1.1 of [5, TS38.213] if higher layer parameter *SecondTPCFieldDCI-0-1* is configured; 0 bit otherwise.

(continued)

- SRS resource set indicator -

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

or $\left\lceil \log_2 (N_{\mathrm{SRS}}) \right\rceil$ bits, where $N_{\mathrm{SRS}}$ is the number of configured SRS resources in the SRS resource set associated with the higher layer parameter *usage* of value *'CodeBook'* or *'nonCodeBook'*,

$$- \left\lceil \log_2 \left( \sum_{k=1}^{\min\{L_{\max}, N_{\mathrm{SRS}}\}} \binom{N_{\mathrm{SRS}}}{k} \right) \right\rceil$$

bits according to Tables 7.3.1.1.2-28/29//30/31 if the higher layer parameter *txConfig = nonCodebook,* where $N_{\mathrm{SRS}}$ is the number of configured SRS resources in the SRS resource set associated with the higher layer parameter *usage* of value *'nonCodeBook',* and

- if UE supports operation with *maxMIMO-Layers* and the higher layer parameter *maxMIMO-Layers of PUSCH-ServingCellConfig* of the serving cell is configured, $L_{\max}$ is given by that parameter

- otherwise, $L_{max}$ is given by the maximum number of layers for PUSCH supported by the UE for the serving cell for non-codebook based operation.

- $\left\lceil \log_2 (N_{\mathrm{SRS}}) \right\rceil$ bits according to Tables 7.3.1.1.2-32 if the higher layer parameter *txConfig = codebook,* where $N_{\mathrm{SRS}}$ is the number of configured SRS resources in the SRS resource set associated with the higher layer parameter *usage* of value *'codeBook',*

- Precoding information and number of layers - number of bits determined by the following:

- 0 bits if the higher layer parameter *txConfig = nonCodeBook;*

- 0 bits for 1 antenna port and if the higher layer parameter *txConfig = codebook;*

- 4, 5, or 6 bits according to Table 7.3.1.1.2-2 for 4 antenna ports, if *txConfig = codebook,* and according to whether transform precoder is enabled or disabled, and the values of higher layer parameters *maxRank,* and *codebookSubset;*

- 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset;*

- 2 or 4 bits according to Table7.3.1.1.2-4 for 2 antenna ports, if *txConfig = codebook,* and according to whether transform precoder is enabled or disabled, and the values of higher layer parameters *maxRank,* and *codebookSubset;*

- 1 or 3 bits according to Table7.3.1.1.2-5 for 2 antenna ports, if *txConfig = codebook,* and according to whether transform precoder is enabled or disabled, and the values of higher layer parameters *maxRank,* and *codebookSubset;*

- Antenna ports - number of bits determined by the following

- 2 bits as defined by Tables 7.3.1.1.2-6, if transform precoder is enabled, *dmrs-Type*=1, and *maxLength*=1;

- 4 bits as defined by Tables 7.3.1.1.2-7, if transform precoder is enabled, *dmrs-Type*=1, and *maxLength*=2;

- 3 bits as defined by Tables 7.3.1.1.2-8/9/10/11 if transform precoder is disabled, *dmrs-Type*=1*,* and *maxLength*=1, and the value of rank is determined according to the SRS resource indicator field if the higher layer parameter *txConfig = nonCodebook* and according to the Precoding information and number of layers field if the higher layer parameter *txConfig = codebook;*

- 4 bits as defined by Tables 7.3.1.1.2-12/13/14/15 if transform precoder is disabled, *dmrs-Type*=1, and *maxLength*=2, and the value of rank is determined according to the SRS resource indicator field if the higher layer parameter *txConfig = nonCodebook* and according to the Precoding information and number of layers field if the higher layer parameter *txConfig = codebook;*

(continued)

- 4 bits as defined by Tables 7.3.1.1.2-16/17/18/19 if transform precoder is disabled, *dmrs-Type*=2*,* and *maxLength*=1, and the value of rank is determined according to the SRS resource indicator field if the higher layer parameter *txConfig = nonCodebook* and according to the Precoding information and number of layers field if the higher layer parameter *txConfig = codebook;*

- 5 bits as defined by Tables 7.3.1.1.2-20/21/22/23 if transform precoder is disabled, *dmrs-Type*=2*,* and *maxLength*=2*,* and the value of rank is determined according to the SRS resource indicator field if the higher layer parameter *txConfig = nonCodebook* and according to the Precoding information and number of layers field if the higher layer parameter *txConfig = codebook,*

where the number of CDM groups without data of values 1, 2, and 3 in Tables 7.3.1.1.2-6 to 7.3.1.1.2-23 refers to CDM groups {0}, {0,1}, and {0, 1,2} respectively.

If a UE is configured with both *dmrs-UplinkForPUSCH-MappingTypeA* and *dmrs-UplinkForPUSCH-MappingTypeB,* the bitwidth of this field equals $max\{x_A,x_B\}$, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB.* A number of $|x_A - x_B|$ zeros are padded in the MSB of this field, if the mapping type of the PUSCH corresponds to the smaller value of $x_A$ and $x_B$.

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CSI request - 0, 1, 2, 3, 4, 5, or 6 bits determined by higher layer parameter *reportTriggerSize.*

- CBG transmission information (CBGTI) - 0 bit if higher layer parameter *codeBlockGroupTransmission* for PUSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

- 0 bit if *PTRS-UplinkConfig* is not configured and transform precoder is disabled, or if transform precoder is enabled, or if *maxRank=1;*

- 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DRMS ports are indicated by the Antenna ports field.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- beta_offset indicator - 0 if the higher layer parameter *betaOffsets = semiStatic*; otherwise 2 bits as defined by Table 9.3-3 in [5, TS 38.213].

- DMRS sequence initialization - 0 bit if transform precoder is enabled; 1 bit if transform precoder is disabled.

- UL-SCH indicator - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0", CSI request of all zero(s).

A DCI format 1_0 may be used as fallback DCI for scheduling the PDSCH and at this time, the CRC may be scrambled with the C-RNTI. The DCI format 1_0 of which the CRC is scrambled with the C-RNTI may include pieces of information as below.

[Table 6]

- Identifier for DCI formats - 1 bits

- The value of this bit field is always set to 1, indicating a DL DCI format

- Frequency domain resource assignment - $\left\lceil \log_2(N_{RB}^{DL,BWP}(N_{RB}^{DL,BWP}+1)/2) \right\rceil$ bits where $N_{RB}^{DL,BWP}$ is given by Subclause 7.3.1.0

If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows:

- Random Access Preamble index - 6 bits according to *ra-PreambleIndex* in Subclause 5.1.2 of [8, TS38.321]

- UL/SUL indicator - 1 bit. If the value of the "Random Access Preamble index" is not all zeros and if the UE is configured with *supplementary Uplink* in *ServingCellConfig* in the cell, this field indicates which UL carrier in the cell to transmit the PRACH according to Table 7.3.1.1.1-1; otherwise, this field is reserved.

- SS/PBCH index - 6 bits. If the value of the "Random Access Preamble index" is not all zeros, this field indicates the SS/PBCH that shall be used to determine the RACH occasion for the PRACH transmission; otherwise, this field is reserved.

- PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved

- Reserved bits - 10 bits

Otherwise, all remaining fields are set as follows:

- Time domain resource assignment - 4 bits as defined in Subclause 5.1.2.1 of [6, TS 38.214]

- VRB-to-PRB mapping - 1 bit according to Table 7.3.1.2.2-5

- Modulation and coding scheme - 5 bits as defined in Subclause 5.1.3 of [6, TS 38.214]

- New data indicator - 1 bit

- Redundancy version - 2 bits as defined in Table 7.3.1.1.1-2

- HARQ process number - 4 bits

- Downlink assignment index - 2 bits as defined in Subclause 9.1.3 of [5, TS 38.213], as counter DAI

- TPC command for scheduled PUCCH - 2 bits as defined in Subclause 7.2.1 of [5, TS 38.213]

- PUCCH resource indicator - 3 bits as defined in Subclause 9.2.3 of [5, TS 38.213]

- PDSCH-to-14ARQ_feedback timing indicator - 3 bits as defined in Subclause 9.2.3 of [5, TS38.213]

A DCI format 1_1 may be used as non-fallback DCI for scheduling the PDSCH and at this time, the CRC may be scrambled with the C-RNTI. The DCI format 1_1 of which the CRC is scrambled with the C-RNTI may include pieces of information as below.

[Table 7]

- Identifier for DCI formats - 1 bits

- The value of this bit field is always set to 1, indicating a DL DCI format

- Carrier indicator - 0 or 3 bits as defined in Subclause 10.1 of [5, TS 38.213].

- Bandwidth part indicator - 0, 1 or 2 bits as determined by the number of DL BWPs $n_{BWP,RRC}$ configured by higher layers, excluding the initial DL bandwidth part. The bitwidth for this field is determined as $\left\lceil \log_2(n_{BWP}) \right\rceil$ bits, where

- $n_{BWP} = n_{BWP,RRC} + 1$ if $n_{BWP,RRC} \leq 3$, in which case the bandwidth part indicator is equivalent to the ascending order of the higher layer parameter *BWP-Id;*

- otherwise $n_{BWP} = n_{BWP,RRC}$, in which case the bandwidth part indicator is defined in Table 7.3.1.1.2-1;

If a UE does not support active BWP change via DCI, the UE ignores this bit field.

- Frequency domain resource assignment - number of bits determined by the following, where $N_{RB}^{DL,BWP}$ is the size of the active DL bandwidth part:

- $N_{RBG}$ bits if only resource allocation type 0 is configured, where $N_{RBG}$ is defined in Subclause 5.1.2.2.1 of [6, TS38.214],

$$\left\lceil \log_2(N_{RB}^{DL,BWP}(N_{RB}^{DL,BWP}+1)/2) \right\rceil$$ bits if only resource allocation type 1 is configured, or

$$\max\left(\left\lceil \log_2(N_{RB}^{DL,BWP}(N_{RB}^{DL,BWP}+1)/2) \right\rceil, N_{RBG}\right)+1$$ bits if both resource allocation type 0 and 1 are configured..

- If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

- For resource allocation type 0, the $N_{RBG}$ LSBs provide the resource allocation as defined in Subclause 5.1.2.2.1 of [6, TS 38.214].

- For resource allocation type 1, the $\left\lceil \log_2(N_{RB}^{DL,BWP}(N_{RB}^{DL,BWP}+1)/2) \right\rceil$ LSBs provide the resource allocation as defined in Subclause 5.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 5.1.2.1 of [6, TS 38.214]. The bitwidth for this field is determined as $\left\lceil \log_2(I) \right\rceil$ bits, where $I$ is the number of entries in the higher layer parameter *pdsch-TimeDomainAllocationList* if the higher layer parameter is configured; otherwise $I$ is the number of entries in the default table.

- VRB-to-PRB mapping - 0 or 1 bit:

- 0 bit if only resource allocation type 0 is configured or if interleaved VRB-to-PRB mapping is not configured by high layers;

- 1 bit according to Table 7.3.1.2.2-5 otherwise, only applicable to resource allocation type 1, as defined in Subclause 7.3.1.6 of [4, TS 38.211].

- PRB bundling size indicator - 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].

- Rate matching indicator - 0, 1, or 2 bits according to higher layer parameters *rateMatchPatternGroupl* and *rateMatchPatternGroup2,* where the MSB is used to indicate *rateMatchPatternGroup1* and the LSB is used to indicate *rateMatchPatternGroup2* when there are two groups.

- ZP CSI-RS trigger - 0, 1, or 2 bits as defined in Subclause 5.1.4.2 of [6, TS 38.214]. The bitwidth for this field is determined as $\left\lceil \log_2(n_{ZP}+1) \right\rceil$ bits, where $n_{ZP}$ is the number of aperiodic ZP CSI-RS resource sets configured by higher layer.

For transport block 1:

- Modulation and coding scheme - 5 bits as defined in Subclause 5.1.3.1 of [6, TS 38.214]

- New data indicator - 1 bit

- Redundancy version - 2 bits as defined in Table 7.3.1.1.1-2

For transport block 2 (only present if *maxNrofCodeWordsScheduledByDCI* equals 2):

- Modulation and coding scheme - 5 bits as defined in Subclause 5.1.3.1 of [6, TS 38.214]

- New data indicator - 1 bit

- Redundancy version - 2 bits as defined in Table 7.3.1.1.1-2

If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number - 4 bits

- Downlink assignment index - number of bits as defined in the following

(continued)

- 4 bits if more than one serving cell are configured in the DL, the higher layer parameter *pdsch-HARQ-ACK-Codebook=dynamic*, where the 2 MSB bits are the counter DAI and the 2 LSB bits are the total DAI;

- 2 bits if only one serving cell is configured in the DL and the higher layer parameter *pdsch-HARQ-ACK-Codebook=dynamic,* where the 2 bits are the counter DAI;

- 0 bits otherwise.

- TPC command for scheduled PUCCH - 2 bits as defined in Subclause 7.2.1 of [5, TS 38.213]

- PUCCH resource indicator - 3 bits as defined in Subclause 9.2.3 of [5, TS 38.213]

- PDSCH-to-14ARQ_feedback timing indicator - 3 bits as defined in Clause 9.2.3 of [5, TS 38.213]. The bitwidth for this field is determined as $\lceil \log_2(I) \rceil$ bits, where *I* is the number of entries in the higher layer parameter *dl-Data-ToUL-ACK*.

- Antenna port(s) - 4, 5 or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_{0,...}, p_{\nu-1}\}$ shall be determined according to the ordering of DMRS port(s) given by Tables 7.3.1.2.2-1/2/3/4.

If a UE is configured with both *dmrs-DownlinkForPDSCH-MappingTypeA* and *dmrs-DownlinkForPDSCH-Mapping-TypeB,* the bitwidth of this field equals max$\{x_S, x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A - x_B|$ zeros are padded in the MSB of this field, if the mapping type of the PDSCH corresponds to the smaller value of $x_A$ and $x_B$.

- Transmission configuration indication - 0 bit if higher layer parameter *tci-PresentInDCI* is not enabled; otherwise 3 bits as defined in Subclause 5.1.5 of [6, TS38.214].

If "Bandwidth part indicator" field indicates a bandwidth part other than the active bandwidth part,

- if the higher layer parameter *tci-PresentInDCI* is not enabled for the CORESET used for the PDCCH carrying the DCI format 1_1,

- the UE assumes *tci-PresentInDCI* is not enabled for all CORESETs in the indicated bandwidth part;

- otherwise,

- the UE assumes *tci-PresentInDCI* is enabled for all CORESETs in the indicated bandwidth part.

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CBG transmission information (CBGTI) - 0 bit if higher layer parameter *PDSCH-CodeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.

- CBG flushing out information (CBGFI) - 1 bit if higher layer parameter *codeBlockGroupFlushIndicator* is configured as "TRUE", 0 bit otherwise.

- DMRS sequence initialization - 1 bit.

[PDCCH: CORESET, Resource Element Group (REG), Control Channel Element (CCE), Search Space]

Hereinafter, a downlink control channel in a 5G wireless communication system will be described in detail with reference to the drawings.

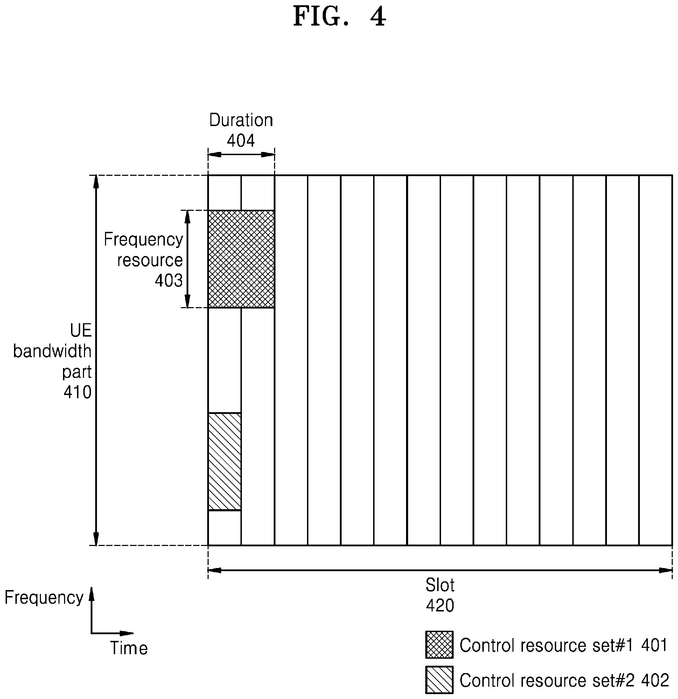

FIG. 4 illustrates an example of a CORESET through which a downlink control channel is transmitted in a 5G wireless communication system.

Referring to FIG. 4, an example in which a UE BWP 410 is configured in a frequency axis and two CORESETs (a CORESET#1 401 and a CORESET#2 402) in one slot 420 are configured in a time axis is illustrated. The CORESETs#1 and #2 401 and 402 may be configured on a specific frequency resource 403 within the entire UE BWP 410 on the frequency axis. Also, the CORESETs#1 and #2 401 and 402 may be configured with one or a plurality of OFDM symbols on the time axis, which may be defined by a CORESET duration 404. With reference to the example illustrated in FIG. 4, the CORESET#1 401 is configured to have a CORESET duration of two symbols, and the CORESET#2 402 is configured to have a CORESET duration of one symbol.

In the 5G wireless communication system described above, a CORESET may be configured to a UE by a base station through higher layer signaling (for example, system information, MIB, or RRC signaling). The configuring of the CORESET to the UE indicates providing information, such as a CORESET identity, a frequency location of the CORESET, and a symbol length of the CORESET. For example, configuration information of the CORESET may include following pieces of information.

[Table 8]

```
ControlResourceSet ::=                    SEQUENCE {
    -- Corresponds to L1 parameter 'CORESET-ID'
    controlResourceSetId              ControlResourceSetId,
    (CORESET Identity)
    frequencyDomainResources           BIT STRING (SIZE (45)),
    (Frequency Axis Resource Assignment Information)
    duration                           INTEGER (1..maxCoReSetDuration),
    (Time Axis Resource Assignment Information)
    cce-REG-MappingType                CHOICE {
    (CCE-to-REG Mapping Type)
        interleaved                    SEQUENCE {
            reg-BundleSize                 ENUMERATED {n2, n3, n6},
            (REG Bundle Size)
            precoderGranularity                ENUMERATED {sameAsREG-bundle,
allContiguousRBs},
            interleaverSize                ENUMERATED {n2, n3, n6}
            (Interleaver Size)
            shiftIndex
    INTEGER(0..maxNrofPhysicalResourceBlocks-1)
    OPTIONAL
        (Interleaver Shift)
        },
    nonInterleaved                     NULL
    },
    tci-StatesPDCCH                    SEQUENCE(SIZE (1..maxNrofTCI-
StatesPDCCH)) OF TCI-StateId               OPTIONAL,
    (QCL Configuration Information)
    tci-PresentInDCI                   ENUMERATED {enabled}
                                       OPTIONAL,     -- Need S
}
```

In Table 8, tci-StatesPDCCH (simply referred to as a transmission configuration indication (TCI) state) configuration information may include information about an index or indices of one or multiple SS/PBCH blocks having a QCL relationship with a DMRS transmitted on a corresponding CORESET, or information about an index of a channel state information reference signal (CSI-RS).

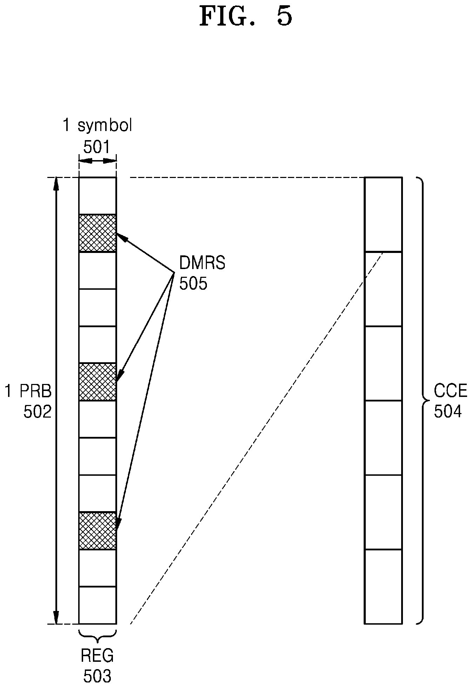

FIG. 5 is a diagram showing a structure of a downlink control channel of a 5G wireless communication system.

In other words, FIG. 5 is a diagram showing an example of a base unit of time and frequency resources configuring a downlink control channel, which may be used in the 5G wireless communication system.

Referring to FIG. 5, a base unit of time and frequency resources configuring a control channel may be called an REG 503, and the REG 503 may be defined by one OFDM symbol 501 on a time axis and one physical resource block (PRB) 502 on a frequency axis, that is, may be defined by, 12 subcarriers. A base station connects and attaches REGs 503 to each other to configure a downlink control channel allocation unit.

As shown in FIG. 5, when a base unit for allocation for the downlink control channel in the 5G wireless communication system is a control channel element (CCE) 504, one CCE 504 may be configured by a plurality of the REGs 503. For example, the REG 503 shown in FIG. 5 may be configured by 12 REs, and when one CCE 504 is configured by six REGs 503, the one CCE 504 may be configured by 72 REs. When a downlink CORESET is configured, the downlink CORESET may be configured by the plurality of CCEs 504, and a specific downlink control channel may be transmitted after being mapped to one or the plurality of CCEs 504, according to an aggregation level (AL) in the CORESET. The CCEs 504 in the CORESET are distinguished by numbers, and here, the numbers of CCEs 504 may be allocated according to a logical mapping scheme.

The base unit of the downlink control channel shown in FIG. 5, i.e., the REG 503, may include REs to which DCI is mapped and a region to which a DMRS 505 that is a reference signal for decoding the REs is mapped. As shown in FIG. 5, three DMRSs 505 may be transmitted in one REG 503. The number of CCEs required to transmit a PDCCH may be 1, 2, 4, 8, or 16 depending on an AL, and the different numbers of CCEs may be used to implement link adaptation of a downlink control channel. For example, when AL = L, one downlink control channel may be transmitted through L CCEs. A UE needs to detect a signal while information about a downlink control channel is unknown, and a search space indicating a group of CCEs is defined for blind decoding. The search space is a group of downlink control channel candidates including CCEs that are attempted to be decoded by the UE on a given AL, and the UE may have a plurality of search spaces because there are several ALs forming one group by using 1, 2, 4, 8, or 16 CCEs. A search space set may be defined as a group of search spaces in all configured ALs.

The search spaces may be classified into a common search space and a UE-specific search space. UEs of a certain group or all UEs may inquire into a common search space of a PDCCH to receive cell-common control information, such as a paging message or dynamic scheduling for system information. For example, PDSCH scheduling allocation information for transmission of an SIB including cell operator information or the like may be received by inquiring into the common search space of the PDCCH. The common search space may be defined as a group of pre-promised CCEs because the certain group of UEs or all UEs need to receive the PDCCH. Scheduling allocation information for a UE-specific PDSCH or PUSCH may be received by inquiring into a UE-specific search space of the PDCCH. The UE-specific search space may be UE-specifically defined by a function of an identity of a UE and various system parameters.

In the 5G wireless communication system, a parameter for a search space of the PDCCH may be configured to the UE by the base station via higher layer signaling (for example, SIB, MIB, or RRC signaling). For example, the base station may configure the UE with the number of PDCCH candidates in each of the L ALs, a monitoring cycle for the search space, a monitoring occasion of a symbol unit within a slot for the search space, a search space type (common search space or UE-specific search space), a combination of a DCI format and RNTI to be monitored in the search space, and a CORESET index for monitoring the search space. For example, the parameter for the search space of the PDCCH may include following pieces of information.

[Table 9]

```
SearchSpace ::=                           SEQUENCE {
    -- Identity of the search space. SearchSpaceId = 0 identifies the SearchSpace configured
via PBCH (MIB) or ServingCellConfigCommon.
    searchSpaceId                         SearchSpaceId,
    (Search Space Identity)
    controlResourceSetId                  ControlResourceSetId,
    (CORESET Identity)
    monitoringSlotPeriodicityAndOffset    CHOICE {
    (Monitoring Slot Level Periodicity)
        sl1                               NULL,
        sl2                               INTEGER (0..1),
        sl4                               INTEGER (0..3),
        sl5                               INTEGER (0..4),
        sl8                               INTEGER (0..7),
        sl10                              INTEGER (0..9),
        sl16                              INTEGER (0..15),
```

```
        sl20                              INTEGER (0..19)

    }
                                OPTIONAL,
    duration (Monitoring Duration)              INTEGER (2..2559)
    monitoringSymbolsWithinSlot            BIT STRING (SIZE (14))
                            OPTIONAL,
(Monitoring Symbol in Slot)
    nrofCandidates                  SEQUENCE {
(Number of PDCCH Candidate Groups per Aggregation Level)
        aggregationLevel1             ENUMERATED {n0, n1, n2, n3, n4, n5, n6, n8},
        aggregationLevel2             ENUMERATED {n0, n1, n2, n3, n4, n5, n6, n8},
        aggregationLevel4             ENUMERATED {n0, n1, n2, n3, n4, n5, n6, n8},
        aggregationLevel8             ENUMERATED {n0, n1, n2, n3, n4, n5, n6, n8},
        aggregationLevel16              ENUMERATED {n0, n1, n2, n3, n4, n5, n6,
n8}
    },
    searchSpaceType                 CHOICE {
(Search Space Type)
        -- Configures this search space as common search space (CSS) and DCI formats to
monitor.
        common                  SEQUENCE {
(Common Search Space)
        }
        ue-Specific                 SEQUENCE {
(UE-specific Search Space)
            -- Indicates whether the UE monitors in this USS for DCI formats 0-0 and 1-0 or for
formats 0-1 and 1-1.
            formats                     ENUMERATED {formats0-0-And-1-0,
formats0-1-And-1-1},
            ...
        }
```

The base station may configure the UE with one or a plurality of search space sets, according to configuration information. According to an embodiment, the base station may configure the UE with a search space set #1 and a search space set #2, configure a DCI format A scrambled with X-RNTI in the search space set #1 to be monitored in the common search space, and configure a DCI format B scrambled with Y-RNTI in the search space set #2 to be monitored in the UE-specific search space.

According to the configuration information, there may be one or a plurality of search space sets in the common search space or the UE-specific search space. For example, a search space set #1 and a search space set #2 may be configured as the common search space, and a search space set #3 and a search space set #4 may be configured as the UE-specific search space.

In the common search space, combinations of a DCI format and RNTI, as below, may be monitored. However, these are only examples and the combinations of the DCI format and the RNTI in the common search space are not limited thereto.

- DCI format 0_0/1_0 with CRC scrambled by C-RNTI, CS-RNTI, MCS-C-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, combinations of a DCI format and RNTI below may be monitored. However, there are only examples and the combinations of the DCI format and the RNTI in the UE-specific search space are not limited thereto.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and usages.

Cell RNTI (C-RNTI): For scheduling UE-specific PDSCH
Modulation coding scheme C-RNTI (MCS-C-RNTI): For scheduling UE-specific PDSCH
Temporary Cell RNTI (TC-RNTI): For scheduling UE-specific PDSCH
Configured Scheduling RNTI (CS-RNTI): For scheduling quasi-statically configured UE-specific PDSCH
Random Access RNTI (RA-RNTI): For scheduling PDSCH during random access
Paging RNTI (P-RNTI): For scheduling PDSCH on which paging is transmitted
System Information RNTI (SI-RNTI): For scheduling PDSCH on which system information is transmitted
Interruption RNTI (INT-RNTI): For notifying about puncturing of PDSCH
Transmit Power Control for PUSCH RNTI (TPC-PUSCH-RNTI): For indicating power control command for PUSCH
Transmit Power Control for PUCCH RNTI (TPC-PUCCH-RNTI): For indicating power control command for PUCCH
Transmit Power Control for SRS RNTI (TPC-SRS-RNTI): For indicating power control command for SRS

The DCI formats specified above may follow definitions below.

[Table 10]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G wireless communication system, a CORESET p and a search space of an AL L in a search space set s may be represented as an equation below.

[Equation 1]

$$L \cdot \left\{ \left( Y_{p,n_{sf}^{\mu}} + \left\lfloor \frac{m_{s,n_{CI}} \cdot N_{\mathrm{CCE},p}}{L \cdot M_{p,s,\max}^{(L)}} \right\rfloor + n_{CI} \right) \bmod \left\lfloor N_{\mathrm{CCE},p}/L \right\rfloor \right\} + i$$

- L: AL

- $n_{CI}$: Carrier Index

- $N_{\mathrm{CCE,p}}$: Total Number of CCEs present within CORESET p

- $n^{\mu}_{s,f}$: Slot Index

- $M^{(L)}_{p,s,max}$: Number of PDCCH Candidates of AL L

- $m_{snCI} = 0, ..., M^{(L)}_{p,s,max} -1$: Index of PDCCH candidate of AL L

- i = 0, ..., L-1

$$Y_{p,n_{sf}^{\mu}} = \left( A_p \cdot Y_{p,n_{sf}^{\mu}-1} \right) \bmod D \ , \quad Y_{p,-1} = n_{\mathrm{RNTI}} \neq 0 \ , \quad A_0 = 39827 \ ,$$

$A_1 = 39829$ , $A_2 = 39839$ , $D = 65537$

- $n_{\mathrm{RNTI}}$: UE Identifier

A value of $Y\_(p,n^{\mu}_{s,f})$ may correspond to 0 in the common search space.

The value of $Y\_(p,n^{\mu}_{s,f})$ may correspond to a value changing according to the UE identity (C-RNTI or ID configured to the UE by the base station) and a time index, in the UE-specific search space.

[Regarding Uplink-Downlink Configuration]

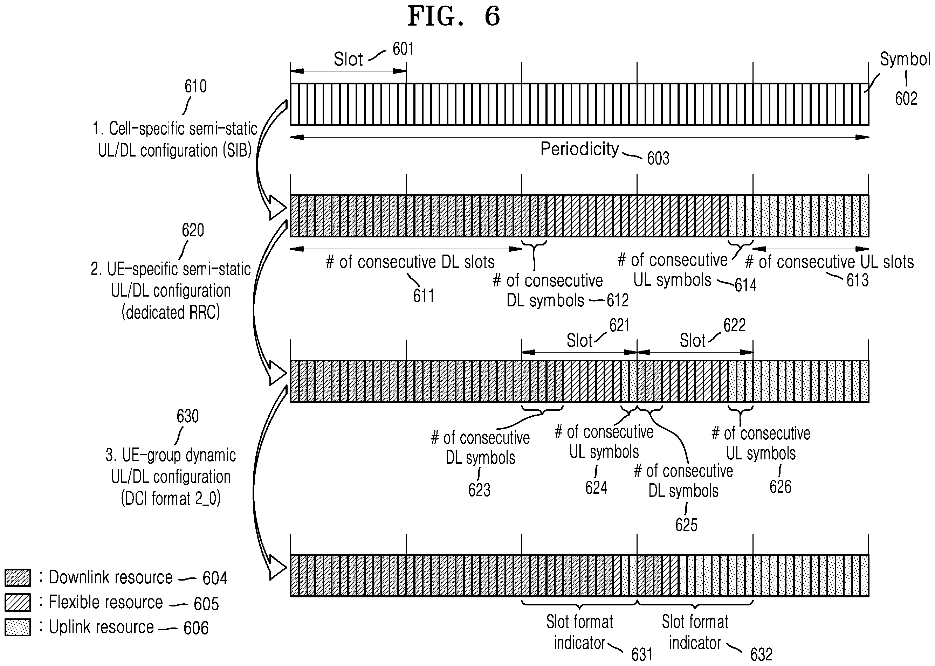

FIG. 6 is a diagram showing an example of an uplink-downlink configuration considered in a 5G communication system, according to an embodiment of the present disclosure.

Referring to FIG. 6, a slot 601 may include 14 symbols 602. In the 5G communication system, an uplink-downlink configuration of a symbol/slot may be configured in 3 stages. First, an uplink/downlink of a symbol/slot may be semi-statically configured through cell-specific configuration information 610 through system information in a symbol unit. In particular, cell-specific uplink-downlink configuration information through system information may include uplink-downlink pattern information and base subcarrier information. The uplink-downlink pattern information may indicate periodicity 603, the number 611 of consecutive downlink slots from a starting point of each pattern, the number 612 of symbols of a following slot, the number 613 of consecutive uplink slots from an end of a pattern, and the number 614 of symbols of a following slot. Here, a slot and a symbol that are not indicated as an uplink slot/symbol 606 or a downlink slot/symbol 604 may be determined to be a flexible slot/symbol 605.

Second, through user-specific configuration information 620 via dedicated higher layer signaling, flexible slots or slots 621 and 622 including flexible symbols may be respectively indicated as the numbers 623 and 625 of consecutive downlink symbols from a start symbol of a slot and the numbers 624 and 626 of consecutive uplink symbols from an end of the slot, or as the entire downlink of the slot or the entire uplink of the slot.

In addition, finally, in order to dynamically change downlink signal transmission and uplink signal transmission intervals, symbols indicated as flexible symbols in each slot (i.e., symbols not indicated as downlink and uplink) may each be indicated as a downlink symbol, an uplink symbol, or a flexible symbol, through a slot format indicator (SFI) 631 or 632 included in a downlink control channel 630. A slot format indicator may be selected as one index from a table in which an uplink-downlink configuration of 14 symbols in one slot is pre-configured as in Table 11 below.

[Table 11]

| Format | Symbol number In a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | u | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |

(continued)

| Format | Symbol number In a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | U | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines the slot format for the slot based on *TDD-UL-DL-ConfigurationCommon,* or *TDD-UL-DL-ConfigDedicated* and, if any, on detected DCI formats | | | | | | | | | | | | | |

[QCL, TCI State]

In a wireless communication system, one or more different antenna ports (may be replaced by one or more channels, signals, or combinations thereof, but for convenience of description, are integrally referred to as the different antenna ports) may be associated with each other through a QCL configuration as Table 12 below. A TCI state is for notifying about a QCL relationship between a PDCCH (or PDCCH DMRS) and another RS or channel. When a reference antenna port A (reference RS #A) and another target antenna port B (target RS #B) are QCLed to each other, the UE is allowed to apply all or some of large-scale channel parameters estimated in the antenna port A to perform a channel measurement in the antenna port B. A QCL may require different parameters to be associated according to situations including 1) time tracking affected by average delay and delay spread, 2) frequency tracking affected by a Doppler shift and Doppler spread, 3) radio resource management (RRM) affected by an average gain, and 4) beam management (BM) affected by a spatial parameter. Accordingly, NR supports four types of QCL relationships shown in Table 12 below.

[Table 12]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

A spatial RX parameter may be a generic term for some or all of various parameters including an angle of arrival (AoA), a power angular spectrum (PAS) of AoA, an angle of departure (AoD), a PAS of AoD, a transmit/receive channel correlation, transmit/receive beamforming, and a spatial channel correlation.

The QCL relationship may be configured to the UE through an RRC parameter TCI-State and QCL-Info as shown in Table 13 below. Referring to Table 13, the base station may configure the UE with at least one TCI state to notify the UE about a maximum of two QCL relationships (qcl-Type1 and qcl-Type2) regarding an RS referring to ID of the TCI state, that is, a target RS. Each of pieces of QCL information (QCL-Info) included in the TCI state includes a serving cell index and a BWP index of a reference RS indicated by a corresponding piece of QCL information, a type and ID of the reference RS, and a QCL type as shown in Table 13 above.

[Table 13]

```
TCI-State ::=                       SEQUENCE {
    tci-StateId                     TCI-StateId,
    (ID of corresponding TCI State)
    qcl-Type1                       QCL-Info,
    (QCL Information of First Reference RS of RS (Target RS) referring to corresponding TCI State
ID)
    qcl-Type2                       QCL-Info          OPTIONAL,    -- Need R


    (QCL Information of Second Reference RS of RS (Target RS) referring to corresponding TCI
State ID)
    ...
}


QCL-Info ::=                        SEQUENCE {
    cell                            ServCellIndex          OPTIONAL,    -- Need R
    (Serving Cell Index of Reference RS indicated by corresponding QCL Information)
    bwp-Id                          BWP-Id                 OPTIONAL, -- Cond CSI-RS-
Indicated
    (BWP Index of Reference RS indicated by corresponding QCL Information)
    referenceSignal                 CHOICE {
        csi-rs                      NZP-CSI-RS-ResourceId,
        ssb                         SSB-Index
        (One of CSI-RS ID or SSB ID indicated by corresponding QCL Information)
    },
    qcl-Type                        ENUMERATED {typeA, typeB, typeC, typeD},
    ...
}
```

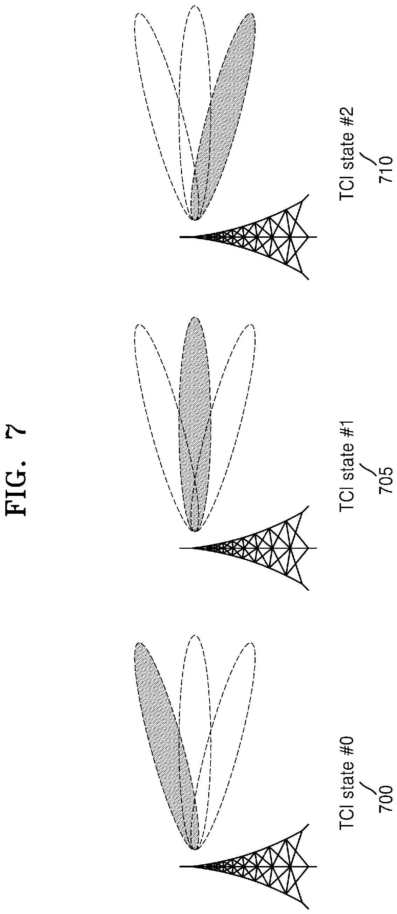

FIG. 7 is a diagram showing an example of base station beam allocation according to a TCI state configuration. Referring to FIG. 7, a base station may transmit, to a UE, pieces of information regarding N different beams through N different TCI states. For example, as illustrated in FIG. 7, when N is 3, the base station may allow a qcl-Type 2 parameter included in each of three TCI states 700, 705, and 710 to be associated with a CSI-RS or SSB corresponding to different beams and to be configured to be of QCL type D, so as to notify that antenna ports referring to the different TCI states 700, 705, and 710 are associated with different spatial Rx parameters, that is, different beams.

Tables 14-1 through 14-5 indicate valid TCI state configurations according to target antenna port types.

Table 14-1 indicates valid TCI state configurations when a target antenna port is CSI-RS for tracking (TRS). The TRS denotes, from among CSI-RSs, a non-zero power (NZP) CSI-RS in which a repetition parameter is not configured and trs-Info is configured to be true. A configuration 3 in Table 14-1 may be used for aperiodic TRS.

[Table 14-1] Valid TCI state configuration when target antenna port is TRS.

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 14-2 indicates valid TCI state configurations when a target antenna port is CSI-RS for CSI. The CSI-RS for CSI denotes, from among CSI-RSs, an NZP CSI-RS in which a parameter indicating repetition (for example, a repetition parameter) is not configured and trs-Info is also not configured to be true.

[Table 14-2] Valid TCI state configuration when target antenna port is CSI-RS for CSI

| Valid TCI state Configuration | DL RS 1 | qcl-Type1 | DL RS2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 14-3 indicates valid TCI state configurations when a target antenna port is CSI-RS for BM (identical to CSI-RS for L1 RSRP reporting). The CSI-RS for BM denotes, from among CSI-RSs, an NZP CSI-RS in which a repetition parameter is configured to have a value of on or off, and trs-Info is not configured to be true.

[Table 14-3] Valid TCI state configuration when a target antenna port is CSI-RS for BM (for L1 RSRP reporting).

| Valid TCI state Configuration | DL RS 1 | qcl-Typel | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 14-4 indicates valid TCI state configurations when a target antenna port is PDCCH DMRS.

[Table 14-4] Valid TCI state configuration when target antenna port is PDCCH DMRS

| Valid TCI state Configuration | DL RS 1 | qcl-Type1 | DL RS 2 (if configured) | qcl-Type 2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 14-5 indicates valid TCI state configurations when a target antenna port is PDSCH DMRS.

[Table 14-5] Valid TCI state configuration when target antenna port is PDSCH DMRS

| Valid TCI state Configuration | DL RS 1 | qcl-Type1 | DL RS 2 (if configured) | gcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

A representative QCL configuration method by Tables 14-1 through 14-5 includes managing a target antenna port and reference antenna port for each stage by configuring "SSB" -> "TRS" -> "CSI-RS for CSI, CSI-RS for BM, PDCCH DMRS, or PDSCH DMRS". Accordingly, it is possible to aid a reception operation of a UE by associating statistical characteristics measurable from an SSB and TRS with each antenna port.

[PDCCH: Regarding TCI State]

In detail, a combination of TCI states applicable to a PDCCH DMRS antenna port is as Table 15 below. A fourth row in Table 15 is a combination assumed by a UE before an RRC configuration, and a configuration after RRC is impossible.

[Table 15]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

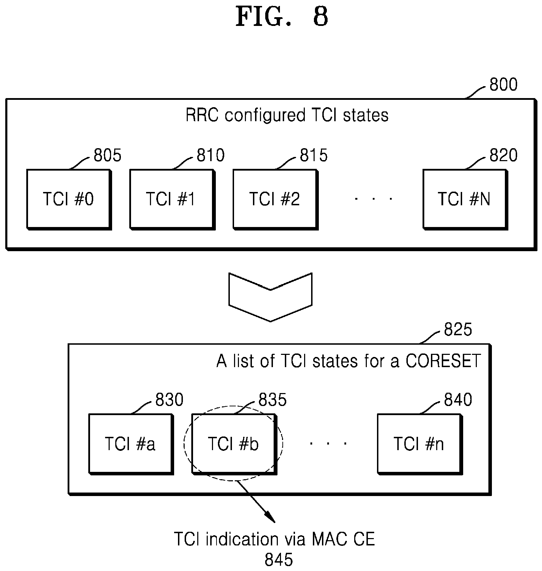

In NR, a hierarchical signaling method as shown in FIG. 8 is supported for dynamic allocation regarding PDCCH beams. Referring to FIG. 8, a base station may configure a UE with N TCI states 805, 810, 815, ..., 820 through RRC signaling 800, and may configure some of the TCI states 805 to 820 as TCI states 825 for a CORESET. Then, the base station may indicate one of TCI states 830 to 840 for the CORESET to the UE through MAC control element (CE) signaling as indicated by a reference numeral 845. Then, the UE receives a PDCCH, based on beam information included in a TCI state indicated by the MAC CE signaling.

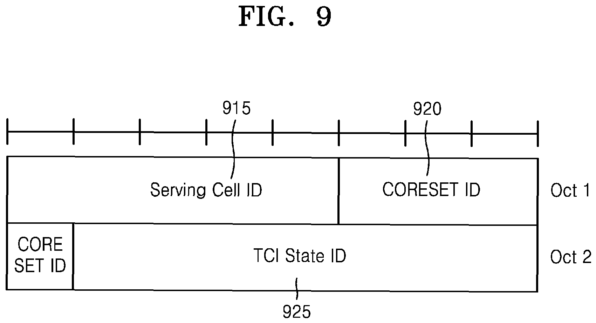

FIG. 9 is a diagram showing a structure of TCI indication media access control (MAC) control element (CE) signaling for PDCCH demodulation reference signal (DMRS). Referring to FIG. 9, TCI indication MAC CE signaling for the PDCCH DMRS includes 2 bytes (16 bits), and includes a serving cell ID 915 of 5 bits, a CORESET ID 920 of 4 bits, and a TCI state ID 925 of 7 bits.

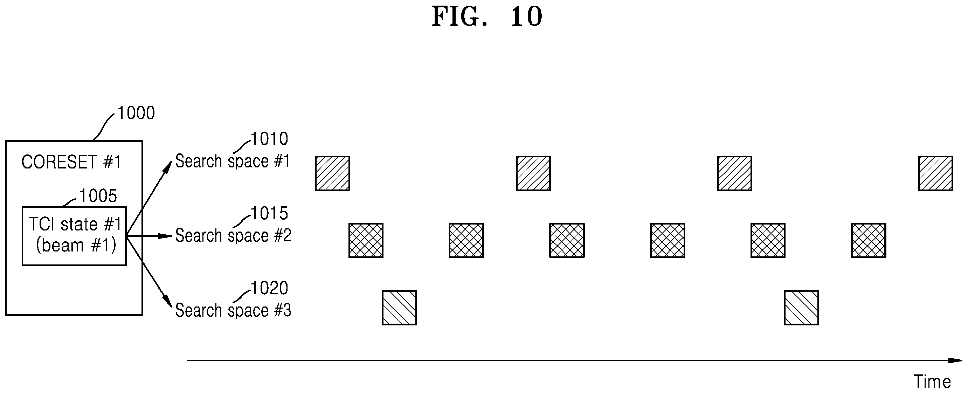

FIG. 10 is a diagram showing an example of a beam configuration considering a control resource set (CORESET) and a search space, according to the above description. Referring to FIG. 10, a base station may indicate one TCI state 1005 in a TCI state list included in a configuration of a CORESET 1000 via MAC CE signaling. Then, until another TCI state is indicated to the CORESET via another MAC CE signaling, a UE assumes that same QCL information (TCI state 1005, beam #1) is applied to one or more search spaces 1010, 1015, and 1020 connected to the CORESET. According to the PDCCH beam allocation method described above, it is difficult to indicate a beam change quicker than an MAC CE signaling delay, and in addition, a flexible PDCCH beam management may be difficult because a same beam is collectively applied to all CORESETs regardless of characteristics of a search space. Hereinafter, embodiments of the present disclosure provide a more flexible PDCCH beam configuration and management method. In describing embodiments of the present disclosure below, some distinguishable examples are provided for convenience of description, but the examples are not mutually exclusive, and may be appropriately combined with each other according to a situation for application.

The base station may configure, to the UE, one or a plurality of TCI states with respect to a specific CORESET, and may activate one of the configured TCI states through an MAC CE activation command. For example, {TCI state #0, TCI state #1, TCI state #2} is configured to CORESET #1 as TCI states, and the base station may transmit, to the UE, a command for activating assumption of the TCI state #0 being a TCI state for the CORESET #1 via an MAC CE. Based on the activation command regarding the TCI state, received via the MAC CE, the UE may correctly receive a DMRS in the CORESET #1, based on QCL information in the activated TCI state.

With respect to a CORESET (CORESET #0) configured to have an index of 0, when the UE has failed to receive an MAC CE activation command regarding a TCI state of the CORESET #0, it may be assumed that the UE is QCLed with an SS/PBCH block identified during an initial access process or a non-contention-based random access process that is not triggered by a PDCCH command, with respect to a DMRS transmitted in the CORESET #0.

With respect to a CORESET (CORESET #X) configured to have an index of a value other than zero, when a TCI state regarding the CORESET #X is failed to be configured to the UE, or when one or more TCI states are configured to the UE, but the UE has failed to receive an MAC CE activation command for activating one of the TCI states, it may be assumed that the UE is QCLed with an SS/PBCH block identified in an initial access process, with respect to a DMRS transmitted in the CORESET #X.

[PDCCH: Regarding QCL Prioritization Rule]

Hereinafter, a QCL prioritization operation for a PDCCH will be described in detail.

When a plurality of CORESETs operating in carrier aggregation within a cell or band and present within an activated BWP in a single or plurality of cells are the same in a specific PDCCH monitoring occasion or overlap in time while having same or different QCL-TypeD characteristics, a UE may select a specific CORESET according to the QCL prioritization operation and monitor CORESETs having the same QCL-TypeD characteristics as the specific CORESET. In other words, when the plurality of CORESETs overlap in time, only one QCL-TypeD characteristic may be received. Here, a criterion for determining a QCL priority may be as follows.

- Criterion 1. A CORESET connected to a common search space having a lowest index, within a cell corresponding to a lowest index from among cells including the common search space
- Criterion 2. A CORESET connected to a UE-specific search space having a lowest index, within a cell corresponding to a lowest index from among cells including the UE-specific search space

As described above, a following criterion may be applied when one criterion is not satisfied. For example, in a case where the CORESETs overlap in time in the specific PDCCH monitoring occasion, when all CORESETs are not connected to the common search space but are connected to the UE-specific search space, i.e., when Criterion 1 is not satisfied, the UE may omit Criterion 1 and apply Criterion 2.

When selecting a CORESET according to Criteria 1 and 2, the UE may additionally consider two matters below for QCL information configured in the CORESET. First, when CORESET 1 contains CSI-RS 1 as a reference signal having a relationship of QCL-TypeD, the reference signal having the relationship of QCL-TypeD with CSI-RS 1 is SSB 1, and a reference signal having the relationship of QCL-TypeD with another CORESET 2 is SSB 1, the UE may consider that the CORESET 1 and CORESET 2 have different QCL-TypeD characteristics. Second, when CORESET 1 contains CSI-RS 1 configured in a cell 1, as a reference signal having a relationship of QCL-TypeD, the reference signal having the relationship of QCL-TypeD with CSI-RS 1 is SSB 1, CORESET 2 contains CSI-RS 2 configured in a cell 2, as a reference signal having a relationship of QCL-TypeD, and the reference signal having the relationship of QCL-TypeD with CSI-RS 2 is also SSB 1, the UE may consider that the CORESET 1 and CORESET 2 have same QCL-TypeD characteristics.

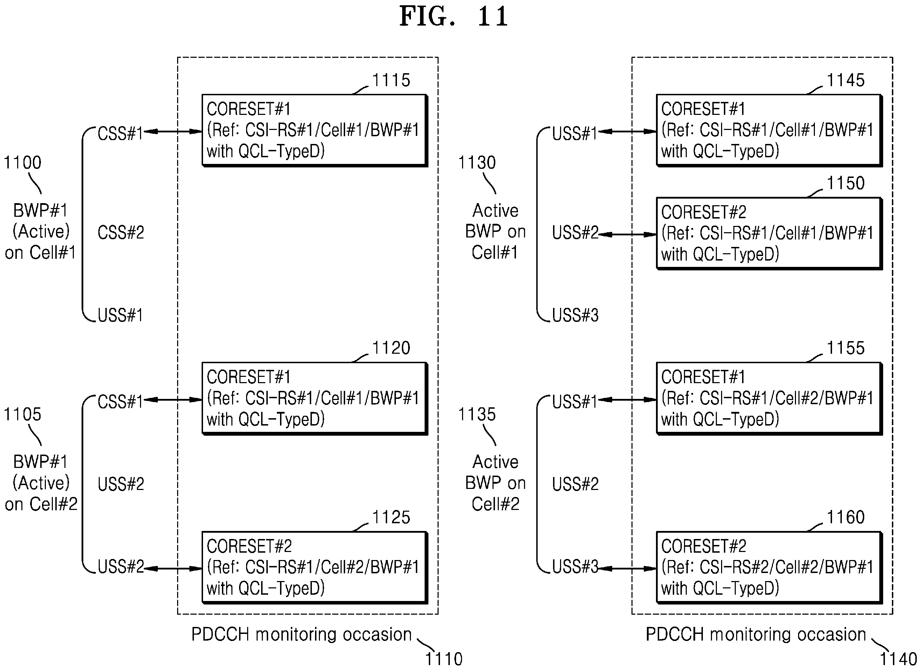

FIG. 11 is a diagram for describing a method of selecting a receivable CORESET, considering a priority when a terminal receives a downlink control channel, in a wireless communication system, according to an embodiment of the present disclosure. For example, the UE may be configured with reception of a plurality of CORESETs that overlap in time in a specific PDCCH monitoring occasion 1110, and such a plurality of CORESETs may be associated with a common search space (CSS) or a UE-specific search space (USS) for a plurality of cells. In the PDCCH monitoring occasion 1110, a CORESET#1 1115 connected to a common search space#1 may be present in a BWP#1 1100 of a cell#1, and a CORESET#1 1120 connected to a common search space#1 and a CORESET#2 1125 connected to a UE-specific search space#2 may be present in a BWP#1 1105 of a cell#2. The CORESET#1 1115 and CORESET#1 1120 may have a relationship of QCL-TypeD with a CSI-RS resource#1 configured in the BWP#1 1100 of the cell#1, and the CORESET#2 1125 may have a relationship of QCL-TypeD with a CSI-RS resource#1 configured in the BWP#1 1105 of the cell#2. Accordingly, when Criterion 1 is applied to the PDCCH monitoring occasion 1110, all other CORESETs having a reference signal of same QCL-TypeD as the CORESET#1 1115 may be received. Thus, the UE may receive the CORESET#1 1115 and CORESET#1 1120 in the PDCCH monitoring occasion 1110. In another example, the UE may be configured with reception for a plurality of CORESETs that overlap in time in a specific PDCCH monitoring occasion 1140, and the plurality of CORESETs may be associated with a common search space or UE-specific search space for a plurality of cells. In the PDCCH monitoring occasion 1140, a CORESET#1 1145 connected to a UE-specific search space#1 and a CORESET#2 1150 connected to a UE-specific search space#2 may be present in a BWP#1 1130 of a cell#1, and a CORESET#1 1155 connected to a UE-specific search space#1 and a CORESET#2 1160 connected to a UE-specific search space#3 may be present in a BWP#1 1135 of a cell#2. The CORESET#1 1145 and CORESET#2 1150 may have a relationship of QCL-TypeD with CSI-RS resource#1 configured in the BWP#1 1130 of the cell#1, the CORESET#1 1155 may have a relationship of QCL-TypeD with CSI-RS resource#1 configured in the BWP#1 1135 of the cell#2, and the CORESET#2 1160 may have a relationship of QCL-TypeD with CSI-RS resource#2 configured in the BWP#1 1135 of the cell#2. However, because there is no common search space when Criterion 1 is applied to the PDCCH monitoring occasion 1140, the UE may apply Criterion 2 that is a next criterion. When Criterion 2 is applied to the PDCCH monitoring occasion 1140, the UE may be able to receive all other CORESETs having a reference signal of same QCL-TypeD as the CORESET#1 1145. Accordingly, the UE may receive the CORESET#1 1145 and CORESET#2 1150 in the PDCCH monitoring occasion 1140.

[PDSCH: Regarding Frequency Resource Allocation]

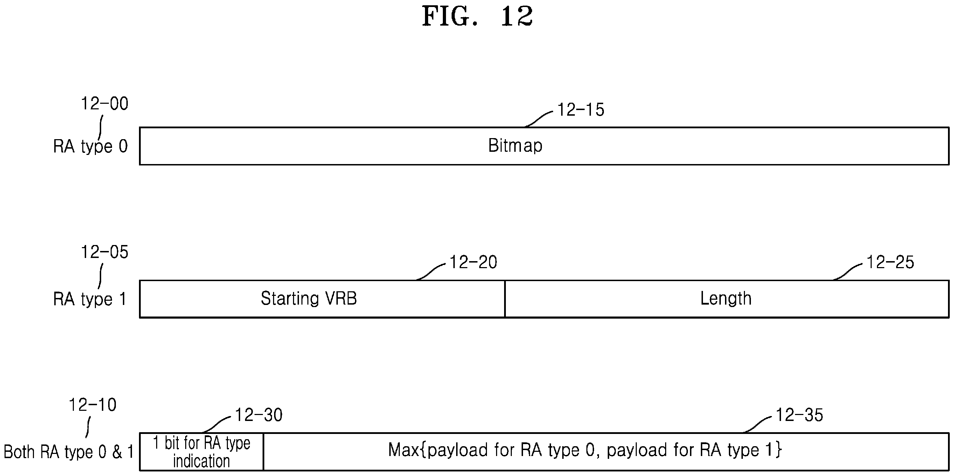

FIG. 12 is a diagram showing an example of a frequency axis resource allocation of a physical downlink shared channel (PDSCH) in a wireless communication system, according to an embodiment of the present disclosure.

FIG. 12 is a diagram showing three frequency axis resource allocation methods of a type 0 12-00, type 1 12-05, and a dynamic switch 12-10, which are configurable via a higher layer in an NR wireless communication system.

Referring to FIG. 12, when a UE is configured to use only a resource type 0 (type 0 12-00) via higher layer signaling, a part of DCI allocating a PDSCH to the UE includes a bitmap consisting of $N_{RBG}$ bits. A condition therefor will be described again below. Here, $N_{RBG}$ denotes the number of resource block groups (RBGs) determined as Table 16 below according to a BWP size allocated by a BWP indicator and a higher layer parameter rbg-Size, and data is transmitted to an RBG indicated by 1 by the bitmap.

[Table 16]

| Bandwidth Part size | Configuration 1 | Configuration 2 |
| --- | --- | --- |
| 1 - 36 | 2 | 4 |
| 37 - 72 | 4 | 8 |
| 73 - 144 | 8 | 16 |
| 145 - 275 | 16 | 16 |

When the UE is configured to use only a resource type 1 (type 1 12-05) via higher layer signaling, the part of DCI allocating the PDSCH to the UE may include frequency axis resource allocation information consisting of $\left\lceil \log_2 (N_{RB}^{DL,BWP} (N_{RB}^{DL,BWP} +1)/2) \right\rceil$ bits. A condition therefor will be described again below. Accordingly, the base station may configure a starting virtual resource block (VRB) 12-20 and a length 12-25 of frequency axis resources allocated continuously therefrom.

When the UE is configured to use both the resource type 0 and the resource type 1 (dynamic switch 12-10) via higher layer signaling, the part of DCI allocating the PDSCH to the UE includes the frequency axis allocation information consisting of bits of a greater value 12-35 among a payload 12-15 for configuring the resource type 0 and a payload (the starting VRB 12-20 and the length 12-25) for configuring the resource type 1. A condition therefor will be described again below. At this time, one bit may be added to a front portion (most significant bit (MSB)) of the frequency axis resource allocation information in the DCI, and when a value of the corresponding bit is 0, the use of the resource type 0 may be indicated, and when the value of the corresponding bit is 1, the use of the resource type 1 may be indicated.

[PDSCH/PUSCH: Regarding Time Resource Allocation]

Hereinafter, a method of allocating a time domain resource for a data channel in a 5G wireless communication system will be described.

A base station may configure a UE with a table regarding time domain resource allocation information for a PDSCH and a PUSCH, via higher layer signaling (for example, RRC signaling). For the PDSCH, Table consisting of up to maxNrofDL-Allocations=16 entries may be configured, and for the PUSCH, Table consisting of up to maxNrofUL-Allocations=16 entries may be configured. The time domain resource allocation information may include, for example, a PDCCH-to-PDSCH slot timing (corresponds to a time interval in a slot unit between a time point when the PDCCH is received and a time point when the PDSCH scheduled by the received PDCCH is transmitted, indicated by K0), or a PDCCH-to-PUSCH slot timing (corresponds to a time interval in a slot unit between a time point when the PDCCH is received and a time point when the PUSCH scheduled by the received PDCCH is transmitted, indicated by K2), information about a location and length of a start symbol where the PDSCH or PUSCH is scheduled within a slot, and a mapping type of the PDCH or PUSCH. For example, pieces of information as in Table 17 and Table 18 may be notified from the base station to the UE.

[Table 17]

| ***PDSCH-TimeDomainResourceAllocationList* information element** |
|---|
| PDSCH-TimeDomainResourceAllocationList ::=   SEQUENCE (SIZE(1..maxNrofDL-Allocations)) OF PDSCH-TimeDomainResourceAllocation |
| PDSCH-TimeDomainResourceAllocation ::=    SEQUENCE { |
|    k0                            INTEGER(0..32) OPTIONAL,    -- Need S |
|     (PDCCH-to-PDSCH Timing, Slot Unit) |
| mappingType                         ENUMERATED {typeA, typeB}, |
|     (PDSCH Mapping Type) |
| startSymbolAndLength                 INTEGER (0..127) |
| (Start Symbol and Length of PDSCH) |
| } |

[Table 18]

| ***PUSCH-TimeDomainResourceAllocation* information element** |
|---|
| PUSCH-TimeDomainResourceAllocationList ::=    SEQUENCE (SIZE(1..maxNrofUL-Allocations)) OF PUSCH-TimeDomainResourceAllocation |
| PUSCH-TimeDomainResourceAllocation ::=    SEQUENCE { |
|    k2                            INTEGER(0..32)            OPTIONAL,    -- Need S |
|     (PDCCH-to-PUSCH Timing, Slot Unit) |
|    mappingType                        ENUMERATED {typeA, typeB}, |
|    (PUSCH Mapping Type) |
|    startSymbolAndLength                INTEGER (0..127) |
|    (Start Symbol and Length of PUSCH) |
| } |

The base station may notify the UE about one of entries in Table of the time domain resource allocation information, through L1 signaling (for example, DCI) (for example, may be indicated through a 'time domain resource allocation' field within DCI). The UE may obtain the time domain resource allocation information for the PDSCH or PUSCH, based on the DCI received from the base station.

Hereinafter, a method of allocating a frequency domain resource for a data channel in a 5G wireless communication system will be described.

In the 5G wireless communication system, two types, i.e., a resource allocation type 0 and a resource allocation type 1, are supported as a method of indicating frequency domain resource allocation information for a PDSCH and a PUSCH.

Resource Allocation Type 0

- RB allocation information may be notified from a base station to a UE in a form of a bitmap for a resource block group (RBG). Here, the RBG may consist of a set of consecutive virtual RBs (VRBs), and a size P of the RBG may be determined based on a value configured in a higher layer parameter rbg-Size and a size value of a bandwidth part defined in Table below.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- Total number of RBGs ($N_{RBG}$) of a bandwidth part i having a size of $N_{BWP,i}^{size}$ may be defined as follows.

■

$$N_{RBG} = \left\lceil \left( N_{BWP,i}^{size} + \left( N_{BWP,i}^{start} \bmod P \right) \right) / P \right\rceil,$$

where

♦ the size of the first RBG is $RBG_0^{size} = P - N_{BWP,i}^{start} \bmod P$,

♦ the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and P otherwise,

♦ the size of all other RBGs is P.

- Each bit of a bitmap having a $N_{RBG}$ bit size may correspond to the RBG. The RBGs may be allocated with indexes in an increasing order of a frequency from a lowest frequency of a bandwidth part. Regarding the $N_{RBG}$ RBGs within the bandwidth part, RBG#0 to RBG#($N_{RBG}$-1) may be mapped from a most significant bit (MSB) to a least significant bit (LSB) of an RBG bitmap. When a specific bit value in the bitmap is 1, the UE may determine that an RBG corresponding to the specific bit value is allocated, and when the specific bit value in the bitmap is 0, the UE may determine that an RBG corresponding to the specific bit value is not allocated.

Resource Allocation Type 1

- RB allocation information may be notified from the base station to the UE via information about a start location and length of consecutively allocated VRBs. Here, interleaving or non-interleaving may be additionally applied to the consecutively allocated VRBs. A resource allocation field of the resource allocation type 1 may include a resource indication value (RIV), and the RIV may include a starting point ($RB_{star}$) of a VRB and a length ($L_{RBs}$) of consecutively allocated RBs. In detail, the RIV within a bandwidth part having the size of $N_{BWP}^{size}$ may be defined as below.

■ if $(L_{RBs} - 1) \leq \left\lfloor N_{BWP}^{size} / 2 \right\rfloor$ then

♦

$$RIV = N_{BWP}^{size} (L_{RBs} - 1) + RB_{start}$$

■ else

♦

$$RIV = N_{BWP}^{size} (N_{BWP}^{size} - L_{RBs} + 1) + (N_{BWP}^{size} - 1 - RB_{start})$$

■ where $L_{RBs} \geq 1$ and shall not exceed $N_{BWP}^{size} - RB_{start}$.

The base station may configure the UE with a resource allocation type through higher layer signaling (for example, a higher layer parameter resourceAllocation may be configured to one of resourceAllocationType0, resourceAllocationType1, or dynamicSwitch). When the UE is configured with both resource allocation type 0 and 1 (or, equivalently, when the higher layer parameter resourceAllocation is configured to dynamicSwitch), the base station may indicate whether a bit corresponding to a most significant bit (MSB) of a field indicating resource allocation in a DCI format indicating scheduling is resource allocation type 0 or resource allocation type 1. Additionally, resource allocation information may be indicated through remaining bits excluding the bit corresponding to the MSB, based on the indicated resource allocation type, and the UE may interpret the resource allocation field information of the DCI field, based thereon. When the terminal is configured with one of the resource allocation type 0 or the resource allocation type 1 (or, equivalently, the higher layer parameter resourceAllocation is configured to one of resourceAllocationType0 or resourceAllocationType1), the resource allocation information may be indicated based on the resource allocation type for which the field indicating resource allocation in the DCI format indicating scheduling is configured, and the UE may interpret the resource allocation field information of the DCI field based thereon.

[PDSCH: TCI State Activation MAC-CE]

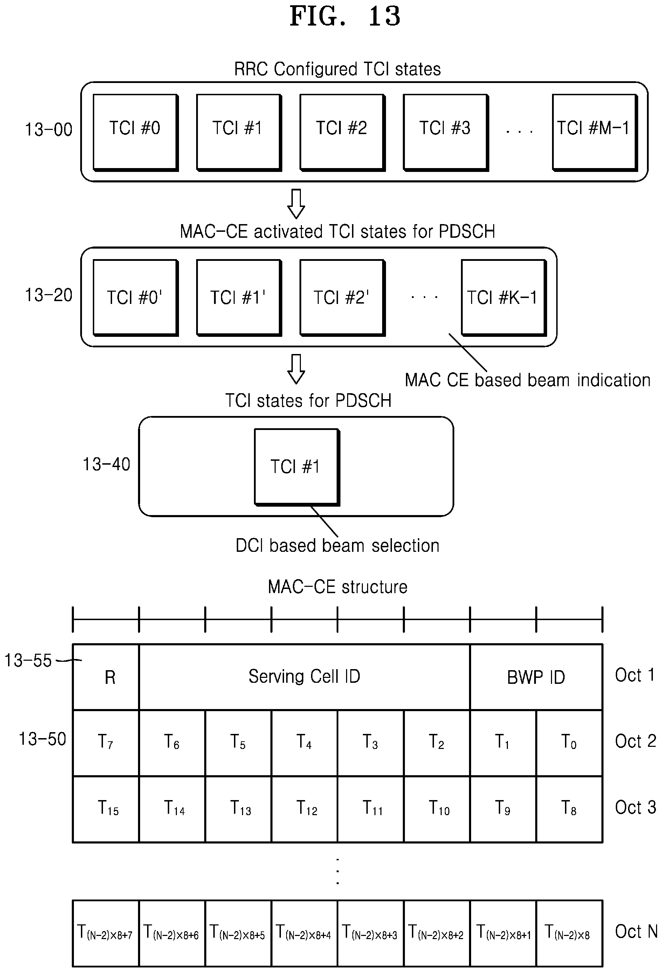

Next, a beam configuration method for a PDSCH will be described. FIG. 13 illustrates a process for beam configuration and activation of PDSCH. A list of TCI states for a PDSCH may be indicated through a higher layer list such as RRC (13-00). The list of TCI states may be indicated by, for example, tci-StatesToAddModList and/or tci-StatesToReleaseList in PDSCH-Config IE for each BWP. Next, a portion of the list of TCI states may be activated through MAC-CE (13-20). Then, some of TCI states activated through the MAC-CE may be selected through DCI (13-40). A maximum number of activated TCI states may be determined according to capability reported by the UE. (13-50) illustrates an example of an MAC-CE structure for PDSCH TCI state activation/deactivation.
A meaning of each field in the MAC CE and a value configurable in each field are as follows.

- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID: This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- $T_i$ (TCI state ID): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;
- CORESET Pool ID (13-55): This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[PUSCH: Regarding Transmission method] Next, a scheduling method of PUSCH transmission will be described. The PUSCH transmission may be dynamically scheduled by UL grant in DCI or may operate by configured grant Type 1 or Type 2. A dynamic scheduling indication regarding the PUSCH transmission is enabled by a DCI format 0_0 or 0_1.

The configured grant Type 1 PUSCH transmission may be quasi-statically configured through reception of configuredGrantConfig including rrc-ConfiguredUplinkGrant of Table 20 via higher signaling, without receiving the UL grant through the DCI. The configured grant Type 2 PUSCH transmission may be semi-persistently scheduled by the UL grant in the DCI after reception of configuredGrantConfig not including rrc-ConfiguredUplinkGrant of Table 20, through higher signaling. When the PUSCH transmission operates by configured grant, parameters applied to the PUSCH transmission may be applied through configuredGrantConfig of Table 20, received through higher signaling, except for dataScramblingIdentityPUSCH, txConfig, codebookSubset, maxRank, and scaling of UCI-OnPUSCH provided via pusch-Config of Table 21 that is higher signaling. When the UE is provided with transformPrecoder in the configuredGrantConfig of Table 20 through higher signaling, the UE applies tp-pi2BPSK in the pusch-Config of Table 21 with respect to the PUSCH transmission operating by the configured grant.

[Table 20]

```
ConfiguredGrantConfig ::=              SEQUENCE {
    frequencyHopping                       ENUMERATED {intraSlot, interSlot}
OPTIONAL,    -- Need S,
    cg-DMRS-Configuration                  DMRS-UplinkConfig,
    mcs-Table                              ENUMERATED {qam256, qam64LowSE}
OPTIONAL,    -- Need S
    mcs-TableTransformPrecoder             ENUMERATED {qam256, qam64LowSE}
OPTIONAL,    -- Need S
    uci-OnPUSCH                            SetupRelease { CG-UCI-OnPUSCH }
OPTIONAL,    -- Need M
    resourceAllocation                     ENUMERATED { resourceAllocationType0,
resourceAllocationType1, dynamicSwitch },
    rbg-Size                               ENUMERATED {config2}
OPTIONAL,    -- Need S
    powerControlLoopToUse                  ENUMERATED {n0, n1},
    p0-PUSCH-Alpha                         P0-PUSCH-AlphaSetId,
    transformPrecoder                      ENUMERATED {enabled, disabled}
OPTIONAL,    -- Need S
    nrofHARQ-Processes                     INTEGER(1..16),
    repK                                   ENUMERATED {n1, n2, n4, n8},
    repK-RV                                ENUMERATED {s1-0231, s2-0303, s3-0000}
OPTIONAL,    -- Need R
    periodicity                            ENUMERATED {
                                             sym2, sym7, sym1x14, sym2x14, sym4x14,
sym5x14, sym8x14, sym10x14, sym16x14, sym20x14,
                                             sym32x14, sym40x14, sym64x14,
sym80x14, sym128x14, sym160x14, sym256x14, sym320x14, sym512x14,
                                             sym640x14, sym1024x14, sym1280x14,
sym2560x14, sym5120x14,
                                             sym6, sym1x12, sym2x12, sym4x12,
sym5x12, sym8x12, sym10x12, sym16x12, sym20x12, sym32x12,
                                             sym40x12, sym64x12, sym80x12,
sym128x12, sym160x12, sym256x12, sym320x12, sym512x12, sym640x12,
                                             sym1280x12, sym2560x12
    },
    configuredGrantTimer                   INTEGER (1..64)
OPTIONAL,    -- Need R
    rrc-ConfiguredUplinkGrant              SEQUENCE {
        timeDomainOffset                       INTEGER (0..5119),
        timeDomainAllocation                   INTEGER  (0..15),
        frequencyDomainAllocation              BIT STRING (SIZE(18)),
        antennaPort                            INTEGER (0..31),
        dmrs-SeqInitialization                 INTEGER (0..1)
OPTIONAL,    -- Need R
        precodingAndNumberOfLayers             INTEGER (0..63),
        srs-ResourceIndicator                  INTEGER (0..15)
OPTIONAL,    -- Need R
        mcsAndTBS                              INTEGER (0..31),
        frequencyHoppingOffset                 INTEGER (1..
maxNrofPhysicalResourceBlocks-1)                   OPTIONAL,    -- Need R
        pathlossReferenceIndex                 INTEGER (0..maxNrofPUSCH-
PathlossReferenceRSs-1),
        ...
    }
OPTIONAL,    -- Need R
    ...
}
```

Next, a PUSCH transmission method will be described. A DMRS antenna port for PUSCH transmission is the same as an antenna port for SRS transmission. The PUSCH transmission may follow a codebook-based transmission method or a non-codebook-based transmission method, depending on whether a value of the pusch-Config of Table 21 that is higher signaling is codebook or nonCodebook.

As described above, the PUSCH transmission may be dynamically scheduled through the DCI format 0_0 or 0_1, and may be configured semi-statically by the configured grant. When scheduling regarding the PUSCH transmission is indicated to the UE through the DCI format 0_0, the UE may perform beam configuration for the PUSCH transmission by using pucch-spatialRelationInfoID corresponding to a UE-specific PUCCH resource corresponding to a minimum ID in an uplink BWP activated in a serving cell, and in this case, the PUSCH transmission is based on a single antenna port. The UE does not expect the scheduling regarding the PUSCH transmission through the DCI format 0_0, in a BWP in which a PUCCH resource including pucch-spatialRelationInfo is not configured. When the UE is not configured with txConfig in the pusch-Config of Table 21, the UE does not expect scheduling through the DCI format 0_1.

[Table 21]

```
PUSCH-Config ::=                          SEQUENCE {

    dataScramblingIdentityPUSCH           INTEGER (0..1023)
OPTIONAL,    -- Need S

    txConfig                              ENUMERATED {codebook, nonCodebook}
OPTIONAL,    -- Need S

    dmrs-UplinkForPUSCH-MappingTypeA      SetupRelease { DMRS-UplinkConfig }
OPTIONAL,    -- Need M

    dmrs-UplinkForPUSCH-MappingTypeB      SetupRelease { DMRS-UplinkConfig }
OPTIONAL,    -- Need M

    pusch-PowerControl                    PUSCH-PowerControl
OPTIONAL,    -- Need M

    frequencyHopping                      ENUMERATED {intraSlot, interSlot}
OPTIONAL,    -- Need S

    frequencyHoppingOffsetLists           SEQUENCE (SIZE (1..4)) OF INTEGER (1..
maxNrofPhysicalResourceBlocks-1)


OPTIONAL,    -- Need M

    resourceAllocation                    ENUMERATED { resourceAllocationType0,
resourceAllocationType1, dynamicSwitch},

    pusch-TimeDomainAllocationList        SetupRelease { PUSCH-
TimeDomainResourceAllocationList }            OPTIONAL,    -- Need M

    pusch-AggregationFactor               ENUMERATED { n2, n4, n8 }
OPTIONAL,    -- Need S

    mcs-Table                             ENUMERATED {qam256, qam64LowSE}
OPTIONAL,    -- Need S

    mcs-TableTransformPrecoder            ENUMERATED {qam256, qam64LowSE}
OPTIONAL,    -- Need S

    transformPrecoder                     ENUMERATED {enabled, disabled}
OPTIONAL,    -- Need S

    codebookSubset                        ENUMERATED
{fullyAndPartialAndNonCoherent, partialAndNonCoherent,nonCoherent}


OPTIONAL, -- Cond codebookBased

    maxRank                               INTEGER (1..4)
OPTIONAL, -- Cond codebookBased

    rbg-Size                              ENUMERATED { config2}
OPTIONAL, -- Need S

    uci-OnPUSCH                           SetupRelease { UCI-OnPUSCH}
OPTIONAL, -- Need M

    tp-pi2BPSK                            ENUMERATED {enabled}
OPTIONAL, -- Need S

    ...

}
```

Next, codebook-based PUSCH transmission will be described. The codebook-based PUSCH transmission may be dynamically scheduled through the DCI format 0_0 or 0_1, or may quasi-statically operate by the configured grant. When the codebook-based PUSCH is dynamically scheduled by the DCI format 0_1 or quasi-statically configured by the configured grant, the UE determines a precoder for the PUSCH transmission, based on an SRS resource indicator (SRI), a transmission precoding matrix indicator (TPMI), and a transmission rank (the number of PUSCH transmission layers).

Here, the SRI may be provided via a field SRS resource indicator in the DCI or via srs-Resource Indicator that is higher signaling. The UE is configured with at least one SRS resource, and may be configured up to two SRS resources, during the codebook-based PUSCH transmission. When the UE is provided with the SRI through the DCI, an SRS resource indicated by the SRI denotes an SRS resource corresponding to the SRI, from among SRS resources transmitted before a PDCCH including the SRI. Also, the TPMI and transmission rank may be provided via field precoding information and number of layers in the DCI or may be configured via precodingAndNumberOfLayers that is higher signaling. The TPMI is used to indicate a precoder applied to the PUSCH transmission. When the UE is configured with one SRS resource, the TPMI is used to indicate the precoder to be applied to the one configured SRS resource. When the UE is configured with a plurality of SRS resources, the TPMI is used to indicate the precoder to be applied to the SRS resource indicated through the SRI.

The precoder to be used for the PUSCH transmission is selected from an uplink codebook having the number of antenna ports equal to a value of nrofSRS-Ports in SRS-Config that is higher signaling. In the codebook-based PUSCH transmission, the UE determines a codebook subset, based on the TPMI and the codebookSubset in the pusch-Config that is higher signaling. The codebookSubset in the pusch-Config that is higher signaling may be configured to be one of fullyAndPartialAndNonCoherent, partialAndNonCoherent, and nonCoherent, based on UE capability reported by the UE to the base station. When the UE reported partialAndNonCoherent as the UE capability, the UE does not expect a value of codebookSubset that is higher signaling to be configured to fullyAndPartialAndNonCoherent. Also, when the UE reported nonCoherent as the UE capability, the UE does not expect the value of codebookSubset that is higher signaling to be configured to fullyAndPartialAndNonCoherent or partialAndNonCoherent. When nrofSRS-Ports in SRS-ResourceSet that is higher signaling indicates two SRS antenna ports, the UE does not expect the value of codebookSubset that is higher signaling to be configured to partialAndNonCoherent.

The UE may be configured with one SRS resource set in which a value of usage in SRS-ResourceSet that is higher signaling is configured to codebook, and one SRS resource in the SRS resource set may be indicated via SRI. When several SRS resources are configured in the SRS resource set in which the value of usage in SRS-ResourceSet that is higher signaling is configured to codebook, the UE expects a value of nrofSRS-Ports in SRS-Resource that is higher signaling to be the same for all SRS resources.

The UE transmits, to the base station, one or a plurality of SRS resources included in the SRS resource set in which the value of usage is configured to codebook according to higher signaling, and the base station selects one of the SRS resources transmitted by the UE and instructs the UE to perform the PUSCH transmission, by using transmit beam information of the selected SRS resource. Here, in the codebook-based PUSCH transmission, SRI is used as information for selecting an index of one SRS resource, and may be included in the DCI. In addition, the base station includes, to the DCI, information indicating the TPMI and rank to be used by the UE for the PUSCH transmission. The UE performs the PUSCH transmission by applying the precoder indicated by the rank and TPMI indicated based on a transmit beam of the SRS resource, by using the SRS resource indicated by the SRI.

Next, non-codebook-based PUSCH transmission will be described. The non-codebook-based PUSCH transmission may be dynamically scheduled through the DCI format 0_0 or 0_1, or may quasi-statically operate by the configured grant. When at least one SRS resource is configured in the SRS resource set in which a value of usage in SRS-ResourceSet that is higher signaling is configured to nonCodebook, the UE may receive scheduling of the non-codebook-based PUSCH transmission through the DCI format 0_1.

The UE may be configured with, through higher signaling, one non-zero power (NZP) CSI-RS resource connected to the SRS resource set in which the value of usage in SRS-ResourceSet is configured to nonCodebook. The UE may perform calculation regarding a precoder for SRS transmission through measurement on the NZP CSI-RS resource connected to the SRS resource set. When a difference between a last reception symbol of an aperiodic NZP CSI-RS resource connected to the SRS resource set and a first symbol of aperiodic SRS transmission is less than 42 symbols, the UE does not expect information regarding the precoder for SRS transmission to be updated.

When a value of resourceType in SRS-ResourceSet that is higher signaling is configured to be aperiodic, the connected NZP CSI-RS is indicated by an SRS request that is a field in the DCI format 0_1 or 1_1. Here, when the connected NZP CSI-RS resource is an aperiodic NZP CSI-RS resource and a value of SRS request that is the field in the DCI format 0_1 or 1_1 is not 00, it may be indicated that the NZP CSI-RS connected to the SRS resource set is present. In this case, corresponding DCI does not indicate cross carrier or cross BWP scheduling. Also, when the value of SRS request indicates the presence of NZP CSI-RS, the NZP CSI-RS is located at a slot on which PDCCH including an SRS request field is transmitted. Here, TCI states configured in a scheduled subcarrier are not configured to be QCL-TypeD.

When a periodic or semi-persistent SRS resource set is configured, the connected NZP CSI-RS may be indicated through associatedCSI-RS in the SRS-ResourceSet that is higher signaling. Regarding the non-codebook-based transmission, the UE does not expect spatialRelationInfo that is higher signaling for the SRS resource and associatedCSI-RS in SRS-ResourceSet that is higher signaling to be configured together.

When a plurality of SRS resources are configured, the UE may determine the precoder and a transmission rank to be applied to the PUSCH transmission, based on SRI indicated by the gNB. Here, the SRI may be indicated through a field SRS resource indicator in the DCI or configured through srs-ResourceIndicator that is higher signaling. Like the codebook-based PUSCH transmission, when the UE receives the SRI through the DCI, the SRS resource indicated by the SRI denotes an SRS resource corresponding to the SRI from among SRS resources transmitted prior to the PDCCH including the SRI. The UE may use one or a plurality of SRS resources for SRS transmission, and the maximum number of SRS resources capable of being simultaneously transmitted from a same symbol in one SRS resource set is determined by UE capability reported by the UE to the base station. Here, the SRS resources simultaneously transmitted by the UE occupy a same RB. The UE configures one SRS port for each SRS resource. Only one SRS resource set, in which the value of usage in SRS-ResourceSet that is higher signaling is configured to be nonCodebook, may be configured, and up to 4 SRS resources for the non-codebook-based PUSCH transmission may be configured.

The base station transmits, to the UE, one NZP-CSI-RS connected to an SRS resource set, and the UE calculates a precoder to be used to transmit one or a plurality of SRS resources in the SRS resource set, based on a result measured when receiving the NZP-CSI-RS. The UE applies the calculated precoder when transmitting, to the base station, one or plurality of SRS resources in the SRS resource set, in which the usage is configured to be nonCodebook, and the base station selects one or plurality of SRS resources from among the received one or plurality of SRS resources. Here, in the non-codebook-based PUSCH transmission, the SRI denotes an index capable of representing one SRS resource or a combination of a plurality of SRS resources, and the SRI is included in the DCI. At this time, the number of SRS resources indicated by the SRI transmitted by the base station may be the number of transmission layers of the PUSCH, and the UE transmits the PUSCH by applying, to each layer, the precoder applied for the SRS resource transmission.

[PUSCH: Preparation Procedure Time]

Next, a PUSCH preparation procedure time will be described. When the base station schedules the UE to transmit the PUSCH by using the DCI format 0_0 or DCI format 0_1, the UE may require the PUSCH preparation procedure time for transmitting the PUSCH by applying a transmission method (a transmission precoding method of an SRS resource, the number of transmission layers, and a spatial domain transmission filter) indicated via the DCI. In NR, the PUSCH preparation procedure time as been defined in consideration of the same. The PUSCH preparation procedure time of the UE may follow Equation 2 below.

$$T_{proc,2} = \max(( N_2 + d_{2,1} + d_2)( 2048 + 144 ) \kappa 2^{-\mu} T_c + T_{ext} + T_{switch}, d_{2,2} )$$

Each variable in $T_{proc,2}$ may have a meaning below.

- $N_2$: The number of symbols determined according to numerology $\mu$ and UE processing capability 1 or 2 according to capability of the UE. $N_2$ may have a value of Table 22 when UE processing capability 1 is reported according to a capability report of the UE, and may have a value of Table 23 when UE processing capability 2 is reported and availability of the UE processing capability 2 is configured via higher layer signaling.

[Table 22]

| $\mu$ | PUSCH preparation time $N_2$ [symbols] |
|---|---|
| 0 | 10 |
| 1 | 12 |
| 2 | 23 |
| 3 | 36 |

[Table 23]

| $\mu$ | PUSCH preparation time $N_2$ [symbols] |
|---|---|
| 0 | 5 |
| 1 | 5.5 |
| 2 | 11 for frequency range 1 |

- $d_{2,1}$: The number of symbols determined to be 0 when resource elements of a first OFDM symbol of PUSCH transmission are all DM-RS, and to be 1 otherwise.

- $\kappa$: 64

- $\mu$: One of $\mu_{DL}$ or $\mu_{UL}$, which increases $T_{proc,2}$ is used. $\mu_{DL}$ denotes numerology of a downlink on which a PDCCH including DCI for scheduling the PUSCH is transmitted, and $\mu_{UL}$ denotes numerology of an uplink on which the PUSCH is transmitted.

- $T_c$: $1/(\Delta f_{max} \cdot N_f)$, $\Delta f_{max}$=480 $\cdot$ $10^3$Hz, and $N_f$=4096.

- $d_{2,2}$: Follows a BWP switching time when the DCI for scheduling the PUSCH indicates BWP switching, and is 0 otherwise.

- $d_2$: When ODFM symbols of a PUSCH having a high priority index with a PUCCH having a low priority index overlap in time, a value of $d_2$ of the PUSCH having the high priority index is used. Otherwise, $d_2$ is 0.

- $T_{ext}$: When the UE uses a shared spectrum channel access scheme, the UE calculates $T_{ext}$ to apply the same to PUSCH preparation procedure time. Other words, $T_{ext}$ is assumed to be 0.

- $T_{switch}$: When an uplink switching interval is triggered, $T_{switch}$ is assumed to be a switching interval time. Otherwise, $T_{switch}$ is assumed to be 0.

The base station and the UE determine that the PUSCH preparation procedure time is not sufficient when a first symbol of the PUSCH starts before a first uplink symbol where CP starts after $T_{proc,2}$ from a last symbol of the PDCCH including the DCI for scheduling the PUSCH, considering time axis resource mapping information of the PUSCH scheduled via the DCI and a timing advance (TA) effect between the uplink and the downlink. Otherwise, the base station and the UE determine that the PUSCH preparation procedure time is sufficient. When the PUSCH preparation procedure time is sufficient, the UE transmits the PUSCH, and when the PUSCH preparation procedure time is not sufficient, the UE may ignore the DCI for scheduling the PUSCH.

Next, a PUSCH repetitive transmission will be described. When the PUSCH transmission has been scheduled to the UE by the DCI format 0_1 in the PDCCH including a CRC scrambled with C-RNTI, MCS-C-RNTI, or CS-RNTI, and the UE is configured with higher layer signaling pusch-AggregationFactor, same symbol allocation is applied to the number of consecutive slots equal to pusch-AggregationFactor, and the PUSCH transmission is limited to single rank transmission. For example, the UE needs to repeat a same TB on the number of consecutive slots equal to pusch-AggregationFactor, and apply the same slot allocation for each slot. Table 24 indicates a redundancy version applied to PUSCH repetitive transmission for each slot. When the PUSCH repetitive transmission is scheduled to the UE by the DCI format 0_1 for a plurality of slots, and at least one symbol from among the slots on which the PUSCH repetitive transmission is performed is indicated as a downlink symbol according to information of higher layer signaling tdd-UL-DL-ConfigurationCommon or tdd-UL-DL-ConfigurationDedicated, the UE does not perform the PUSCH transmission on a slot where the corresponding symbol is located.

[Table 24]

| $rv_{id}$ indicated by the DCI scheduling the PUSCH | $rv_{id}$ to be applied to $n^{th}$ transmission occasion | | | |
|---|---|---|---|---|
| | $n$ mod 4 = 0 | $n$ mod 4 = 1 | $n$ mod 4 = 2 | $n$ mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

[PUSCH: Regarding Repetitive Transmission]

Hereinafter, repetitive transmission of an uplink data channel in a 5G system will be described in detail. The 5G system supports, as a repetitive transmission method of the uplink data channel, two types, i.e., a PUSCH repetition type A and a PUSCH repetition type B. The UE may be configured with one of the PUSCH repetition type A and B via higher layer signaling.

**PUSCH Repetition Type A**

- As described above, a location of a start symbol and a symbol length of an uplink data channel may be determined via a time domain resource allocation method in one slot, and the base station may notify the UE about the number of repetitive transmissions via higher layer signaling (for example, RRC signaling) or L1 signaling (for example, DCI).

- The UE may repeatedly transmit a same uplink data channel in consecutive slots of a repetitive transmission interval identified based on a length of the uplink data channel configured based on a start symbol and the number of repetitive transmissions. At this time, when there is a slot configured as downlink by the base station to the UE or there is at least one symbol configured as downlink among symbols of the uplink data channel configured by the UE in the repetitive transmission interval, the UE omits uplink data channel transmission in the corresponding slot or symbol, but counts the number of repetitive transmissions of the uplink data channel.

**PUSCH Repetition Type B**

- As described above, the start symbol and length of the uplink data channel may be determined via the time domain resource allocation method in one slot, and the base station may notify the UE about the number of repetitive transmissions numberofrepetitions via higher signaling (for example, RRC signaling) or L1 signaling (for example, DCI).
- First, based on the start symbol and length of the configured uplink data channel, nominal repetition of the uplink data

$$K_s + \left\lfloor \frac{S + n \cdot L}{N_{symb}^{slot}} \right\rfloor$$

channel is determined as below. A slot on which n-th nominal repetition starts is provided by

$$\mathrm{mod}\left( S + n \cdot L, N_{symb}^{slot} \right)$$

and a symbol starting from the slot is provided by $\mathrm{mod}\left( S + n \cdot L, N_{symb}^{slot} \right)$. A slot on which the n-th nominal

$$K_s + \left\lfloor \frac{S + (n+1) \cdot L - 1}{N_{symb}^{slot}} \right\rfloor$$

repetition ends is provided by and a symbol ending at the slot is provided by

$$\mathrm{mod}\left( S + (n+1) \cdot L - 1, N_{symb}^{slot} \right)$$

. Here, n is 0 to numberofrepetitions-1, S denotes the start symbol of the configured uplink data channel and L denotes the symbol length of the configured uplink data channel.

$K_s$ denotes a slot on which PUSCH transmission starts, and $N_{symb}^{slot}$ denotes the number of symbols per slot.

- The UE may determine a specific OFDM symbol as an invalid symbol in following cases, for the PUSCH repetition type B.

    1. A symbol configured to be downlink by tdd-UL-DL-ConfigurationCommon or tdd-UL-DL-ConfigurationDedicated may be determined to be the invalid symbol for the PUSCH repetition type B.
    2. In unpaired spectrum (TDD spectrum), symbols indicated by ssb-PositionsInBurst in SIB1 or ssb-PositionsInBurst in ServingCellConfigCommon, which is a higher layer signaling, for SSB reception may be determined as invalid symbols for the PUSCH repetition type B.
    3. In unpaired spectrum (TDD spectrum), symbols indicated through pdcch-ConfigSIB1 in the MIB to transmit a CORESET associated with a Type0-PDCCH CSS set may be determined as invalid symbols for the PUSCH repetition type B.
    4. In unpaired spectrum (TDD spectrum), when an upper layer signaling numberOfInvalidSymbolsForDL-UL-Switching is configured, symbols of numberOfInvalidSymbolsForDL-UL-Switching from symbols configured as downlink by tdd-UL-DL-ConfigurationCommon or tdd-UL-DL-ConfigurationDedicated may be determined as invalid symbols.

- In addition, the invalid symbol may be configured by a higher layer parameter (for example, InvalidSymbolPattern). The higher layer parameter (for example, InvalidSymbolPattern) may provide a symbol level bitmap over one slot or two slots to configure the invalid symbol. In the bitmap, 1 denotes the invalid symbol. In addition, a cycle and pattern of the bitmap may be configured through a higher layer parameter (for example, periodicityAndPattern). When the higher layer parameter (for example, InvalidSymbolPattern) is configured and a InvalidSymbolPatternIndicator-ForDCIFormat0_1 or InvalidSymbolPatternIndicator-ForDCIFormat0_2 parameter indicates 1, the UE may apply an invalid symbol pattern, and when the InvalidSymbolPatternIndicator-ForDCIFormat0_1 or InvalidSymbolPatternIndicator-ForDCIFormat0_2 parameter indicates 0, the UE does not apply the invalid symbol pattern. When the higher layer parameter (for example, InvalidSymbolPattern) is configured and the InvalidSymbolPatternIndicator-ForDCIFormat0_1 or InvalidSymbolPatternIndicator-ForDCIFormat0_2 parameter is not configured, the UE applies the invalid symbol pattern.

After the invalid symbol is determined, the UE may consider symbols other than the invalid symbol as valid symbols, for each nominal repetition. When each nominal repetition includes at least one valid symbol, the nominal repetition may include one or more actual repetitions. Here, each actual repetition may include consecutive sets of valid symbols that may be used for the PUSCH repetition type B in one slot. When an OFDM symbol length of the nominal repetition is not 1 and a length of actual repetition is 1, the UE may ignore transmission for the actual repetition.

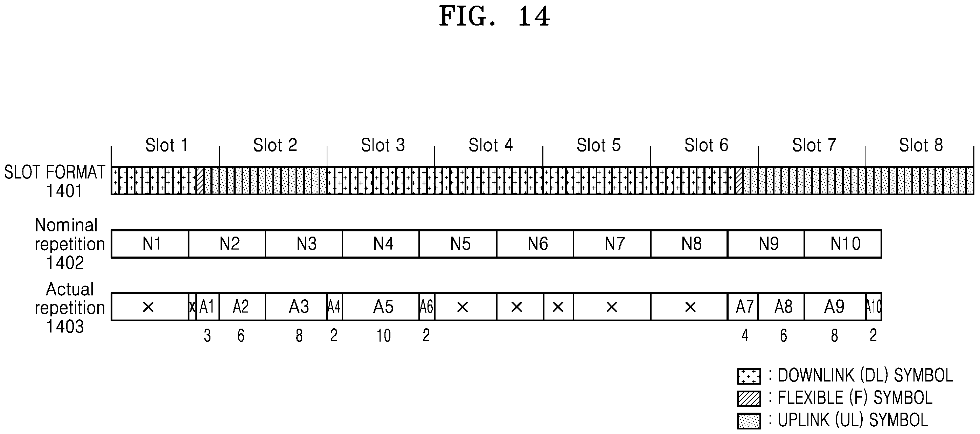

FIG. 14 illustrates an example of a PUSCH repetition type B according to an embodiment of the present disclosure.

In FIG. 14, an example is shown in which the UE is configured with 0 for a transmission start symbol S and 10 for a transmission symbol length L, for nominal repetition, and in the drawing, the nominal repetition may be represented by N1 to N10 (1402). Here, the UE may determine an actual repetition by determining an invalid symbol considering a slot format 1401, and in FIG. 14, the actual repetition may be represented by A1 to A10 (1403). Here, according to the invalid symbol and actual repetition determination method, the PUSCH repetition type B is not transmitted in a symbol in which a slot format is determined as downlink (DL), and when a slot boundary is present in the nominal repetition, the nominal repetition may be divided into two actual repetitions based on the slot boundary. For example, A1 indicating first actual repetition includes 3 OFDM symbols, and A2 that may be transmitted next may include 6 OFDM symbols.

Also, regarding PUSCH repetitive transmission, NR Release 16 may define following additional methods for configured grant-based PUSCH transmission and UL grant-based PUSCH transmission exceeding a slot boundary.

- Method 1 (mini-slot level repetition): At least two PUSCH repetitive transmissions in one slot or exceeding a boundary of consecutive slots are scheduled via one UL grant. Also, regarding Method 1, time domain resource allocation information in DCI indicates a resource of first repetitive transmission. Time domain resource information of remaining repetitive transmissions may be determined according to time domain resource information of the first repetitive transmission and an uplink or downlink direction determined for each symbol of each slot. Each repetitive transmission occupies consecutive symbols.

- Method 2 (multi-segment transmission): At least two PUSCH repetitive transmissions in consecutive slots are scheduled through one UL grant. Here, one transmission is allocated for each slot, and starting points or repeated lengths may be different for each transmission. In Method 2, the time domain resource allocation information in the DCI indicates the starting points and repeated lengths of all repetitive transmissions. Also, in a case where the repetitive transmission is performed in a single slot through Method 2, when there are several sets of consecutive uplink symbols in the slot, each repetitive transmission is performed for each set of uplink symbols. When there is only one group of consecutive uplink symbols in the slot, one PUSCH repetitive transmission is performed according to a method of NR Release 15.

- Method 3: At least two PUSCH repetitive transmissions in consecutive slots are scheduled through at least two UL grants. Here, one transmission is allocated for each slot, and an n-th UL grant may be received before PUSCH transmission scheduled by an n-1-th UL grant is over.

- Method 4: One or more PUSCH repetitive transmissions in a single slot or two or more PUSCH repetitive transmissions over a boundary of consecutive slots may be supported through one UL grant or one configured grant. The number of repetitions indicated by the base station to the UE is only a nominal value, and the number of PUSCH repetitive transmissions actually performed by the UE may be greater than the nominal number of repetitions. The time domain resource allocation information in the DCI or configured grant denotes a resource of a first repetitive transmission indicated by the base station. The time domain resource information of the remaining repetitive transmissions may be determined by referring to resource information of the first repetitive transmission and an uplink or downlink direction of symbols. When the time domain resource information of the repetitive transmission indicated by the base station spans a slot boundary or includes an uplink/downlink switching point, the repetitive transmission may be divided into a plurality of repetitive transmissions. Here, one repetitive transmission may be included for each uplink period in one slot.

[Rate Matching for uplink control information (UCI) Multiplexed with PUSCH]

Hereinafter, rate matching for UCI in the 5G system will be described in detail. First, before describing the rate matching for the UCI, a case where the UCI is multiplexed with PUSCH will be described. When PUCCH and PUSCH overlap and a timeline condition for UCI multiplexing is satisfied, the UE may multiplex HARQ-ACK and/or CSI information included in the PUCCH with the PUSCH according to the UCI included in the PUSCH and may not transmit the PUCCH. At this time, the timeline condition for the UCI multiplexing may refer to 3GPP standard TS 38.213 clause 9.2.5. As an example of the timeline condition for the UCI multiplexing, when one of PUCCH transmission or PUSCH transmission is scheduled via DCI, the UE may perform the UCI multiplexing only when a first symbol $S_0$ of an earliest PUCCH or PUSCH among PUCCHs and PUSCHs overlapping a slot satisfies following conditions:

- $S_0$ is not a symbol transmitted before a symbol including a CP starting after $T_{proc,1}^{mux}$ from a last symbol of the corresponding PDSCH. Here, $T_{proc,1}^{mux}$ is a maximum value among $\{T_{proc,1}^{mux,1}, \cdots, T_{proc,1}^{mux,i}, \cdots\}$ for an i-th PDSCH associated with HARQ-ACK transmitted on the PUCCH within an overlapping PUCCH and PUSCH group. $T_{proc,1}^{mux,i}$ is a processing procedure time for the i-th PDSCH and is defined as

$$T_{proc,1}^{mux,i} = (N_1 + d_{1,1}) \cdot (2048 + 144) \cdot \kappa \cdot 2^{-\mu} \cdot T_C$$

. Here, $d_{1,1}$ is a value determined for the i-th PDSCH with reference to 3GPP standard TS 38.214 clause 5.3, and $N_1$ is a PDSCH processing time value according to PDSCH processing capability. Also, $\mu$ is a smallest subcarrier configuration value among a PDCCH scheduling the i-th PDSCH, the i-th PDSCH, a PUCCH including HARQ-ACK for the i-th PDSCH, and all PUSCHs among the overlapping PUCCHs and PUSCH groups. $T_C$ is $1/(\Delta f_{max} \cdot N_f)$, $\Delta f_{max} = 480 \cdot 10^3 Hz$, and $N_f = 4096$, and $\kappa$ is 64.

This is a part of the timeline condition for the UCI multiplexing, and when all conditions are satisfied referring to 3GPP standard TS 38.213 clause 9.2.5, the UE may perform the UCI multiplexing on the PUSCH.

When the PUCCH and the PUSCH overlap, the timeline condition for the UCI multiplexing is satisfied, and the UE determines to multiplex the UCI included in the PUCCH with the PUSCH, the UE performs UCI rate matching for the UCI multiplexing. The UCI multiplexing is performed in an order of HARQ-ACK, configured grant uplink control information (CG-UCI), CSI part 1, and CSI part 2. The UE performs the rate matching considering a UCI multiplexing order. Accordingly, the UE calculates a coded modulation symbol per layer for HARQ-ACK and CG-UCI and calculates a coded modulation symbol per layer of CSI part 1 in consideration thereof. Then, the UE calculates a coded modulation symbol per layer of CSI part 2 in consideration of the coded modulation symbols per layer for HARQ-ACK, CG-UCI, and CSI part 1.

When performing the rate matching according to each UCI type, a method of calculating the number of coded modulation symbols per layer may vary depending on a type of repetitive transmission of the PUSCH with which the UCI is multiplexed and whether uplink data (uplink shared channel, hereinafter referred to as UL-SCH) is included. For example, when performing the rate matching for HARQ-ACK, a calculation formula for a coded modulation symbol per layer according to the PUSCH with which UCI is multiplexed is as following equations.

[Equation 3]

$$Q'_{ACK} = min\left\{\left\lceil\frac{(O_{ACK} + L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=l_0}^{N_{symb,all}^{PUSCH}-1} M_{sc}^{UCI}(l)\right\rceil\right\}$$

[Equation 4]

$$Q'_{ACK} = min\left\{\left\lceil\frac{(O_{ACK} + L_{ACK}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r}\right\rceil, \left\lceil\alpha \cdot \sum_{l=0}^{N_{symb,nominal}^{PUSCH}-1} M_{sc,nominal}^{UCI}(l)\right\rceil, \sum_{l=0}^{N_{symb,actual}^{PUSCH}-1} M_{sc,actual}^{UCI}(l)\right\}$$

[Equation 5]

$$Q'_{ACK} = min \left\{ \left\lceil \frac{(O_{ACK} + L_{ACK}) \cdot \beta_{offset}^{PUSCH}}{R \cdot Q_m} \right\rceil, \left\lceil \alpha \cdot \sum_{l=l_0}^{N_{symb,all}^{PUSCH}-1} M_{sc}^{UCI}(l) \right\rceil \right\}$$

[Equation 3] is a calculation formula for a coded modulation symbol per layer for HARQ-ACK multiplexed with a PUSCH other than the PUSCH repetition type B including a UL-SCH, and [Equation 4] is a calculation formula for a coded modulation symbol per layer for HARQ-ACK multiplexed with the PUSCH repetition type B including a UL-SCH. [Equation 5] is a calculation formula for a coded modulation symbol per layer for HARQ-ACK multiplexed with PUSCH that does not include a UL-SCH. In [Equation 3], $o_{ACK}$ is the number of HARQ-ACK bits. $L_{ACK}$ is the number of CRC bits for HARQ-ACK. $\beta_{offset}^{PUSCH}$ is a beta offset for HARQ-ACK and is the same as $\beta_{offset}^{HARQ-ACK}$. $C_{UL-SCH}$ is the number of code blocks of UL-SCH for PUSCH transmission, and $K_r$ is a code block size of an r-th code block. $M_{sc}^{UCI}(l)$ indicates the number of resource elements that may be used for UCI transmission in an $l$ symbol, and the number is determined based on presence of DMRS and PTRS in the $l$ symbol. When the $l$ symbol includes DMRS, $M_{sc}^{UCI}(l) = 0$. For the $l$ symbol that does not include DMRS, $M_{sc}^{UCI}(l) = M_{sc}^{PUSCH} - M_{sc}^{PT-RS}(l)$. $M_{sc}^{PUSCH}$ is the number of subcarriers for a bandwidth for which PUSCH transmission is scheduled, and $M_{sc}^{PT-RS}(l)$ is the number of subcarriers including PTRS within the $l$ symbol. $N_{symb,all}^{PUSCH}$ represents the total number of symbols of PUSCH. $\alpha$ is a higher layer parameter scaling, which indicates a proportion of resources for which UCI may be multiplexed among the total resources for PUSCH transmission. $l_0$ represents an index of a first symbol that does not include any DMRS after a first DMRS. In [Equation 4], $M_{sc,nominal}^{UCI}(l)$ represents the number of resource elements that may be used for UCI transmission for nominal repetition, and is 0 for a symbol including DMRS and $M_{sc,nominal}^{UCI}(l) = M_{sc}^{PUSCH} - M_{sc,nominal}^{PT-RS}(l)$ for a symbol not including DMRS, and $M_{sc,nominal}^{PT-RS}(l)$ is the number of subcarriers including PTRS in the $l$ symbol for PUSCH assuming nominal repetition. $N_{symb,nominal}^{PUSCH}$ represents the total number of symbols for nominal repetition of PUSCH. $M_{sc,actual}^{UCI}(l)$ represents the number of resource elements that may be used for UCI transmission for actual repetition, and is 0 for a symbol including DMRS and $M_{sc,actual}^{UCI}(l) = M_{sc}^{PUSCH} - M_{sc,actual}^{PT-RS}(l)$ for a symbol not including DMRS, and $M_{sc,actual}^{PT-RS}(l)$ is the number of subcarriers including PTRS in the $l$ symbol for the actual repetition of PUSCH. $N_{symb,actual}^{PUSCH}$ represents the total number of symbols for the actual repetition of PUSCH. In [Equation 5], R is a code rate of PUSCH and Qm is a modulation order of PUSCH.

The number of coded modulation symbols per layer on which the rate matching of CSI part 1 has been performed may be calculated similarly to HARQ-ACK, but the maximum number of allocable resources among the total resources is reduced to a value excluding the number of coded modulation symbols for HARQ-ACK/CG-UCI. A calculation formula for the coded modulation symbol per layer of CSI part 1 may be as in [Equation 6], [Equation 7], [Equation 8], and [Equation 9] depending on a repetitive transmission type of PUSCH and whether UL-SCH is included.

[Equation 6]

$$Q'_{CSI-1} = min \left\{ \left\lceil \frac{(O_{CSI-1} + L_{CSI-1}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} \right\}$$

[Equation 7]

$$Q'_{CSI-1} = min\left\{\left\lceil\frac{(O_{CSI-1} + L_{CSI-1}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r}\right\rceil, \left\lceil\alpha \cdot \sum_{l=0}^{N_{symb,nominal}^{PUSCH}-1} M_{sc,nominal}^{UCI}(l)\right\rceil - Q'_{ACK/CG-UCI},\right.$$
$$\left.\sum_{l=0}^{N_{symb,actual}^{PUSCH}-1} M_{sc,actual}^{UCI}(l) - Q'_{ACK/CG-UCI}\right\}$$

[Equation 8]

$$Q'_{CSI-1} = min\left\{\left\lceil\frac{(O_{CSI-1} + L_{CSI-1}) \cdot \beta_{offset}^{PUSCH}}{R \cdot Q_m}\right\rceil, \sum_{l=0}^{N_{symb,all}^{PUSCH}-1} M_{sc}^{UCI}(l) - Q'_{ACK}\right\}$$

[Equation 9]

$$Q'_{CSI-1} = \sum_{l=0}^{N_{symb,all}^{PUSCH}-1} M_{sc}^{UCI}(l) - Q'_{ACK}$$

[Equation 6] is a calculation formula for a coded modulation symbol per layer for CSI part 1 multiplexed with a PUSCH other than the PUSCH repetition type B including a UL-SCH, and [Equation 7] is a calculation formula for a coded modulation symbol per layer for CSI part 1 multiplexed with the PUSCH repetition type B including a UL-SCH. [Equation 8] is a calculation formula for a coded modulation symbol per layer for the multiplexed CSI part 1 when CSI part 1 and CSI part 2 are multiplexed with PUSCH that does not include a UL-SCH. [Equation 9] is a calculation formula for a coded modulation symbol per layer for the multiplexed CSI part 1 when CSI part 2 is not multiplexed with PUSCH that does not include a UL-SCH. In [Equation 6], $O_{CSI-1}$ and $L_{CSI-1}$ represent the number of bits for CSI part 1 and the number of CRC bits for CSI part 1, respectively. $\beta_{offset}^{PUSCH}$ is a beta offset for CSI part 1 and is the same as $\beta_{offset}^{CSI-part1}$. $Q'_{ACK/CG-UCI}$ is the number of coded modulation symbols per layer calculated for HARQ-ACK and/or CG-UCI. Remaining parameters are the same as those required to calculate the number of coded modulation symbols per layer for HARQ-ACK.

The number of coded modulation symbols per layer on which the rate matching for CSI part 2 has been performed may also be calculated similarly to CSI part 1, but the maximum number of allocable resources among the total resources is reduced to a value excluding the number of coded modulation symbols for HARQ-ACK/CG-UCI and the number of coded modulation symbols for CSI part 2. A calculation formula for the coded modulation symbol per layer of CSI part 1 may be as in [Equation 10], [Equation 11], and [Equation 12] depending on a repetitive transmission type of PUSCH and whether UL-SCH is included.

[Equation 10]

$$Q'_{CSI-2} = min\left\{\left\lceil\frac{(O_{CSI-2} + L_{CSI-2}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=0}^{N_{symb,all}^{PUSCH}-1} M_{sc}^{UCI}(l)\right\rceil - Q'_{ACK/CG-UCI} - Q'_{CSI-1}\right\}$$

[Equation 11]

$$Q'_{CSI-2} = min \left\{ \left\lceil \frac{(O_{CSI-2} + L_{CSI-2}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r} \right\rceil, \left\lceil \alpha \cdot \sum_{l=0}^{N_{symb,nominal}^{PUSCH}-1} M_{sc,nominal}^{UCI}(l) \right\rceil - Q'_{ACK/CG-UCI} \right.$$

$$\left. - Q'_{CSI-1}, \sum_{l=0}^{N_{symb,actual}^{PUSCH}-1} M_{sc,actual}^{UCI}(l) - Q'_{ACK/CG-UCI} - Q'_{CSI-1} \right\}$$

[Equation 12]

$$Q'_{CSI-2} = \sum_{l=0}^{N_{symb,all}^{PUSCH}-1} M_{sc}^{UCI}(l) - Q'_{ACK} - Q'_{CSI-1}$$

[Equation 10] is a calculation formula for a coded modulation symbol per layer for CSI part 2 multiplexed with a PUSCH other than the PUSCH repetition type B including a UL-SCH, and [Equation 11] is a calculation formula for a coded modulation symbol per layer for CSI part 2 multiplexed with the PUSCH repetition type B including a UL-SCH. [Equation 12] is a calculation formula for a coded modulation symbol per layer for CSI part 2 multiplexed with PUSCH that does not include a UL-SCH. In [Equation 10], $O_{CSI-2}$ and $L_{CSL-2}$ represent the number of bits for CSI part 2 and the number of CRC bits for CSI part 2, respectively. $\beta_{offset}^{PUSCH}$ is a beta offset for CSI part 2 and is the same as $\beta_{offset}^{CSI-part2}$. Remaining parameters are the same as those required to calculate the number of coded modulation symbols per layer for HARQ-ACK CSI part 1.

The number of coded modulation symbols per layer on which the rate matching of CG-UCI has been performed may also be calculated similarly to HARQ-ACK. A calculation formula for a coded modulation symbol per layer of CG-UCI multiplexed with PUSCH including UL-SCH is in [Equation 13].

[Equation 13]

$$Q'_{CG-UCI} = min \left\{ \left\lceil \frac{(O_{CG-UCI} + L_{CG-UCI}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

In [Equation 13], $O_{CG-UCI}$ and $L_{CG-UCI}$ represent the number of bits of CG-UCI and the number of CRC bits for CG-UCI, respectively. $\beta_{offset}^{PUSCH}$ is a beta offset for CG-UCI and is the same as $\beta_{offset}^{CG-UCI}$. Remaining parameters are the same as those required to calculate the number of coded modulation symbols per layer for HARQ-ACK.

When HARQ-ACK and CG-UCI are multiplexed with PUSCH including a UL-SCH, the number of coded modulation symbols per layer on which the rate matching of HARQ-ACK and CG-UCI has been performed may be calculated as in [Equation 14].

[Equation 14]

$$Q'_{CG-UCI} = min \left\{ \left\lceil \frac{(O_{ACK} + O_{CG-UCI} + L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

In [Equation 14], $\beta_{offset}^{PUSCH}$ is a beta offset for HARQ-ACK and is the same as $\beta_{offset}^{HARQ-ACK}$, and remaining parameters are the same as those required to calculate the number of coded modulation symbols per layer for HARQ-ACK.

[Regarding CSI measurement and Reporting]

Hereinafter, a method of measuring and reporting a channel state in a 5G communication system will be described in detail.

The CSI may include channel quality information (CQI), a precoding matrix indicator PMI, a CSI-RS resource indicator (CRI), a synchronization signal/physical broadcast channel (SS/PBCH) block resource indicator (SSBRI), a layer indicator (LI), a rank indicator (RI), and/or a L1-reference signal received power (L1-RSRP). The base station may control time and frequency resources for CSI measurement and reporting of the UE.

For the CSI measurement and reporting, the UE may receive, through higher layer signaling, at least one of configuration information *CSI-ReportConfig* for N ($\geq$ 1) CSI reports, configuration information *CSI-ResourceConfig* for M ($\geq$ 1) RS transmission resources, and trigger state lists CSI-*AperiodicTriggerStateList* and *CSI-SemiPersistentOnPUSCH-TriggerStateList.*

The configuration information for the CSI measurement and reporting may be more specifically as described in Tables 25 to 31 below.

[Table 25]

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

### *CSI-ReportConfig* information element

```
-- ASN1START
-- TAG-CSI-REPORTCONFIG-START

CSI-ReportConfig ::=                   SEQUENCE {
    reportConfigId                     CSI-ReportConfigId,
    carrier                            ServCellIndex                 OPTIONAL,   -- Need S
    resourcesForChannelMeasurement     CSI-ResourceConfigId,
    csi-IM-ResourcesForInterference    CSI-ResourceConfigId          OPTIONAL,   -- Need
R
    nzp-CSI-RS-ResourcesForInterference  CSI-ResourceConfigId        OPTIONAL,   -- Need
R
    reportConfigType                   CHOICE {
        periodic                       SEQUENCE {
            reportSlotConfig               CSI-ReportPeriodicityAndOffset,
            pucch-CSI-ResourceList         SEQUENCE (SIZE (1..maxNrofBWPs)) OF
PUCCH-CSI-Resource
        },
        semiPersistentOnPUCCH          SEQUENCE {
            reportSlotConfig               CSI-ReportPeriodicityAndOffset,
            pucch-CSI-ResourceList         SEQUENCE (SIZE (1..maxNrofBWPs)) OF
PUCCH-CSI-Resource
        },
        semiPersistentOnPUSCH          SEQUENCE {
            reportSlotConfig               ENUMERATED {sl5, sl10, sl20, sl40, sl80,
sl160, sl320},
            reportSlotOffsetList           SEQUENCE (SIZE (1.. maxNrofUL-Allocations))
OF INTEGER(0..32),
            p0alpha                        P0-PUSCH-AlphaSetId
        },
        aperiodic                      SEQUENCE {
            reportSlotOffsetList           SEQUENCE (SIZE (1..maxNrofUL-Allocations))
OF INTEGER(0..32)
        }
    },
    reportQuantity                     CHOICE {
        none                           NULL,
        cri-RI-PMI-CQI                 NULL,
        cri-RI-i1                      NULL,
        cri-RI-i1-CQI                  SEQUENCE {
            pdsch-BundleSizeForCSI         ENUMERATED {n2, n4}
OPTIONAL    -- Need S
        },
        cri-RI-CQI                     NULL,
        cri-RSRP                       NULL,
        ssb-Index-RSRP                 NULL,
        cri-RI-LI-PMI-CQI              NULL
    },
    reportFreqConfiguration            SEQUENCE {
        cqi-FormatIndicator                ENUMERATED { widebandCQI, subbandCQI }
OPTIONAL,   -- Need R
        pmi-FormatIndicator                ENUMERATED { widebandPMI, subbandPMI }
OPTIONAL,   -- Need R
        csi-ReportingBand                  CHOICE {
            subbands3                          BIT STRING(SIZE(3)),
            subbands4                          BIT STRING(SIZE(4)),
            subbands5                          BIT STRING(SIZE(5)),
            subbands6                          BIT STRING(SIZE(6)),
            subbands7                          BIT STRING(SIZE(7)),
            subbands8                          BIT STRING(SIZE(8)),
            subbands9                          BIT STRING(SIZE(9)),
            subbands10                         BIT STRING(SIZE(10)),
            subbands11                         BIT STRING(SIZE(11)),
            subbands12                         BIT STRING(SIZE(12)),
            subbands13                         BIT STRING(SIZE(13)),
            subbands14                         BIT STRING(SIZE(14)),
```

```
            subbands15                              BIT STRING(SIZE(15)),
            subbands16                              BIT STRING(SIZE(16)),
            subbands17                              BIT STRING(SIZE(17)),
            subbands18                              BIT STRING(SIZE(18)),
            ...,
            subbands19-v1530                        BIT STRING(SIZE(19))
        }   OPTIONAL   -- Need S


    }
OPTIONAL,   -- Need R
    timeRestrictionForChannelMeasurements           ENUMERATED {configured,
notConfigured},
    timeRestrictionForInterferenceMeasurements      ENUMERATED {configured,
notConfigured},
    codebookConfig                          CodebookConfig
OPTIONAL,   -- Need R
    dummy                                   ENUMERATED {n1, n2}
OPTIONAL,   -- Need R
    groupBasedBeamReporting                 CHOICE {
        enabled                             NULL,
        disabled                            SEQUENCE {
            nrofReportedRS                  ENUMERATED {n1, n2, n3, n4}
OPTIONAL,   -- Need S
        }
    },
    cqi-Table                           ENUMERATED {table1, table2, table3, spare1}
OPTIONAL,   -- Need R
    subbandSize                         ENUMERATED {value1, value2},
    non-PMI-PortIndication              SEQUENCE (SIZE (1..maxNrofNZP-CSI-RS-
ResourcesPerConfig)) OF PortIndexFor8Ranks OPTIONAL,   -- Need R
    ...,
    [[
    semiPersistentOnPUSCH-v1530         SEQUENCE {
        reportSlotConfig-v1530              ENUMERATED {s14, s18, s116}
    }
OPTIONAL   -- Need R
    ]]
}


CSI-ReportPeriodicityAndOffset ::=  CHOICE {
    slots4                              INTEGER(0..3),
    slots5                              INTEGER(0..4),
    slots8                              INTEGER(0..7),
    slots10                             INTEGER(0..9),
    slots16                             INTEGER(0..15),
    slots20                             INTEGER(0..19),
    slots40                             INTEGER(0..39),
    slots80                             INTEGER(0..79),
    slots160                            INTEGER(0..159),
    slots320                            INTEGER(0..319)
}


PUCCH-CSI-Resource ::=              SEQUENCE {
    uplinkBandwidthPartId               BWP-Id,
    pucch-Resource                      PUCCH-ResourceId
}


PortIndexFor8Ranks ::=              CHOICE {
    portIndex8                          SEQUENCE{
        rank1-8                             PortIndex8
OPTIONAL,   -- Need R
        rank2-8                             SEQUENCE(SIZE(2)) OF PortIndex8
OPTIONAL,   -- Need R
        rank3-8                             SEQUENCE(SIZE(3)) OF PortIndex8
OPTIONAL,   -- Need R
        rank4-8                             SEQUENCE(SIZE(4)) OF PortIndex8
OPTIONAL,   -- Need R
        rank5-8                             SEQUENCE(SIZE(5)) OF PortIndex8
OPTIONAL,   -- Need R
        rank6-8                             SEQUENCE(SIZE(6)) OF PortIndex8
OPTIONAL,   -- Need R
        rank7-8                             SEQUENCE(SIZE(7)) OF PortIndex8
OPTIONAL,   -- Need R
```

```
        rank8-8                        SEQUENCE(SIZE(8)) OF PortIndex8
OPTIONAL    -- Need R
    },
    portIndex4                         SEQUENCE{
        rank1-4                          PortIndex4
OPTIONAL,   -- Need R
        rank2-4                          SEQUENCE(SIZE(2)) OF PortIndex4
OPTIONAL,   -- Need R
        rank3-4                          SEQUENCE(SIZE(3)) OF PortIndex4
OPTIONAL,   -- Need R
        rank4-4                          SEQUENCE(SIZE(4)) OF PortIndex4
OPTIONAL    -- Need R
    },
    portIndex2                         SEQUENCE{
        rank1-2                          PortIndex2
OPTIONAL,   -- Need R
        rank2-2                          SEQUENCE(SIZE(2)) OF PortIndex2
OPTIONAL    -- Need R
    },
    portIndex1                         NULL
}

PortIndex8::=                          INTEGER (0..7)
PortIndex4::=                          INTEGER (0..3)
PortIndex2::=                          INTEGER (0..1)

-- TAG-CSI-REPORTCONFIG-STOP
-- ASN1STOP
```

| CSI-ReportConfig field descriptions |
|---|
| **carrier** |
| Indicates in which serving cell the CSI-ResourceConfig indicated below are to be found. If the field is absent, the resources are on the same serving cell as this report configuration. |
| **codebookConfig** |
| Codebook configuration for Type-1 or Type-II including codebook subset restriction. |
| **cqi-FormatIndicator** |
| Indicates whether the UE shall report a single (wideband) or multiple (subband) CQI. (see TS 38.214 [19], clause 5.2.1.4). |
| **cqi-Table** |
| Which CQI table to use for CQI calculation (see TS 38.214 [19], clause 5.2.2.1). |
| **csi-IM-ResourcesForInterference** |
| CSI IM resources for interference measurement. csi-ResourceConfigId of a CSI-ResourceConfig included in the configuration of the serving cell indicated with the field "carrier" above. The CSI-ResourceConfig indicated here contains only CSI-IM resources. The bwp-Id in that CSI-ResourceConfig is the same value as the bwp-Id in the CSI-ResourceConfig indicated by resourcesForChannelMeasurement. |
| **csi-ReportingBand** |
| Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| **dummy** |
| This field is not used in the specification. If received it shall be ignored by the UE. |
| **groupBasedBeamReporting** |
| Turning on/off group beam based reporting (see TS 38.214 [19], clause 5.2.1.4) |
| **non-PMI-PortIndication** |
| Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2). The first entry in non-PMI-PortIndication corresponds to the NZP-CSI-RS-Resource indicated by the first entry in nzp-CSI-RS-Resources in the NZP-CSI-RS-ResourceSet indicated in the first entry of nzp-CSI-RS-ResourceSetList of the CSI-ResourceConfig whose CSI-ResourceConfigId is indicated in a CSI-MeasId together with the above CSI-ReportConfigId; the second entry in non-PMI-PortIndication corresponds to the NZP-CSI-RS-Resource indicated by the second entry in nzp-CSI-RS-Resources in the NZP-CSI-RS-ResourceSet indicated in the first entry of nzp-CSI-RS-ResourceSetList of the same CSI-ResourceConfig, and so on until the NZP-CSI-RS-Resource indicated by the last entry in nzp-CSI-RS-Resources in the in the NZP-CSI-RS-ResourceSet indicated in the first entry of nzp-CSI-RS-ResourceSetList of the same CSI-ResourceConfig. Then the next entry corresponds to the NZP-CSI-RS-Resource indicated by the first entry in nzp-CSI-RS-Resources in the NZP-CSI-RS-ResourceSet indicated in the second entry of nzp-CSI-RS-ResourceSetList of the same CSI-ResourceConfig and so on. |
| **nrofReportedRS** |
| The number (N) of measured RS resources to be reported per report setting in a non-group-based report. N <= N_max, where N_max is either 2 or 4 depending on UE capability. (see TS 38.214 [19], clause 5.2.1.4) When the field is absent the UE applies the value 1 |
| **nzp-CSI-RS-ResourcesForInterference** |
| NZP CSI RS resources for interference measurement. csi-ResourceConfigId of a CSI-ResourceConfig included in the configuration of the serving cell indicated with the field "carrier" above. The CSI-ResourceConfig indicated here contains only NZP-CSI-RS resources. The bwp-Id in that CSI-ResourceConfig is the same value as the bwp-Id in the CSI-ResourceConfig indicated by resourcesForChannelMeasurement. |
| **p0alpha** |
| Index of the p0-alpha set determining the power control for this CSI report transmission (see TS 38.214 [19], clause 6.2.1.2). |
| **pdsch-BundleSizeForCSI** |
| PRB bundling size to assume for CQI calculation when reportQuantity is CRI/RI/i1/CQI. If the field is absent, the UE assumes that no PRB bundling is applied (see TS 38.214 [19], clause 5.2.1.4.2). |

| |
|---|
| **pmi-FormatIndicator**<br>Indicates whether the UE shall report a single (wideband) or multiple (subband) PMI. (see TS 38.214 [19], clause 5.2.1.4). |
| **pucch-CSI-ResourceList**<br>Indicates which PUCCH resource to use for reporting on PUCCH. |
| **reportConfigType**<br>Time domain behavior of reporting configuration |
| **reportFreqConfiguration**<br>Reporting configuration in the frequency domain. (see TS 38.214 [19], clause 5.2.1.4). |
| **reportQuantity**<br>The CSI related quantities to report. Corresponds to L1 parameter 'ReportQuantity' (see TS 38.214 [19], clause 5.2.1). |
| **reportSlotConfig**<br>Periodicity and slot offset (see TS 38.214 [19], clause 5.2.1.4) . |
| **reportSlotConfig-v1530**<br>Extended value range for reportSlotConfig for semi-persistent CSI on PUSCH. If the field is present, the UE shall ignore the value provided in the legacy field (semiPersistentOnPUSCH.reportSlotConfig). |
| **reportSlotOffsetList**<br>Timing offset Y for semi persistent reporting using PUSCH. This field lists the allowed offset values. This list must have the same number of entries as the pusch-TimeDomainAllocationList in PUSCH-Config. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity.<br>Timing offset Y for aperiodic reporting using PUSCH. This field lists the allowed offset values. This list must have the same number of entries as the pusch-TimeDomainAllocationList in PUSCH-Config. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 5.2.3). |
| **resourcesForChannelMeasurement**<br>Resources for channel measurement. csi-ResourceConfigId of a CSI-ResourceConfig included in the configuration of the serving cell indicated with the field "carrier" above. The CSI-ResourceConfig indicated here contains only NZP-CSI-RS resources and/or SSB resources. This CSI-ReportConfig is associated with the DL BWP indicated by bwp-Id in that CSI-ResourceConfig. |
| **subbandSize**<br>Indicates one out of two possible BWP-dependent values for the subband size as indicated in TS 38.214 [19], table 5.2.1.4-2 . If csi-ReportingBand is absent, the UE shall ignore this field. |
| **timeRestrictionForChannelMeasurements**<br>Time domain measurement restriction for the channel (signal) measurements (see TS 38.214 [19], clause 5.2.1.1) |
| **timeRestrictionForInterferenceMeasurements**<br>Time domain measurement restriction for interference measurements (see TS 38.214 [19], clause 5.2.1.1) |

[Table 26]

The IE *CSI-ResourceConfig* defines a group of one or more *NZP-CSI-RS-ResourceSet*, *CSI-IM-ResourceSet* and/or *CSI-SSB-ResourceSet*.

### *CSI-ResourceConfig* information element

```
-- ASN1START
-- TAG-CSI-RESOURCECONFIG-START

CSI-ResourceConfig ::=      SEQUENCE {
    csi-ResourceConfigId        CSI-ResourceConfigId,
    csi-RS-ResourceSetList      CHOICE {
        nzp-CSI-RS-SSB              SEQUENCE {
            nzp-CSI-RS-ResourceSetList  SEQUENCE (SIZE (1..maxNrofNZP-CSI-RS-
ResourceSetsPerConfig)) OF NZP-CSI-RS-ResourceSetId

OPTIONAL,  -- Need R
            csi-SSB-ResourceSetList    SEQUENCE (SIZE (1..maxNrofCSI-SSB-
ResourceSetsPerConfig)) OF CSI-SSB-ResourceSetId

OPTIONAL  -- Need R
        },
        csi-IM-ResourceSetList     SEQUENCE (SIZE (1..maxNrofCSI-IM-
ResourceSetsPerConfig)) OF CSI-IM-ResourceSetId
    },

    bwp-Id                  BWP-Id,
    resourceType               ENUMERATED { aperiodic, semiPersistent, periodic },
    ...
}

-- TAG-CSI-RESOURCECONFIG-STOP
-- ASN1STOP
```

| CSI-ResourceConfig field descriptions |
|---|
| ***bwp-Id***<br>The DL BWP which the CSI-RS associated with this CSI-ResourceConfig are located in (see TS 38.214 [19], clause 5.2.1.2 |
| ***csi-ResourceConfigId***<br>Used in CSI-ReportConfig to refer to an instance of CSI-ResourceConfig |
| ***csi-RS-ResourceSetList***<br>Contains up to maxNrofNZP-CSI-RS-ResourceSetsPerConfig resource sets if ResourceConfigType is 'aperiodic' and 1 otherwise (see TS 38.214 [19], clause 5.2.1.2) |
| ***csi-SSB-ResourceSetList***<br>List of SSB resources used for beam measurement and reporting in a resource set   (see TS 38.214 [19], section FFS_Section) |
| ***resourceType***<br>Time domain behavior of resource configuration (see TS 38.214 [19], clause 5.2.1.2). It does not apply to resources provided in the csi-SSB-ResourceSetList. |

[Table 27]

The IE *NZP-CSI-RS-ResourceSet* is a set of Non-Zero-Power (NZP) CSI-RS resources (their IDs) and set-specific parameters.

### *NZP-CSI-RS-ResourceSet* information element

```
-- ASN1START
-- TAG-NZP-CSI-RS-RESOURCESET-START
NZP-CSI-RS-ResourceSet ::=          SEQUENCE {
    nzp-CSI-ResourceSetId               NZP-CSI-RS-ResourceSetId,
    nzp-CSI-RS-Resources                SEQUENCE (SIZE (1..maxNrofNZP-CSI-RS-
ResourcesPerSet)) OF NZP-CSI-RS-ResourceId,
    repetition                          ENUMERATED { on, off }
OPTIONAL,   -- Need S
    aperiodicTriggeringOffset           INTEGER(0..6)
OPTIONAL,   -- Need S
    trs-Info                            ENUMERATED {true}
OPTIONAL,   -- Need R
    ...
}

-- TAG-NZP-CSI-RS-RESOURCESET-STOP
-- ASN1STOP
```

| *NZP-CSI-RS-ResourceSet* field descriptions |
|---|
| **aperiodicTriggeringOffset**<br>Offset X between the slot containing the DCI that triggers a set of aperiodic NZP CSI-RS resources and the slot in which the CSI-RS resource set is transmitted. The value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. When the field is absent the UE applies the value 0. |
| **nzp-CSI-RS-Resources**<br>NZP-CSI-RS-Resources associated with this NZP-CSI-RS resource set (see TS 38.214 [19], clause 5.2). For CSI, there are at most 8 NZP CSI RS resources per resource set |
| **repetition**<br>Indicates whether repetition is on/off. If the field is set to 'OFF' or if the field is absent, the UE may not assume that the NZP-CSI-RS resources within the resource set are transmitted with the same downlink spatial domain transmission filter and with same NrofPorts in every symbol (see TS 38.214 [19], clauses 5.2.2.3.1 and 5.1.6.1.2). Can only be configured for CSI-RS resource sets which are associated with CSI-ReportConfig with report of L1 RSRP or "no report" |
| **trs-Info**<br>Indicates that the antenna port for all NZP-CSI-RS resources in the CSI-RS resource set is same. If the field is absent or released the UE applies the value "false" (see TS 38.214 [19], clause 5.2.2.3.1). |

[Table 28]

The IE *CSI-SSB-ResourceSet* is used to configure one SS/PBCH block resource set which refers to SS/PBCH as indicated in *ServingCellConfigCommon*.

### *CSI-SSB-ResourceSet* information element

```
-- ASN1START
-- TAG-CSI-SSB-RESOURCESET-START

CSI-SSB-ResourceSet ::=             SEQUENCE {
    csi-SSB-ResourceSetId               CSI-SSB-ResourceSetId,
    csi-SSB-ResourceList                SEQUENCE (SIZE(1..maxNrofCSI-SSB-ResourcePerSet))
OF SSB-Index,
    ...
}

-- TAG-CSI-SSB-RESOURCESET-STOP
-- ASN1STOP
```

[Table 29]

The IE *CSI-IM-ResourceSet* is used to configure a set of one or more CSI Interference Management (IM) resources (their IDs) and set-specific parameters.

## CSI-IM-ResourceSet information element

```
-- ASN1START
-- TAG-CSI-IM-RESOURCESET-START

CSI-IM-ResourceSet ::=          SEQUENCE {
    csi-IM-ResourceSetId            CSI-IM-ResourceSetId,
    csi-IM-Resources                SEQUENCE (SIZE(1..maxNrofCSI-IM-ResourcesPerSet))
OF CSI-IM-ResourceId,
    ...
}
-- TAG-CSI-IM-RESOURCESET-STOP
-- ASN1STOP
```

| CSI-IM-ResourceSet field descriptions |
|---|
| **csi-IM-Resources** |
| CSI-IM-Resources associated with this CSI-IM-ResourceSet (see TS 38.214 [19], clause 5.2) |

# [Table 30]

The *CSI-AperiodicTriggerStateList* IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the *associatedReportConfigInfoList* for that trigger state.

## CSI-AperiodicTriggerStateList information element

```
-- ASN1START
-- TAG-CSI-APERIODICTRIGGERSTATELIST-START

CSI-AperiodicTriggerStateList ::=   SEQUENCE (SIZE (1..maxNrOfCSI-AperiodicTriggers)) OF
CSI-AperiodicTriggerState

CSI-AperiodicTriggerState ::=       SEQUENCE {
    associatedReportConfigInfoList      SEQUENCE
(SIZE(1..maxNrofReportConfigPerAperiodicTrigger)) OF CSI-AssociatedReportConfigInfo,
    ...
}

CSI-AssociatedReportConfigInfo ::=      SEQUENCE {
    reportConfigId                  CSI-ReportConfigId,
    resourcesForChannel             CHOICE {
        nzp-CSI-RS                      SEQUENCE {
            resourceSet                     INTEGER (1..maxNrofNZP-CSI-RS-
ResourceSetsPerConfig),
            qcl-info                        SEQUENCE (SIZE(1..maxNrofAP-CSI-RS-
ResourcesPerSet)) OF TCI-StateId OPTIONAL -- Cond Aperiodic
        },
        csi-SSB-ResourceSet             INTEGER (1..maxNrofCSI-SSB-
ResourceSetsPerConfig)
    },
    csi-IM-ResourcesForInterference     INTEGER(1..maxNrofCSI-IM-ResourceSetsPerConfig)
OPTIONAL, -- Cond CSI-IM-ForInterference
    nzp-CSI-RS-ResourcesForInterference INTEGER (1..maxNrofNZP-CSI-RS-
ResourceSetsPerConfig)    OPTIONAL, -- Cond NZP-CSI-RS-ForInterference
    ...
}

-- TAG-CSI-APERIODICTRIGGERSTATELIST-STOP
-- ASN1STOP
```

| CSI-AssociatedReportConfigInfo field descriptions |
| --- |
| **csi-IM-ResourcesForInterference** <br> CSI-IM-ResourceSet for interference measurement. Entry number in csi-IM-ResourceSetList in the CSI-ResourceConfig indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| **csi-SSB-ResourceSet** <br> CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **nzp-CSI-RS-ResourcesForInterference** <br> NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). |
| **qcl-info** <br> List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId** <br> The reportConfigId of one of the CSI-ReportConfigToAddMod configured in CSI-MeasConfig |
| **resourceSet** <br> NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to thesecond entry, and so on). |

| Conditional Presence | Explanation |
| --- | --- |
| Aperiodic | The field is mandatory present if the *NZP-CSI-RS-Resources* in the associated *resourceSet* have the resourceType aperiodic. The field is absent otherwise. |
| CSI-IM-ForInterference | This field is optional need M if the *CSI-ReportConfig* identified by *reportConfigId* is configured with *csi-IM-ResourcesForInterference*; otherwise it is absent. |
| NZP-CSI-RS-ForInterference | This field is optional need M if the *CSI-ReportConfig* identified by *reportConfigId* is configured with *nzp-CSI-RS-ResourcesForInterference*; otherwise it is absent. |

[Table 31]

The *CSI-SemiPersistentOnPUSCH-TriggerStateList* IE is used to configure the UE with list of trigger states for semi-persistent reporting of channel state information on L1. See also TS 38.214 [19], clause 5.2.

### *CSI-SemiPersistentOnPUSCH-TriggerStateList* information element

```
-- ASN1START
-- TAG-CSI-SEMIPERSISTENTONPUSCHTRIGGERSTATELIST-START

CSI-SemiPersistentOnPUSCH-TriggerStateList ::= SEQUENCE(SIZE
(1..maxNrOfSemiPersistentPUSCH-Triggers)) OF CSI-SemiPersistentOnPUSCH-TriggerState

CSI-SemiPersistentOnPUSCH-TriggerState ::= SEQUENCE {
    associatedReportConfigInfo          CSI-ReportConfigId,
    ...
}

-- TAG-CSI-SEMIPERSISTENTONPUSCHTRIGGERSTATELIST-STOP
-- ASN1STOP
```

Each report configuration *CSI-ReportConfig* may be associated with one downlink (DL) bandwidth part identified by a bandwidth part identifier *bwp-Id,* which is a higher layer parameter given as a CSI report configuration *CSI-ResourceConfig* associated with the report configuration. Aperiodic, semi-persistent, and periodic types are supported for a time domain report regarding each report configuration *CSI-ReportConfig,* and may be configured by the base station to the UE via a higher layer parameter *reportConfigType.* A semi-persistent CSI reporting method supports a semi-persistent report on PUCCH configured by *semi-PersistentOnPUCCH* and a semi-persistent report on PUSCH configured by *semi-PersistentOnPUSCH.* In a periodic or semi-persistent CSI report, the UE may be configured with a PUCCH resource or a PUSCH resource for transmitting the CSI from the base station via higher layer signaling. A period and slot offset for transmitting the CSI may be provided by a numerology of an uplink (UL) bandwidth part configured such that a CSI report is transmitted. In an aperiodic CSI report, the PUSCH resource for transmitting the CSI may be scheduled by the base station to the UE via L1 signaling (for example, the DCI format 0_1).

Regarding the CSI resource configuration *CSI-ResourceConfig,* each resource configuration *CSI-ReportConfig* may include S ($\geq$ 1) CSI resource sets (provided as a higher layer parameter csi-RS-*ResourceSetList*). A CSI resource set list may include a non-zero power (NZP) CSI-RS resource set and a SS/PBCH block set or may include a CSI-interference measurement (CSI-IM) resource set. Each CSI resource configuration may be located at a DL bandwidth part identified by the higher layer parameter *bwp-Id,* and the CSI resource configuration may be connected to the CSI report configuration at the same DL bandwidth part. A time domain operation of a CSI-RS resource in the CSI resource configuration may be configured, by a higher layer parameter *resourceType,* to be one of aperiodic, periodic, or semi-persistent. Regarding the periodic or semi-persistent CSI resource configuration, the number of CSI-RS resource sets may be limited to S=1, and a configured period and a slot offset may be provided by a numerology of the DL bandwidth part identified by *bwp-Id.* The UE may be configured with, by the base station, the one or more CSI resource configurations for channel or interference measurement via higher layer signaling, and for example, the CSI resource configuration may include at least one of following resources.

- CSI-interference measurement (IM) resource for IM
- NZP CSI-RS resource for IM
- NZP CSI-RS resource for channel measurement

Regarding the CSI-RS resource sets associated with resource configuration in which the higher layer parameter *resource Type* is configured to be 'aperiodic', 'periodic', or 'semi-persistent', a trigger state for the CSI report configuration in which the *reportType* is configured to be 'aperiodic' and a resource configuration for channel or interference measurement for one or more component cells (CCs) may be configured as a higher layer parameter *CSI-Aperiodic-TriggerStateList.*

An aperiodic CSI report of the UE may use a PUSCH, a periodic CSI report may use a PUCCH, and a semi-persistent CSI report may use a PUSCH when triggered or activated by DCI and may use a PUCCH after being activated by an MAC CE.

The CSI resource configuration may also be configured to be aperiodic, periodic, or semi-persistent. A combination of the CSI report configuration and the CSI resource configuration may be based on Table 32 below.

[Table 32] Triggering/Activation of CSI Reporting for the possible CSI-RS Configurations

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The aperiodic CSI report may be triggered by "CSI request" of the DCI format 0_1 corresponding to scheduling DCI for a PUSCH. The UE may monitor the PDCCH to obtain the DCI format 0_1, and obtain resource allocation information for PUSCH and a CSI request field from the DCI format 0_1. The CSI request field may be configured in $N_{TS}$ (= 0, 1, 2, 3, 4, 5, or 6) bits and $N_{TS}$ may be determined by a higher layer parameter *reportTriggerSize.* One trigger state from among one or more aperiodic CSI report trigger states that may be configured via the higher layer parameter *CSI-AperiodicTriggerStateList* may be triggered by the CSI request field.

- When all bits of the CSI request field are 0, the CSI report may not have been requested.

- When the number M of CSI trigger states within the configured *CSI-AperiodicTriggerStateList* is greater than $2^{N^{TS}}-1$, the M CSI trigger states may be mapped to $2^{N^{TS}}-1$ CSI trigger states according to a pre-defined mapping relationship, and one of $2^{N^{TS}}-1$ trigger states may be indicated via the CSI request field.

- When the number M of CSI trigger states in the configured *CSI-AperiodicTriggerStateList* is equal to or less than $2^{N^{TS}}-1$, one of M CSI trigger states may be indicated via the CSI request field.

Table 33 below shows an example of relationships between a CSI request field and a CSI trigger state indicatable by the CSI request field.

[Table 33]

| CSI request fi eld | CSI trigger state | CSI-ReportConfigId | CSI-ResourceConfig Id |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may perform measurement on a CSI resource in the CSI trigger state triggered by the CSI request field, and generate CSI (including at least one of CQI, PMI, CRI, SSBRI, LI, RI, L1-RSRP, or L1-SINR) therefrom. The UE may transmit the generated CSI by using the PUSCH scheduled by the DCI format 0_1. When a 1-bit uplink shared channel indicator (UL-SCH indicator) in the DCI format 0_1 indicates "1", uplink data from UL-SCH and the generated CSI may be multiplexed and transmitted on a PUSCH resource scheduled by the DCI format 0_1. When the UL-SCH indicator in the DCI format 0_1 indicates "0", only CSI may be transmitted without uplink data on the PUSCH resource scheduled by the DCI format 0_1.

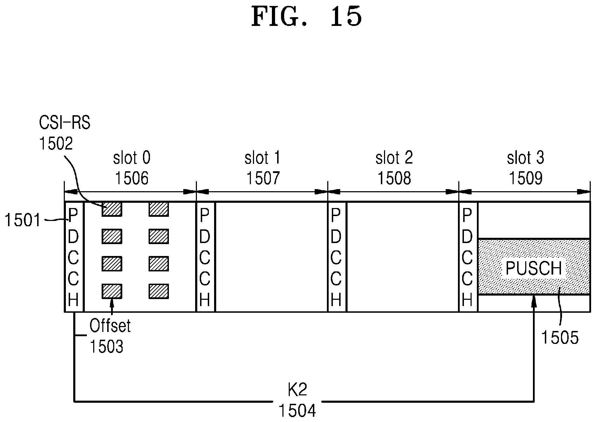

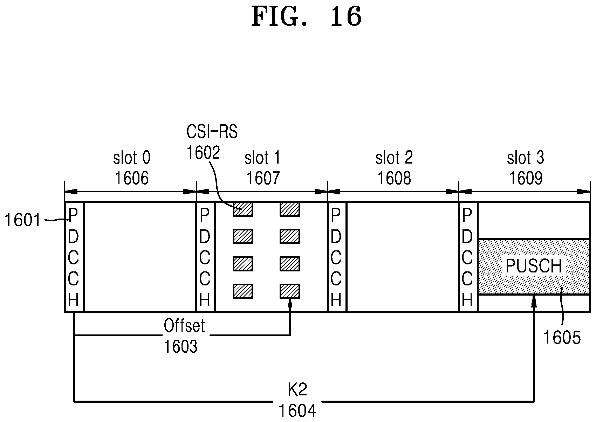

FIGS. 15 and 16 are diagrams showing examples of an aperiodic channel state report according to an embodiment of the present disclosure.

Referring to FIG. 15, the UE may obtain the DCI format 0_1 by monitoring a PDCCH 1500 and obtain scheduling information and CSI request field for a PUSCH 1508 from the DCI format 0_1. The CSI request field provides resource information for a CSI-RS 1502 to be measured by the UE. The UE may identify a measurement time for the CSI-RS 1502 resource based on a time of receiving the DCI format 0_1 and a CSI resource set configuration (e.g., aperiodicTriggeringOffset in *NZP-CSI-RS-ResourceSet*).

In detail, the UE may obtain an offset value X 1504 by a parameter *aperiodicTriggeringOffset* within an NZP-CSI-RS resource set provided from the base station via higher layer signaling. The offset value X 804 denotes an offset between a slot in which DCI triggering an aperiodic CSI report is received and a slot in which a CSI-RS resource is transmitted. For example, a value of *aperiodicTriggeringOffset* and the offset value X 1504 may have a mapping relationship of Table 34 below.

[Table 34]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |

(continued)

| aperiodicTriggeringOffset | Offset X |
|---|---|
| 6 | 24 slots |

FIG. 15 illustrates an example in which the offset value 1504 is configured as X = 0. In this case, the UE may receive the CSI-RS 1502 on a slot 0 1510 in which the DCI format 0_1 triggering the aperiodic CSI report is received.

The UE may obtain scheduling information (resource allocation fields in the DCI format 0_1) for the PUSCH 1508 for CSI report, from the DCI format 0_1. For example, the UE may obtain information about a slot in which the PUSCH 1508 is to be transmitted, from a time domain resource allocation field in the DCI format 0_1. In the example of FIG. 15, a value of K2 1506 corresponding to a PDCCH-to-PUSCH slot offset is 3, and accordingly, the PUSCH 1508 including CSI related to the CSI-RS 1502 may be transmitted in a slot 3 1512, which is 3 slots away from a time when the PDCCH 1500 was received, i.e., the slot 0 1510.

Referring to FIG. 16, the UE may obtain the DCI format 0_1 by monitoring a PDCCH 1600 (and obtain scheduling information and CSI request field for a PUSCH 1608 from the DCI format 0_1. The CSI request field provides resource information for a CSI-RS 1602 to be measured by the UE. FIG. 16 illustrates an example in which an offset value 1604 for CSI-RS is configured as X = 1. In this case, the UE may receive the CSI-RS 1602 on a slot 1 1612, which is one slot away from a slot 0 1610 in which the DCI format 0_1 triggering the aperiodic CSI report is received. In the illustrated example, a value of K2 1606 corresponding to a PDCCH-to-PUSCH slot offset is provided as 3 to the UE, and accordingly, the PUSCH 1608 including CSI related to the CSI-RS 1602 may be transmitted in a slot 3 1614, which is 3 slots away from a time when the PDCCH 1600 was received, i.e., the slot 0 1610.

[CSI: Regarding L1-RSRP Report]

Hereinafter, an L1-RSRP report in the 5G system will be described in detail. CSI-RS and SSB may be configured for L1-RSRP calculation of the UE, and for CSI-RS, up to 16 CSI-RS sets and up to 64 CSI-RSs per set may be configured and the total may not exceed 128. When nrofReportedRS configured in a higher layer is 1, L1-RSRP is defined as a 7-bit value of [-140,-44] dBM in 1-dB intervals. When nrofReportedRS is greater than 1, groupBasedBeamReporting is configured to 'enabled', or groupBasedBeamReporting-r17 is configured to 'enabled', the UE may report differential L1-RSRP that is a difference from maximum L1-RSRP. The differential L1-RSRP is defined as a 4-bit value with 2 dB intervals. When timeRestrictionForChannelMeasurements is configured to 'notConfigured' in the higher layer, the UE may calculate and report L1-RSRP based on NZP CSI-RS and SSB before a CSI reference resource, and when time-RestrictionForChannelMeasurements is configured to 'Configured', the UE may calculate and report L1-RSRP of most recent NZP CSI-RS or SSB before the CSI reference resource.

[CSI: Regarding L1-SINR Report]

Hereinafter, an L1-SINR report in the 5G system will be described in detail. The UE may configure NZP CSI-RS and SSB for channel measurement for L1-SINR calculation, and configure NZP CSI-RS or CSI-IM for interference measurement. For CSI-RS, up to 16 CSI-RS sets and up to 64 CSI-RSs per set may be configured, and the total may not exceed 128.

When nrofReportedRS configured in a higher layer is 1, L1-SINR is defined as a 7-bit value of [--23, 40] dBm in 0.5 dB intervals. When nrofReportedRS is greater than 1 or groupBasedBeamReporting is configured to 'enabled', the UE may report differential L1-SINR that is a difference from maximum L1-SINR. The differential L1-RSRP is defined as a 4-bit value with 1 dB intervals.

When timeRestrictionForChannelMeasurements is configured to 'notConfigured' in the higher layer, the UE may calculate and report L1-SINR based on NZP CSI-RS or SSB before a CSI reference resource, and when timeRestrictionForChannelMeasurements is configured to 'Configured', the UE may calculate and report L1-SINR of most recent NZP CSI-RS or SSB before the CSI reference resource.

When timeRestrictionForInterferenceMeasurements is configured to 'notConfigured' in the higher layer, the UE may calculate and report L1-SINR based on NZP CSI-RS or CSI-IM before a CSI reference resource, and when timeRestrictionForInterferenceMeasurements is configured to 'Configured', the UE may calculate and report L1-SINR of most recent NZP CSI-RS or CSI-IM before the CSI reference resource.

The present disclosure provides a method of receiving CSI-RS of a UE and a method of reporting measured CSI, in which the amount of CSI-RS for beam management may be reduced when a base station operates multiple beams. In detail, when a beam set to be used by a base station for UE-dedicated PDSCH transmission is referred to as Set A, and a beam set for beam measurement and reporting used to select an optimal beam for a UE is referred to as Set B, the UE has previously selected the optimal beam using following methods.

- Method 1: Set B is the same as Set A. Beams in Set B are mapped to different SSBs or CSI-RSs. The UE may measure all SSBs or CSI-RSs mapped to the beams of Set B and report an index of SSB or CSI-RS with largest L1-RSRP, and L1-RSRP. The base station may select a beam from Set A based on the UE report and use the beam as a PDSCH transmit beam.
- Method 2: Set B is different from Set A or is a subset of Set A. Set B may be divided into Set B1 and Set B2. Beams of Set B1 may include beams with a wide beam width, and Set B2 is a subset of Set A and may include beams with a smaller beam width than Set B1. The UE may measure all SSBs or CSI-RSs mapped to the beams of Set B1 and report an index of SSB or CSI-RS with largest L1-RSRP, and L1-RSRP. The base station may select a beam from Set B1 based on the UE report and configure the beams of Set B2. The UE may measure all CSI-RSs mapped to the beams of Set B2 and report an index of CSI-RS with largest L1-RSRP, and L1-RSRP. The base station may select a beam from Set A based on the UE report and use the beam as a PDSCH transmit beam.

In both the existing Method 1 and Method 2, in order to select a beam of Set A, at least an optimal beam among the beams of Set B needs to be selected. Accordingly, a lot of beam sweeping is required to select the optimal beam within Set B, which increases overhead of DL-RS and latency of beam management. In addition, power consumption of the UE increases in order to measure many DL-RSs.

The base station or UE may select or predict the optimal beam in Set A, which is not included in Set B, by using recent measurement data of Set B, based on a high-performance beam estimation algorithm. The high-performance beam estimation algorithm may be implemented through various beam estimation algorithms including artificial intelligence (AI)-based channel estimation algorithm, and following advantages may be obtained therethrough.

- Advantage 1: Because the optimal beam in Set A does not need to be included in Set B, overhead of SSB or CSI-RS for measuring a beam in Set B may be reduced. For example, a transmit beam with a small beam width may be mapped to CSI-RS to use a transmit beam with a smaller beam width (and larger beam gain) than a beam mapped to SSB. In this regard, CSI-RS needs to be configured for each UE, and when there are many beams in Set B, the amount of CSI-RS overhead may become very large when supporting many UEs.
- Advantage 2: Because the base station may be reported with a beam estimated by the UE or estimate a beam that has not been measured and reported in Set B, a future beam in Set A may be predicted, thereby reducing latency for beam management and continuously maintaining beam reception quality. For example, the optimal beam may not be received in time due to latency in beam sweeping and CSI-report at a time when a beam change is required, or the optimal beam may not be received due to aging of L1-RSRP. When predicting the future beam, the base station may instruct the UE to change a beam while reducing latency by predicting the optimal beam in advance before the time when a beam change is needed.
- Advantage 3: Because the base station is able to reduce the CSI-RS overhead for beam measurement, the UE may reduce power consumption for CSI-RS measurement.

As described above, the base station or UE may select or predict the optimal beam in Set A, which is not included in Set B, by using recent measurement data of Set B, based on the high-performance beam estimation algorithm. When the UE uses the high-performance beam estimation algorithm, the amount of computation for CSI measurement and reporting of the UE may increase compared to when the base station uses the high-performance beam estimation algorithm, but following advantages may be obtained.

- Advantage 1: Because the UE measures CSI directly, the base station may use, for the beam estimation algorithm, a more accurate measurement value than CSI to be reported. For example, an L1-RSRP value measured by the UE is more accurate than a quantized L1-RSRP value with a 1 dB difference, to be reported to the base station. In addition, the UE may use various CSI measurement values to improve accuracy of optimal beam selection or prediction.
- Advantage 2: When the base station performs beam management for multiple UEs, burden of complexity and computational volume of the high-performance beam estimation algorithm in the base station may be reduced by the multiple UEs.

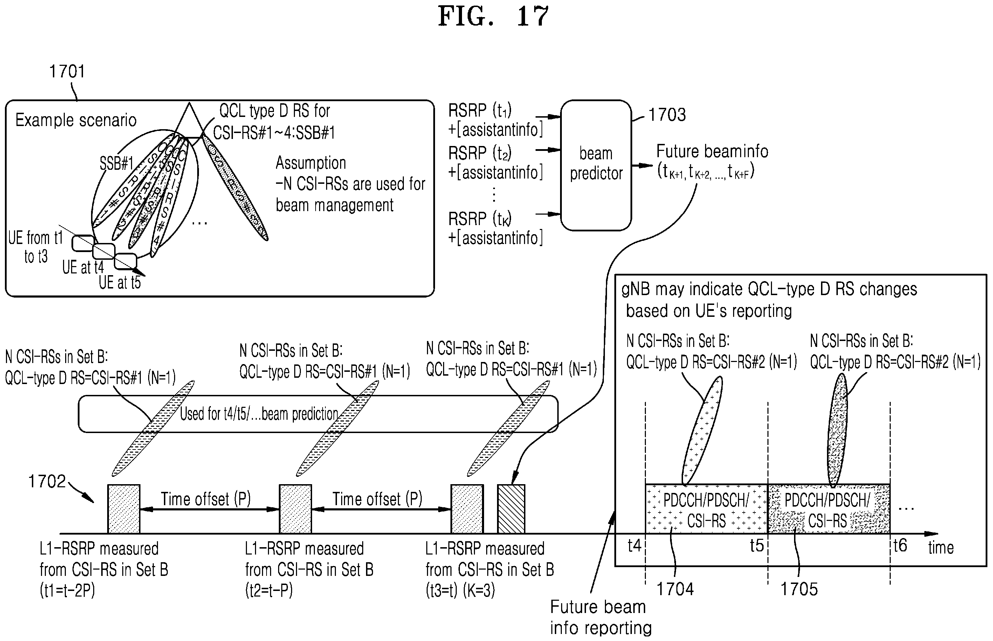

In the present disclosure, for purpose of description, it is assumed that the number of beams in Set A is M and the number of beams in Set B is N, and that a beam width used for CSI-RS is smaller than a beam width used for SSB, but this is only an example and does not limit the scope of the present disclosure. FIG. 17 illustrates an example of a method of configuring a beam set of beam measurement and reporting for beam estimation, according to an embodiment of the present disclosure. Referring to FIG. 17, the UE assumes that M CSI-RSs are configured, to which the total of M (=32) transmit beams are mapped (1701). The UE may measure N (=1) beams at each of t1, t2, and t3 (1702), and predict and report (1703) CSI corresponding to an optimal beam at t4 or t5. The base station may instruct beam management at t4 (1704) or t5 (1705) through CSI of an estimated beam at reported t4 or t5. At this time, an application time for predicted beams may vary for each UE due to various factors, such as a beambook implementation method for each base station, a moving direction and speed of the UE, a boresight direction of the UE, and a distance between the base station and the UE. For example, a UE 1 may report CSI of a predicted beam assuming t4 to be 20 ms later and t5 to be 40 ms later, and UE 2 may report CSI of a predicted beam assuming t4 to be 40 ms later and t5 to be 80 ms later. Accordingly, when the application time at which the predicted CSI is to be reported to the UE is not instructed or the application time is not reported from the UE, the base station is unable to determine a time at which the reported predicted CSI is to be applied, and is thus unable to determine which transmit beam to manage at t4 and t5. Embodiments below disclose methods of aligning same assumptions about an application time of the base station and the UE at an instruction of the base station when the UE performs beam prediction, and methods of effectively measuring and reporting CSI when the UE reports CSI about the application time.

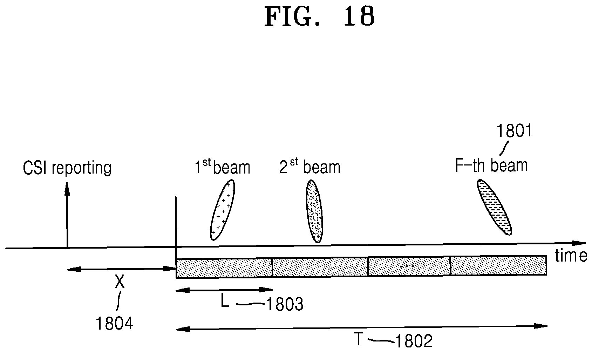

Embodiment 1-1 of the present disclosure describes a method of explicitly indicating and configuring an application time of CSI estimated by the UE for a same assumption on an application time of the base station and the UE. According to an embodiment of the present disclosure, the UE may predict or estimate CSI at a configured application time and report the same to the base station. FIG. 18 illustrates an example of an application time of predicted CSI, according to an embodiment of the present disclosure. Referring to FIG. 18, the UE may be configured with P (period of periodic CSI (P CSI) reporting or semi-persistent (SP) CSI reporting), F (the number of predicted CSIs to report) 1801, T (the total application time of F predicted CSIs) 1802, L (an application time per predicted CSI) 1803, and X (an application time of a first predicted CSI) 1804, and may be configured with only one of T or L by assuming L = T/F, and the UE may assume an application time of an i-th predicted CSI as X + (i-1) * L. The base station may configure X, L, T in units of symbols, slots, or ms through higher layer parameters, and when at least one of the above parameters is configured in units of symbols or slots, a value of the parameter may be scaled according to a BWP or subcarrier spacing configured in a cell. For example, when an X slot is configured in $\mu_{ref}$, a BWP or cell configured to $\mu$ may assume a X $\cdot$ $2^{\mu_{ref}-\mu}$ slot. Various methods of configuring X, L, and T will be described in detail below.

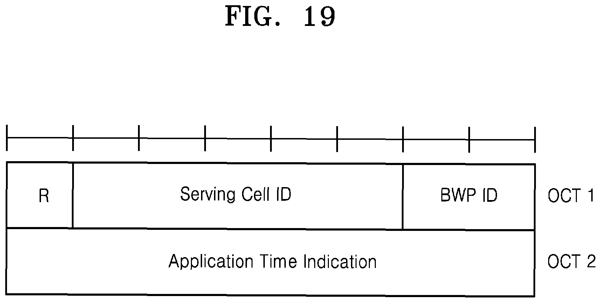

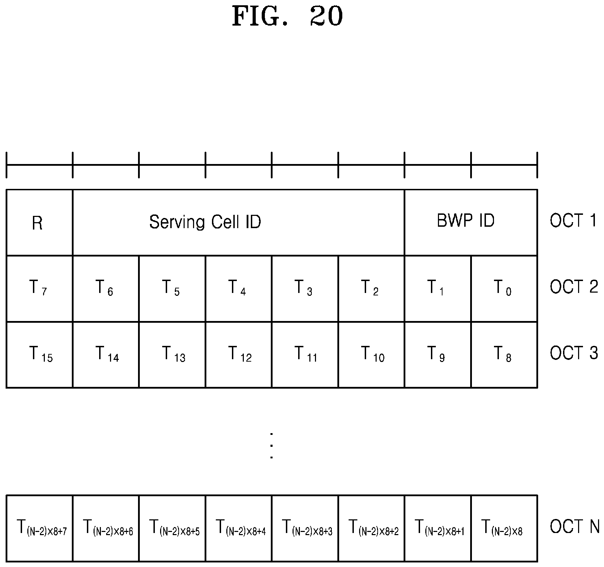

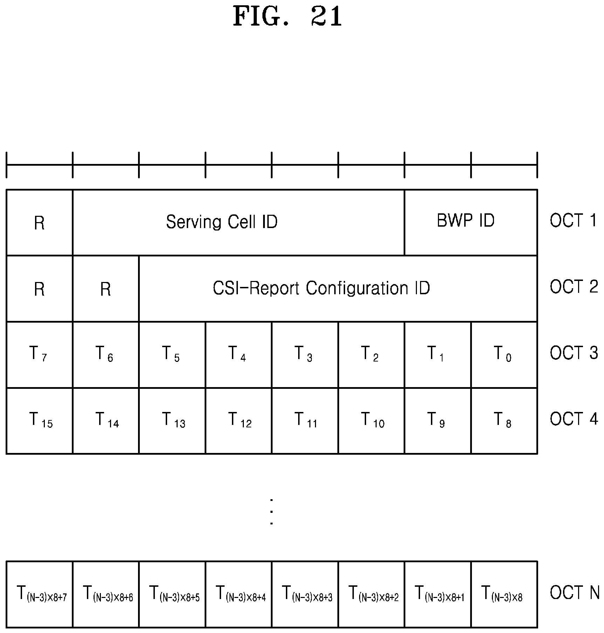

- Method 1: The UE may be configured with T or L and X for each CSI-ReportConfig through an RRC parameter. For example, the UE may be directly configured with X, L, and T for each P CSI report, SP CSI report, and aperiodic CSI (AP CSI) report depending on different reportConfigType configurations in CSI-ReportConfig.
- Method 2: The UE may be configured with T or L and X for a P CSI report and an SP CSI report for each CSI-ReportConfig through an RRC parameter, and may be configured with a table in which each row includes T or L and X for an AP CSI report through an RRC parameter. For example, the UE may be directly configured with X, L, and T for each P CSI report and SP CSI report depending on different reportConfigType configurations in CSI-ReportConfig. A method of instructing the table including T or L and X for an AP CSI report will be described below.
- Method 1-1: The UE may be indicated with a row of the table through a DCI codepoint. For example, when the base station is to indicate that there are J rows in the table and indicate T or L and X configured in a j-th row, the j-th row of the table may be indicated by being mapped to one of codepoints of log2(J) bits of DCI.
- Method 1-2: The UE may be indicated with a row of the table through MAC CE. FIG. 19 illustrates an example of MAC CE for configuring an application time of predicted CSI in an AP CSI report, according to an embodiment of the present disclosure. Referring to FIG. 19, an Application Time Indication ID field of the MAC CE may indicate which row of the table is T or L and X for the AP CSI report.
- Method 1-3: The UE may be indicated with a row of the table through MAC CE and DCI. For example, when there are J rows in the table, the base station may select K rows as an MAC CE activation field, and a k-th row among the K activated rows may be mapped to one of codepoints of log2(K) bits of DCI and indicated to the UE. FIG. 20 illustrates another example of MAC CE for configuring an application time of predicted CSI in an AP CSI report, according to an embodiment of the present disclosure. Referring to FIG. 20, for example, the UE may be indicated that a Ti field of the MAC CE corresponds to each row of a table, and a field value of 1 indicates that an i-th row of the table is activated and mapped to a codepoint of DCI. For example, a Ti field value of 0 may indicate that the i-th row of the table is deactivated and is not mapped to the codepoint of DCI.
- Method 3: The UE may be configured to a table in which each row includes T or L and X for each CSI-ReportConfig, through an RRC parameter. FIG. 21 illustrates an example of MAC CE for configuring an application time of predicted CSI in a CSI report, according to an embodiment of the present disclosure. For example, referring to FIG. 21, the UE may be indicated which row it is in a table configured in corresponding CSI-ReportConfig through ApplicationTimeIndication and an CSI-ReportConfigID field of the MAC CE.

Method 1 described above has less MAC CE or DCI overhead than Method 2 and Method 3 described above by configuring application time-related parameters via RRC for each P/SP/AP CSI report configuration, but has a limitation that the base station is unable to dynamically provide application time-related indications. Method 2 described above allows the base station to dynamically provide application time-related indications in the AP CSI report, and Method 3 described above allows the base station to dynamically provide application time-related indications in the P/SP/AP CSI report. When the base station is able to configure T or L and X for each P/SP/AP CSI report through the above methods, for example, when the base station indicates a beam prediction CSI report for multiple UEs, T or L and X are configured for each UE so that a beam for a same application time is predicted even if CSI-RS measurement time or CSI reporting time is different for each UE, thereby enabling beam management for multiple UEs in the application time.

According to Embodiment 1-2 of the present disclosure, a method of resolving time restriction when the UE is explicitly indicated and configured with the application time of the predicted CSI in Embodiment 1-1 described above may be provided. In an embodiment, the UE may report the predicted CSI by assuming a most recent P/SP/AP CSI report time location ($t = n_{P/SP/AP}$) or a most recent measured P/SP/AP CSI-RS time location ($t = m_{P/SP/AP}$), based on X in which a reference location is X = 0. In detail, an application time-related parameter configured in a P/SP CSI report may be assumed as $T_{P/SP}, L_{P/SP}, X_{P/SP}$, and an application time-related parameter configured in an AP CSI report may be assumed as $T_{AP}, L_{AP}, X_{AP}$. For example, when $n_{P/SP} + X_{P/SP} < n_{AP} + X_{AP} + T_{AP}$ or $m_{P/SP} + X_{P/SP} < m_{AP} + X_{AP} + T_{AP}$ (when $n_{P/SP} \geq n_{AP}$ or $m_{P/SP} \geq m_{AP}$ and $n_{P/SP} + X_{P/SP} > n_{AP} + X_{AP}$ or $m_{P/SP} + X_{P/SP} > m_{AP} + X_{AP}$), the application time of the CSI to be reported in the P/SP CSI report overlaps the application time of the CSI to be reported in the AP CSI report, which may result in inefficient utilization of uplink resources for reporting. A method for efficient management when the application time of CSI to be reported in P/SP CSI report overlaps the application time of CSI to be reported in AP CSI report will be described in detail below.

- Method 1: The UE may assume that an application time of CSI to be reported in an AP CSI report does not overlap an application time of CSI to be reported in a next P/SP CSI report. In detail, the UE may calculate and apply $T'_{AP}$ that satisfies $n_{P/SP} + X_{P/SP} = n_{AP} + X_{AP} + T'_{AP}$ or $m_{P/SP} + X_{P/SP} = m_{AP} + X_{AP} + T'_{AP}$ when $T'_{AP} \leq T_{AP}$ assuming $n_{P/SP} + X_{P/SP} \geq n_{AP} + X_{AP} + T_{AP}$ or $m_{P/SP} + X_{P/SP} \geq m_{AP} + X_{AP} + T'_{AP}$. For example, the UE may report predicted CSI assuming configured and indicated $T_{P/SP}$ or $L_{P/SP}$ and $X_{P/SP}$ in the P/SP CSI report, and may report predicted CSI assuming configured and indicated $T_{AP}$ or $L_{AP}$ and $X_{AP}$ in the AP CSI report or may report predicted CSI assuming newly computed $T'_{AP}$ or $L'_{AP} = T'_{AP}/F$ and configured and indicated $X_{AP}$.

- Method 2: When an application time of CSI to be reported in an AP CSI report overlaps an application time of CSI to be reported in a next P/SP CSI report, the UE may assume the application time of CSI to be reported in the AP CSI report to be up to the application time of CSI to be reported in the next P/SP CSI report, and report CSI through the AP CSI report without the next P/SP CSI report. In detail, when $n_{P/SP} + X_{P/SP} < n_{AP} + X_{AP} + T_{AP}$ or $m_{P/SP} + X_{P/SP} < m_{AP} + X_{AP} + T_{AP}$, the UE may calculate and apply $T'_{AP}$ that satisfies $n_{P/SP} + X_{P/SP} + T_{P/SP} = n_{AP} + X_{AP} + T'_{AP}$ or $m_{P/SP} + X_{P/SP} + T_{P/SP} = m_{AP} + X_{AP} + T'_{AP}$. For example, the UE may report predicted CSI assuming newly computed $T'_{AP}$ or $L'_{AP} = T'_{AP}/F$ and configured and indicated $X_{AP}$ in the AP CSI report and may not perform the next P/SP CSI report.

- Method 3: When an application time of CSI to be reported in an AP CSI report overlaps an application time of CSI to be reported in a next P/SP CSI report, the UE may perform CSI reporting in the AP CSI report, not in the next P/SP CSI report, by multiplexing the CSI to be reported in the next P/SP CSI report with the CSI to be reported in the AP CSI report. For example, the UE may multiplex CSI predicted by assuming configured and indicated $T_{P/SP}$ or $L_{P/SP}$ and $X_{P/SP}$ in the P/SP CSI report with CSI predicted by assuming configured and indicated $T_{AP}$ or $L_{AP}$ and $X_{AP}$ in the AP CSI report, and report the same together as the AP CSI report and may not perform the next P/SP CSI report.

- Method 4: The UE may perform P/SP/AP CSI report regardless of time restriction.

Method 1 of Embodiment 1-2 described above may eliminate ambiguity in the application time of CSI reported from the base station by allowing the UE to report the application time of predicted CSI for the next P/SP CSI report and the application time of predicted CSI for AP CSI report without overlapping each other. Method 2 described above may reduce uplink overhead by allowing the UE to skip the next P/SP CSI report by considering the application of the predicted CSI for the next P/SP CSI report in the AP CSI report. Methods 3 and 4 described above enable performance of a high-performance beam prediction algorithm in the UE to be monitored in a network by overlapping the application time of the predicted CSI for the P/SP CSI report and the application time of the predicted CSI for AP CSI report. In addition, Method 3 may reduce uplink overhead or reporting latency compared to Method 4, and Method 4 has lower implementation complexity than Method 3 because there is no restriction during reporting by the UE.

Embodiment 2 of the present disclosure provides a method of implicitly indicating and configuring an application time of CSI estimated by the UE for a same assumption on an application time of the base station and the UE. According to an embodiment of the present disclosure, the UE may predict or estimate CSI at a configured application time and report the same to the base station. According to an embodiment of the present disclosure, the UE may implicitly configure $T_{P/SP}, L_{P/SP}, X_{P/SP}$ through configured P and F. Only one of $T_{P/SP}$ or $L_{P/SP}$ may be configured by assuming $L_{P/SP} = T_{P/SP}/F$, and the UE may assume an application time of an i-th predicted CSI as $X_{P/SP} + (i - 1)L_{P/SP}$. The UE may report F CSIs, which are different from each other, or may report some of same CSIs. For example, when the UE is configured with F = 4 and P = 20 ms, $T_{P/SP} = P = 20$ms or $L_{P/SP} = P/F = 5$ms, $X_{P/SP} = 0$ is assumed, and an application time of a first predicted CSI may be between 0 ms and 15 ms, and an application time of a second predicted CSI may be after 15 ms. At this time, the UE may report a first CSI estimated by the UE by mapping the same to first to third CSIs (i.e., 0 ms, 5 ms, 10 ms) in a CSI report, and a second CSI estimated by the UE by mapping the same to a CSI (i.e., 15 ms) in the CSI report. The base station may configure X, L, T in units of symbols, slots, or ms through higher layer parameters, and when at least one of the above parameters is configured in units of symbols or slots, the configured parameter may be scaled according to a BWP or subcarrier spacing configured in a cell. For example, when an X slot is configured in $\mu_{ref}$, the UE may assume a $X \cdot 2^{\mu_{ref}-\mu}$ slot in a BWP or cell configured to $\mu$. Because the UE assumes T=P when a P/SP CSI report is configured, there may be limitations for the base station to manage a CSI report predicted considering various application times. Accordingly, the UE needs to report the predicted CSI through the AP CSI report considering various application times. According to an embodiment of the present disclosure, when the P/SP CSI report is configured, the UE may be implicitly configured with $T_{AP}$, $L_{AP}$, $X_{AP}$ based on a DCI location for the configured P, F and AP CSI reports or a most recent CSI-RS location measured for the AP CSI report. Various method of configuring $T_{P/SP}$, $L_{P/SP}$, $X_{P/SP}$ and $T_{AP}$, $L_{AP}$, $X_{AP}$ will be described in detail below.

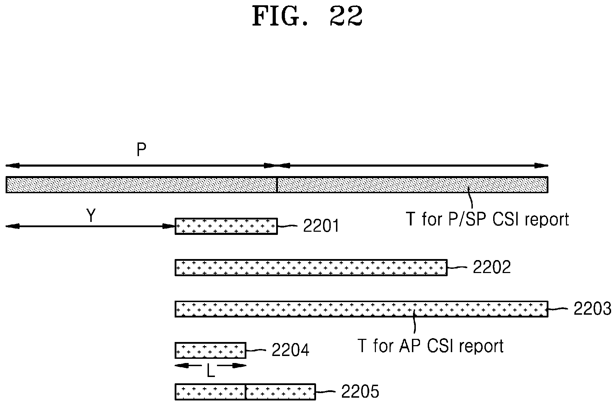

- Method 1: It may be assumed that the UE is configured with $T_{P/SP} = P$ or $L_{P/SP} = P/F$ and $X_{P/SP} = 0$ or $X_{P/SP}$ as in Embodiment 1-1 for the P CSI report. FIG. 22 illustrates an example of a method of implicatively configuring an application time of predicted CSI in an AP CSI report, according to an embodiment of the present disclosure. Referring to FIG. 22, it may be assumed that the UE is configured with $T_{AP} = P - Y$ or $L_{AP} = (P - Y)/F$ and $X_{AP} = 0$ or $X_{AP} = X_{P/SP}$ or $X_{P/SP}$ as in Embodiment 1-1 for the AP CSI report (2201). Assumptions regarding $Y$ will be described in detail below.
- Method 1-1: $Y$ is a difference between a AP CSI report time location and a most recent P/SP CSI report time location.
- Method 1-2: $Y$ is a difference between a DCI time location for triggering the AP CSI report and a most recent P/SP CSI report time location.
- Method 1-3: $Y$ is a difference between a DCI time location for triggering the AP CSI report and a most recent AP CSI report time location.
- Method 1-4: $Y$ may be configured via a higher layer. For example, Y-r19 may be configured in aperiodic in reportConfigType of CSI-reportConfig.
- Method 2: It may be assumed that the UE is configured with $T_{P/SP} = P$ or $L_{P/SP} = P/F$ and $X_{P/SP} = 0$ or $X_{P/SP}$ as in Embodiment 1-1 for the P CSI report. Referring to FIG. 22, it may be assumed that the UE is configured with $T_{AP} = P$ or $L_{AP} = P/F$ and $X_{AP} = 0$ or $X_{AP} = X_{P/SP}$ or $X_{P/SP}$ as in Embodiment 1-1 for the AP CSI report (2202). The UE may assume that assumptions for $Y$ are the same as in Method 1.
- Method 3: It may be assumed that the UE is configured with $T_{P/SP}$ = P or $L_{P/SP} = P/F$ and $X_{P/SP} = 0$ or $X_{P/SP}$ as in Embodiment 1-1 for the P CSI report. Referring to FIG. 22, it may be assumed that the UE is configured with $T_{AP} = 2P - Y$ or $L_{AP} = (2P - Y)/F$ and $X_{AP} = 0$ or $X_{AP} = X_{P/SP}$ or $X_{P/SP}$ as in Embodiment 1-1 for the AP CSI report (2203). The UE may assume that assumptions for $Y$ are the same as in Method 1. The UE may omit the first P CSI report after the AP CSI report.
- Method 4: It may be assumed that the UE is configured with $T_{P/SP} = P$ or $L_{P/SP} = P/F$ and $X_{P/SP} = 0$ or $X_{P/SP}$ as in Embodiment 1-1 for the P CSI report. Referring to FIG. 22, the UE may assume that, for the AP CSI report, $T_{AP} = P - Y + fL_{AP}$, $L_{AP} = P/F$, f is a maximum value among 1, 2, ..., and F, which satisfies $Y + fL_{AP} \leq P$, and the number of actual CSIs to be reported is f (2204). In the AP CSI report, F is the number of nominal beams to report, and the UE may not report an F-th CSI from an (f+1)-th CSI. The UE may assume that assumptions for $Y$ are the same as in Method 1.
- Method 5: It may be assumed that the UE is configured with $T_{P/SP} = P$ or $L_{P/SP} = P/F$ and $X_{P/SP} = 0$ or $X_{P/SP}$ as in Embodiment 1-1 for the P CSI report. Referring to FIG. 22, the UE may assume that, for the AP CSI report, $T_{AP} = P - Y + (f - 1)L_{AP}$, $L_{AP} = P/F$, f is the maximum value among 1, 2, ..., F, which satisfies $Y + fL_{AP} \leq P$, and the number of actual CSIs to be reported is f (2205). In the AP CSI report, F is the number of nominal beams to report, and the UE may not report the F-th CSI from the (f+1)-th CSI. The UE may assume that assumptions for $Y$ are the same as in Method 1.
- Method 6: It may be assumed that the UE is configured with $T_{P/SP} = P$ or $L_{P/SP} = P/F$ and $X_{P/SP} = 0$ or $X_{P/SP}$ as in Embodiment 1-1 for the P CSI report. It may be assumed that the UE is configured with $T_{AP}$, $L_{AP}$, $X_{AP}$ as in Embodiment 1-1 for the AP CSI report.

Method 1 described above may improve prediction accuracy by increasing the number of CSIs for predicted CSI reporting after Y hours. For example, when F is defined as 4 and four different beams are predicted at a 4th beam prediction time, the UE may not report the predicted beams with the P CSI report. When the AP CSI report is triggered such that $Y = 3L_{P/SP}$, the UE may report the four different predicted beams at the 4th beam prediction time through AP CSI reporting. Because the base station is unable to determine whether the number of CSIs predicted after Y hours is more than a configured value, the UE may need to report relevant CSIs. An application time-related CSI reporting method for UE-based P/SP/AP CSI reports will be described in detail with reference to Embodiment 4. Method 2 described above simplifies implementation of the beam estimation algorithm of the UE because a configuration of the application time for the AP CSI report is the same as the application time for the P/SP CSI report, and the base station may monitor performance of the beam estimation algorithm of the UE by comparing the P/SP CSI report and the AP CSI report. Method 3 described above may reduce uplink overhead by allowing the UE to skip the next P/SP CSI report by considering the application of the predicted CSI for the next P/SP CSI report in the AP CSI report. Methods 4 and 5 described above may reduce complexity of base station beam management by identically aligning the application times of the predicted CSIs for each reporting method, assuming $L_{P/SP} = L_{AP}$. Method 6 described above may ensure a degree of freedom of base station management by implicitly indicating only the application time for the P/SP CSI report and explicitly indicating various application times for the AP CSI report. In all Methods 1 to 5 described above, the application time for the P/SP CSI report may be configured regardless of whether the AP CSI report is triggered or not at the UE, and because the application time for the AP CSI report is used to configure the P/SP CSI report, an association is required between the AP CSI report and the P/SP CSI report. An association method between the AP CSI report and the P/SP CSI report will be described in detail in Embodiment 2-2.

Embodiment 2-2 of the present disclosure relates to a method of associating the AP CSI report and the P/SP CSI report, when the UE is implicitly indicated and configured with the application time of the predicted CSI. Through the association method according to an embodiment of the present disclosure, the UE may be implicitly configured with T, L, and X for the AP CSI report. The method by which the UE associates the AP CSI report and the P/SP CSI report for various cases will be described below.

- Method 1: When reportQuantity of the P/SP CSI report is the same as reportQuantity of the AP CSI report and reportQuantity is configured to report the predicted CSI, the UE may assume that the AP CSI report and the P/SP CSI report are associated with each other.
- Method 2: When reportQuantity of the P/SP CSI report and reportQuantity of the AP CSI report are configured to report the predicted CSI, the UE may assume that the AP CSI report and the P/SP CSI report are associated with each other.
- Method 3: When reportQuantity of the AP CSI report is configured to report the predicted CSI, the UE may be configured with ID of the associated P/SP CSI report through RRC.
- Method 4: When reportQuantity of the AP CSI report is configured to report the predicted CSI and $T_{AP}$ or $L_{AP}$ or $X_{AP}$ is not configured, the UE follows one of configuration methods of $T_{AP}$ or $L_{AP}$ or $X_{AP}$ of Embodiment 2-1 described above.

Embodiment 3 of the present disclosure describes a prediction CSI reporting method when the UE is configured and indicated with an application time. In an embodiment, the UE may be indicated, from the base station, to report F CSIs (nominal number of predicted CSIs) for a time T. At this time, the actual number of CSIs predicted by the UE during the time T may be different from F. A method of reporting when the number of CSIs to be reported during the time T, specifically indicated by the base station, and the actual number of CSIs predicted by the UE are different will be described in detail below.

- Method 1: The UE may report the actual CSI predicted for the time T by mapping the same to the F CSIs. The UE may report the F CSIs, which are different from each other, or may report some of same CSIs. For example, when the UE is configured with F = 4, X = 20 ms, and L = 20 ms, and an application time of a predicted first CSI is from 20 ms to 80 ms and an application time of a predicted second CSI is later than 80 ms, the UE may report by mapping the first CSI estimated by the UE to first to third CSIs to be reported (i.e., 20 ms, 40 ms, and 60 ms) and the second CSI estimated by the UE to a fourth CSI (i.e., 80 ms) to be reported, but this is merely an example and does not limit the scope of the present disclosure.
- Method 2: The UE may only report the actual number of predicted CSIs. In detail, the UE may map a pattern of the predicted CSIs that may be reported redundantly to a bitmap. For example, when F = 4, the UE may consider a total of 8 patterns of aaaa (pattern index=0), aaab (pattern index=1), aabb (pattern index=2), abbb (pattern index=3), aabc (pattern index=4), abbc (pattern index=5), abcc (pattern index=6), abcd (pattern index=7) and report which beam the actually predicted beam overlaps. However, this is only an example and does not limit the scope of the present disclosure. Here, aaab indicates that a same CSI a is reported from a first CSI application time to a third CSI application time and a different CSI b is reported in a fourth CSI report. For example, when the UE is configured with F = 4, X = 20 ms, and L = 20 ms and the application time of the predicted first CSI is 20 ms to 80 ms and the application time of the predicted second CSI is later than 80 ms, the UE reports the pattern index of aaab, and the first CSI and the second CSI. The total number of patterns may be limited by considering all possible combinations of patterns or by defining only some patterns considering CSI reporting overhead.

In Method 1 described above, the understanding of the number of UCI bits is the same between the UE and the base station, but Method 2 described above has a limitation that the understanding of the number of UCI bits may be different between the UE and the base station due to the number of CSI actually predicted by the UE. For Method 2 described above, for example, the UE may report a pattern index in the first CSI report and then report the predicted CSI excluding the pattern index in the second CSI report. For Method 2 described above, in another example, the UE may report the pattern index and the predicted CSI together and expect the base station to perform blind decoding assuming different numbers of UCI bits.

Embodiment 4 of the present disclosure describes a UE-based application time-related predicted CSI reporting method. Through Embodiment 3 described above, the UE may report the predicted CSI by considering the application time indicated by the base station, but Embodiment 3 may be inefficient in terms of performance and management compared to the UE directly reporting the predicted CSI by considering the application time. For example, the UE may report optimal P for minimizing RS overhead as application time-related CSI, optimal F for improving accuracy of predicted CSI, and accurate X for F CSIs. For example, when base station has instructed to report the F CSIs during the time T, but the actual number of CSIs predicted by the UE is more than F during the time T or F beams may be defined for a longer time than T, the UE may directly report F or T to further optimize beam management performance. A specific UE-based application time-related predicted CSI reporting method will be described in detail below.

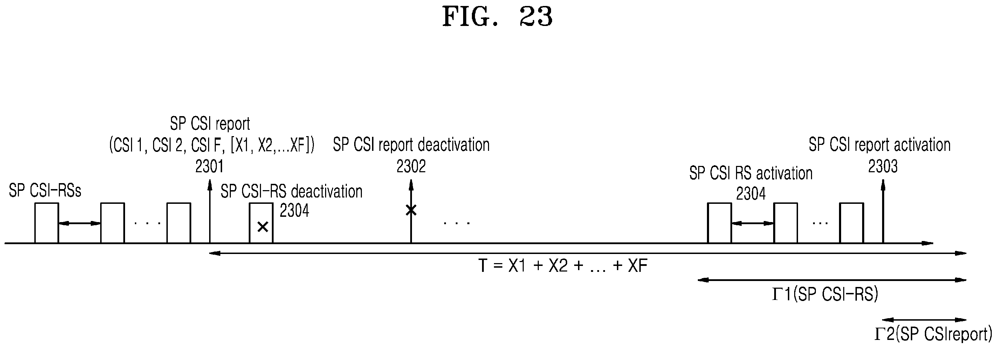

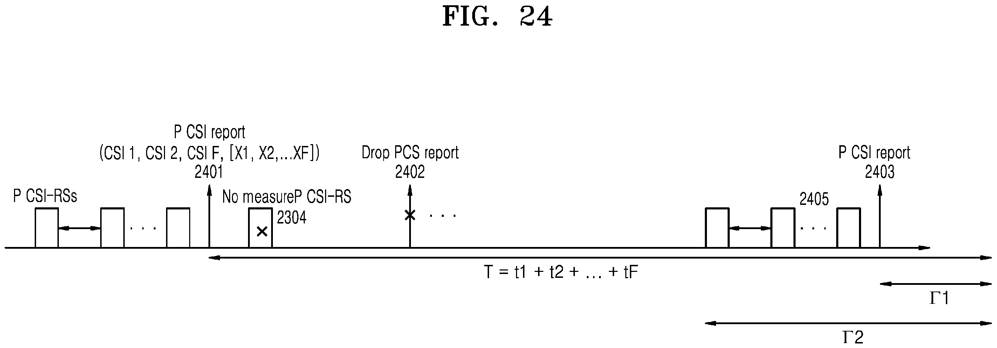

- Method 1: The UE may quantize and report preferred P/SP CSI report periodicity. In detail, the UE may report by mapping periodicity defined in CSI-ReportPeriodicityAndOffset to an index. For example, "slot4" may be mapped to index = 0, "slots5" may be mapped to index = 1, "slots8" may be mapped to index = 2, ..., and "sltos320" may be mapped to index = 9. The base station may indicate to change the P/SP CSI report periodicity via DCI or MAC CE. For example, the index may be directly indicated by a 1-bit Confirmation field or a periodicity index field, but this is only an example and does not limit the scope of the present disclosure.
- Method 2: The UE may quantize and report preferred P/SP CSI-RS periodicity. In detail, the UE may report by mapping periodicity defined in CSI-ResourcePeriodicityAndOffset to an index. For example, "slot4" may be mapped to index = 0, "slots5" may be mapped to index = 1, "slots8" may be mapped to index = 2, ..., and "sltos640" may be mapped to index = 12. The base station may indicate to change the P/SP CSI-RS periodicity via DCI or MAC CE. For example, the index may be directly indicated by a 1-bit Confirmation field or a periodicity index field, but this is only an example and does not limit the technical scope of the present disclosure.
- Method 3: The UE may quantize and report preferred F. For example, the UE may select and report one of {1, 2, 3, .., Fmax}, but this is only an example and does not limit the scope of the present disclosure. Fmax may be pre-defined, configured via RRC, or reported via UE capability.
- Method 4: The UE may directly report X corresponding to the F predicted CSIs in the SP CSI report. FIG. 23 illustrates an example of a method by which the UE reports the application time of the predicted CSI in the SP-CSI report, according to an embodiment of the present disclosure. For example, referring to FIG. 23, when PTIME is included in reportQuantity, the UE may report X1, X2, ..., XF as CSI (2301). When PTIME is included in reportQuantity or a higher layer parameter UEInitiatedSPCSIReportDeactivation-r19 is configured to enabled, the UE may expect the SP CSI report to be deactivated after the CSI report (2302), and the UE may expect the SP CSI report to be re-activated via DCI or MAC CE or expect the SP CSI report to be re-activated after $X + T - \Gamma1$ hours without having to receive separate DCI or MAC CE (2303). In another example, when SP CSI-RS is configured in the SP CSI report for channel measurement, the UE may expect the SP CSI-RS to be deactivated after the CSI report (2304) when PTIME is included in reportQuantity or a higher layer parameter UEInitiatedSPCSI-RSDeactivation-r19 is configured to enable or UEInitiatedSPCSIReportDeactivation-r19 is configured to enable, and the UE may expect the SP CSI-RS to be re-activated via MAC CE, the SP CSI-RS to be re-activated when the SP SCI report is activated via DCI or MAC CE, or the SP CSI-RS to be re-activated after $X + T - \Gamma2$ hours without having to receive separate DCI or MAC CE (2305). $\Gamma1$ and $\Gamma2$ may be pre-defined or configured by RRC, or otherwise, the UE may assume the same as 0.
- Method 5: The UE may directly report X corresponding to the F predicted CSIs in the P CSI report. FIG. 24 illustrates an example of a method by which the UE reports the application time of the predicted CSI in the P-CSI report, according to an embodiment of the present disclosure. For example, when PTIME is included in reportQuantity, the UE may report X1, X2, ..., XF as CSI (2401). When PTIME is included in reportQuantity or a higher layer parameter UEInitiatedPCSIReportDeactivation-r19 is configured to enabled, the UE may expect the P CSI report to be omitted after the CSI report (2402), and the UE may expect the P CSI report to be resumed via DCI or MAC CE or expect the P CSI report to be resumed after $X + T - \Gamma1$ hours without having to receive separate DCI or MAC CE (2403). In another example, when SP CSI-RS is configured in the P CSI report for channel measurement, the UE may expect the SP CSI-RS to be deactivated after the CSI report when PTIME is included in reportQuantity or a higher layer parameter UEInitiatedSPCSI-RSDeactivation-r19 is configured to enable or UEInitiatedPCSIReportDeactivation-r19 is configured to enable, and the UE may expect the SP CSI-RS to be re-activated via MAC CE, the SP CSI-RS to be re-activated when the P SCI report is resumed via DCI or MAC CE, or the SP CSI-RS to be re-activated after $X + T - \Gamma2$ hours without having to receive separate DCI or MAC CE. In another example, when P CSI-RS is configured in the P CSI report for channel measurement, the UE may expect that P CSI-RS is not required to be measured after the CSI report (2404) when PTIME is included in reportQuantity or a higher layer parameter UEInitiatedPCSI-RSDeactivation-r19 is configured to enable or UEInitiatedPCSIReportDeactivation-r19 is configured to enable, and the UE may expect resuming of P CSI-RS measurement to be triggered or indicated through DCI or MAC CE, the resuming of P CSI-RS measurement to be triggered when the P CSI report is resumed through DCI or MAC CE, or P CSI-RS measurement to be re-triggered after X + T - Γ2 hours without having to receive separate DCI or MAC CE (2405). Γ1 and Γ2 may be pre-defined or configured by RRC, or otherwise, the UE may assume the same as 0.

- Method 6: The UE may trigger an application time-related CSI report event in a higher layer. In detail, when an application time-related event ID is configured in a higher layer parameter EventTriggerConfig, the UE may trigger event methods described below.
- Method 6-1: The UE may trigger the base station to apply P/SP CSI report periodicity (P2) and P/SP CSI-RS periodicity (p2) pre-defined in a higher layer for an event purpose when a measured RSRP becomes greater than a previous RSRP value. When existing P/SP CSI report periodicity for a non-event purpose is P1 and P/SP CSI report periodicity is p1, it may be expected that P2 > P1 and p2 > p1.
- Method 6-2: When the measured RSRP becomes smaller than the previous RSRP value, the UE may trigger the base station to apply the existing P/SP CSI report periodicity (P1) and the P/SP CSI report periodicity (p1) for the non-event purpose when P2 and p2 for the event purpose defined in Method 6-1 are applied.
- Method 6-3: The UE may trigger reporting of the predicted CSI via an RRC message or reporting of the predicted CSI via UCI when an index of a predicted beam is different from an index of a previously predicted beam. A parameters for the CSI report may be configured via EventTriggerConfig.

Methods 1 to 3 described above may indicate the base station that P or F preferred by the UE has been reported by reporting the application time-related parameter preferred by the UE. Methods 4 and 5 may reduce latency and uplink overhead compared to when the base station indicates not to measure and report CSI after receiving the CSI report, because the UE reports an application time during which CSI is not required to be measured and reported, and the UE and the base station have the same understanding of the time. Also, Methods 4 to 5 described above may significantly reduce power consumption by preventing the UE from measuring SP/P CSI-RS during a specific application time. Method 6 described above enables efficient beam management when the UE performs handover or performs beam prediction for selecting a cell, as an event trigger-based CSI report.

Although Embodiments 1 to Embodiment 4 of the present disclosure described above have been described assuming beam management for the purpose of description, all embodiments and specific methods of the present disclosure are not limitedly used for the beam management. For example, the embodiments described above and the specific methods thereof may be used when the UE is to report predicted PMI, i1, or CQI. In addition, the base station and the UE may be operated by combining a portion of an embodiment and a portion of another embodiment among the embodiments described above.

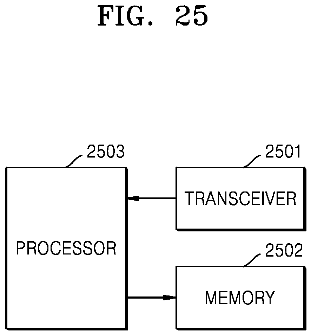

FIG. 25 is a block diagram showing a structure of a terminal, according to an embodiment of the present disclosure.

Referring to FIG. 25 the terminal may include a transceiver 2501, a memory 2502, and a processor 2503. However, the components of the terminal are not limited thereto. For example, the terminal may include more or fewer components than those described above. In addition, at least some or all of the transceiver 2501, the memory 2502, and the processor 2503 may be implemented in the form of one chip.

According to an embodiment, the transceiver 2501 may transmit and receive a signal to and from a base station. The signals may include control information and data. In this regard, the transceiver 2501 may include a RF transmitter for up-converting and amplifying a frequency of a transmitted signal, and a RF receiver for amplifying low-noise and down-converting a frequency of a received signal. Also, the transceiver 2501 may receive and output, to the processor 2503, a signal through a wireless channel, and transmit a signal output from the processor 2503 through the wireless channel.

According to an embodiment, the memory 2502 may store a program and data required for operations of the terminal. Also, the memory 2502 may store control information or data included in the signal transmitted and received by the terminal. The memory 2502 may be a storage medium, such as read-only memory (ROM), random access memory (RAM), a hard disk, a CD-ROM, and a DVD, or a combination of storage media. Also, the memory 2502 may include a plurality of memories. According to an embodiment, the memory 2502 may store a program for executing an operation for power saving of the terminal.

According to an embodiment, the processor 2503 may control a series of processes for the terminal to operate according to the embodiments of the present disclosure described above. According to an embodiment, the processor 2503 may execute a program stored in the memory 2502 to receive, from the base station, information such as a configuration for CA, a bandwidth part configuration, an SRS configuration, and a PDCCH configuration, and control dormant cell management based on the configuration information. Also, the processor 2503 may execute a program stored in the memory 2502 to perform various beam estimation algorithms, including AI-based channel estimation algorithms. However, this is only an example, and in other examples, there may be a separate processor for executing AI-based algorithms, and in this case, the processor 2503 may include a plurality of processors.

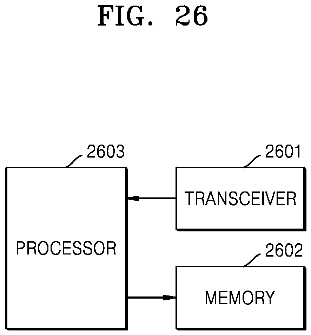

FIG. 26 is a block diagram showing a structure of a base station, according to an embodiment of the present disclosure.

Referring to FIG. 26 the base station may include a transceiver 2601, a memory 2602, and a processor 2603.

However, the components of the base station are not limited thereto. For example, the terminal may include more or fewer components than those described above. In addition, the transceiver 2601, the memory 2602, and the processor 2603 may be implemented as a single chip.

According to an embodiment, the transceiver 2601 may transmit and receive a signal to and from a terminal. The signals may include control information and data. In this regard, the transceiver 2601 may include a RF transmitter for up-converting and amplifying a frequency of a transmitted signal, and a RF receiver for amplifying low-noise and down-converting a frequency of a received signal. Also, the transceiver 2601 may receive and output, to the processor 2603, a signal through a wireless channel, and transmit a signal output from the processor 2603 through the wireless channel.

According to an embodiment, the memory 2602 may store a program and data required for operations of the terminal. Also, the memory 2602 may store control information or data included in the signal transmitted and received by the terminal. The memory 2602 may be a storage medium, such as read-only memory (ROM), random access memory (RAM), a hard disk, a CD-ROM, and a DVD, or a combination of storage media. Also, the memory 2602 may include a plurality of memories. According to an embodiment, the memory 2602 may store a program for executing an operation for power saving of the terminal.

According to an embodiment, the processor 6503 may control a series of processes for the base station to operate according to the embodiments of the present disclosure described above. According to an embodiment, the processor 2603 may execute a program stored in the memory 2602 to transmit, to the terminal, information such as a configuration for CA, a bandwidth part configuration, an SRS configuration, and a PDCCH configuration, and control dormant cell management of the terminal, based on the configuration information. Also, the processor 2603 may execute a program stored in the memory 2602 to perform various beam estimation algorithms, including AI-based channel estimation algorithms. However, this is only an example, and in other examples, there may be a separate processor for executing AI-based algorithms, and in this case, the processor 2603 may include a plurality of processors.

The methods according to the embodiments described in the claims or the detailed description of the present disclosure may be implemented in hardware, software, or a combination of hardware and software.

When the methods are implemented in software, a computer-readable recording medium or computer program product having one or more programs (software modules) recorded thereon may be provided. The one or more programs recorded on the computer-readable recording medium or computer program product are configured to be executable by one or more processors in an electronic device. The one or more programs include instructions causing the electronic device to execute the methods according to the embodiments described in the claims and the specification of the present disclosure.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in memory including a combination of some or all of the above-mentioned storage media. In addition, each memory device may be included by a plural number.

In addition, the programs may be stored in an attachable storage device accessible through any or a combination of communication networks such as the Internet, an intranet, a local area network (LAN), a wide LAN (WLAN), and a storage area network (SAN). Such a storage device may access the electronic device performing an embodiment of the present disclosure via an external port. Another storage device on the communication network may also be connected to the apparatus performing an embodiment of the present disclosure.

In the afore-described embodiments of the present disclosure, elements included in the present disclosure are expressed in a singular or plural form according to specific embodiments. However, the singular or plural form is appropriately selected for convenience of explanation and the present disclosure is not limited thereto. As such, an element expressed in a plural form may also be configured as a single element, and an element expressed in a singular form may also be configured as plural elements.

Meanwhile, the embodiments of the present disclosure described with reference to the present specification and the drawings are merely illustrative of specific examples to easily facilitate description and understanding of the present disclosure, and are not intended to limit the scope of the present disclosure. In other words, it will be apparent to one of ordinary skill in the art that other modifications based on the technical ideas of the present disclosure are feasible. Also, the embodiments of the present disclosure may be combined with each other as required. For example, a portion of one embodiment and a portion of another embodiment of the present disclosure may be combined with each other to enable a base station and a terminal to operate. Further, the embodiments of the present disclosure are also applicable to another communication system, and other modifications based on technical ideas of the embodiments are also feasible. For example, the embodiments may also be applied to an LTE system or a 5G or NR system.

**Claims**

1. An operating method of a terminal in a wireless communication system, the operating method comprising:

   receiving, from a base station, configuration information (CSI-ReportConfig) about an application time of channel state information (CSI); and
   reporting, to the base station, the CSI predicted from the application time estimated based on the configuration information.

2. The operating method of claim 1, wherein the configuration information comprises at least two of a number (F) of pieces of CSI to be reported, a total application time (T) of the F pieces of CSI, or an application time (L) per CSI, and an application time (X) of first predicted CSI,

$$L=T/F,$$

   and among the predicted CSI, an application time of an i-th predicted CSI is X+(i-1)*L.

3. The operating method of claim 2, wherein the configuration information is configured through radio resource control (RRC).

4. The operating method of claim 3, wherein the configuration information is configured for each CSI report according to a report configuration type (reportConfigType).

5. The operating method of claim 4, wherein, when the report configuration type is an aperiodic CSI report, the configuration information is configured as a table in which each row includes at least two of F, T, and L, and X.

6. The operating method of claim 5, wherein the row of the table is indicated through downlink control information (DCI) or a medium access control (MAC) control element (CE).

7. The operating method of claim 1, wherein the reporting comprises reporting on an assumption that an application time of periodic CSI report or semi-persistent CSI report does not overlap an application time of aperiodic CSI report.

8. The operating method of claim 1, wherein the reporting comprises, when an application time of aperiodic CSI report overlaps an application time of following periodic CSI report or semi-persistent CSI report, not performing the following periodic CSI report or semi-persistent CSI report.

9. An operating method of a base station in a wireless communication system, the operating method comprising:

   transmitting, to a terminal, configuration information (CSI-ReportConfig) about an application time of channel state information (CSI); and
   receiving, from the terminal, reporting of the CSI predicted from the application time estimated based on the configuration information.

10. The operating method of claim 9, wherein the configuration information comprises at least two of a number (F) of pieces of CSI to be reported, a total application time (T) of the F pieces of CSI, or an application time (L) per CSI, and an application time (X) of first predicted CSI,

$$L=T/F,$$

    and among the predicted CSI, an application time of an i-th predicted CSI is X+(i-1)*L.

11. The operating method of claim 10, wherein the configuration information is configured through radio resource control (RRC).

12. The operating method of claim 11, wherein the configuration information is configured for each CSI report according to a report configuration type (reportConfigType).

13. The operating method of claim 12, wherein, when the report configuration type is an aperiodic CSI report, the configuration information is configured as a table in which each row includes at least two of F, T, and L, and X.

14. A terminal in a wireless communication system, the terminal comprising:

   a transceiver; and
   at least one processor connected to the transceiver,
   wherein the at least one processor is configured to:

      receive, from a base station, configuration information (CSI-ReportConfig) about an application time of channel state information (CSI); and
      report, to the base station, the CSI predicted from the application time estimated based on the configuration information.

15. The terminal of claim 14, wherein the configuration information comprises at least two of a number (F) of pieces of CSI to be reported, a total application time (T) of the F pieces of CSI, or an application time (L) per CSI, and an application time (X) of first predicted CSI,

$$L=T/F,$$

and among the predicted CSI, an application time of an i-th predicted CSI is X+(i-1)*L.

# FIG. 1

One subframe 110

$N_{symb}^{subframe,\mu}$ OFDM symbols

1 OFDM symbols 102

1 subcarrier 103

$k = N_{RB,x}^{max,\mu} N_{sc}^{RB} - 1$

Resource block $N_{sc}^{RB}$ subcarriers 104

$N_{RB}^{\mu} N_{sc}^{RB}$ subcarriers

Resource element $(k, l)$ 101

Frequency

Time

$\tilde{l} = 0$

$\tilde{l} = 14 \cdot 2^{\mu} - 1$

$k = 0$

# FIG. 2

1 frame
200

1 subframe
201

μ = 0
204

| 0 | 1 | 2 | 3 | 4 | 5 | 6 | 7 | 8 | 9 |

slot
202

μ = 1
205

| 0 | 1 | 2 | 3 | 4 | 5 | 6 | 7 | 8 | 9 | 10 | 11 | 12 | 13 | 14 | 15 | 16 | 17 | 18 | 19 |

slot
203

EP 4 550 685 A1

# FIG. 3

BWP#1
301

BWP#2
302

UE bandwidth
300

Frequency

# FIG. 4

Duration 404

Frequency resource 403

UE bandwidth part 410

Frequency

Time

Slot 420

Control resource set#1 401

Control resource set#2 402

# FIG. 5

1 symbol
501

1 PRB
502

DMRS
505

REG
503

CCE
504

# FIG. 6

**610**

1. Cell-specific semi-static UL/DL configuration (SIB)

Slot — 601

Symbol — 602

Periodicity — 603

**620**

2. UE-specific semi-static UL/DL configuration (dedicated RRC)

# of consecutive DL slots — 611

# of consecutive DL symbols — 612

# of consecutive UL symbols — 614

# of consecutive UL slots — 613

**630**

3. UE-group dynamic UL/DL configuration (DCI format 2_0)

Slot — 621    Slot — 622

# of consecutive DL symbols — 623

# of consecutive UL symbols — 624

# of consecutive DL symbols — 625

# of consecutive UL symbols — 626

▨ : Downlink resource — 604
▨ : Flexible resource — 605
▨ : Uplink resource — 606

Slot format indicator — 631

Slot format indicator — 632

EP 4 550 685 A1

# FIG. 7

TCI state #0          TCI state #1          TCI state #2

700                   705                   710

# FIG. 8

800

RRC configured TCI states

805 810 815 820

| TCI #0 | TCI #1 | TCI #2 | · · · | TCI #N |

825

A list of TCI states for a CORESET

830 835 840

| TCI #a | TCI #b | · · · | TCI #n |

TCI indication via MAC CE
845

# FIG. 9

| | | | 915 | | | 920 | | | |
|---|---|---|---|---|---|---|---|---|---|

| | Serving Cell ID | CORESET ID | Oct 1 |
|---|---|---|---|
| CORE SET ID | TCI State ID | | Oct 2 |

925

FIG. 10

EP 4 550 685 A1

## FIG. 11

FIG. 12

12-00
RA type 0

12-15
Bitmap

12-05
RA type 1

12-20
Starting VRB

12-25
Length

12-10
Both RA type 0 & 1

12-30
1 bit for RA type indication

12-35
Max{payload for RA type 0, payload for RA type 1}

# FIG. 13

RRC Configured TCI states

| TCI #0 | TCI #1 | TCI #2 | TCI #3 | . . . | TCI #M-1 |

13-00

⇩

MAC-CE activated TCI states for PDSCH

| TCI #0' | TCI #1' | TCI #2' | · · · | TCI #K-1 |

13-20

MAC CE based beam indication

⇩

TCI states for PDSCH

| TCI #1 |

13-40

DCI based beam selection

## MAC-CE structure

| | | | | | | | |
|---|---|---|---|---|---|---|---|
| R | Serving Cell ID | | | | | BWP ID | |
| $T_7$ | $T_6$ | $T_5$ | $T_4$ | $T_3$ | $T_2$ | $T_1$ | $T_0$ |
| $T_{15}$ | $T_{14}$ | $T_{13}$ | $T_{12}$ | $T_{11}$ | $T_{10}$ | $T_9$ | $T_8$ |
| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ |

13-55

13-50

Oct 1

Oct 2

Oct 3

Oct N

## FIG. 14

SLOT FORMAT 1401

| Slot 1 | Slot 2 | Slot 3 | Slot 4 | Slot 5 | Slot 6 | Slot 7 | Slot 8 |

Nominal repetition 1402

| N1 | N2 | N3 | N4 | N5 | N6 | N7 | N8 | N9 | N10 |

Actual repetition 1403

| × | X A1 | A2 | A3 | A4 | A5 | A6 | × | × | × | × | × | A7 | A8 | A9 | A10 |

3  6  8  2  10  2            4  6  8  2

⊡ : DOWNLINK (DL) SYMBOL
▨ : FLEXIBLE (F) SYMBOL
▦ : UPLINK (UL) SYMBOL

# FIG. 15

EP 4 550 685 A1

## FIG. 16

85

# FIG. 17

EP 4 550 685 A1

Example scenario — 1701

QCL type D RS for CSI-RS#1~4:SSB#1

SSB#1

Assumption
-N CSI-RSs are used for beam management

UE from t1 to t3

UE at t4

UE at t5

RSRP (t1) +[assistantinfo]

RSRP (t2) +[assistantinfo]

RSRP (tK) +[assistantinfo]

beam predictor — 1703

Future beaminfo $(t_{K+1}, t_{K+2}, ..., t_{K+F})$

gNB may indicate QCL-type D RS changes based on UE's reporting

N CSI-RSs in Set B: QCL-type D RS=CSI-RS#1 (N=1)

N CSI-RSs in Set B: QCL-type D RS=CSI-RS#1 (N=1)

N CSI-RSs in Set B: QCL-type D RS=CSI-RS#1 (N=1)

N CSI-RSs in Set B: QCL-type D RS=CSI-RS#2 (N=1)

N CSI-RSs in Set B: QCL-type D RS=CSI-RS#2 (N=1)

Used for t4/t5/...beam prediction

1702

Time offset (P)

Time offset (P)

PDCCH/PDSCH/ CSI-RS

PDCCH/PDSCH/ CSI-RS

L1-RSRP measured from CSI-RS in Set B (t1=t-2P)

L1-RSRP measured from CSI-RS in Set B (t2=t-P)

L1-RSRP measured from CSI-RS in Set B (t3=t) (K=3)

t4

t5

t6   time

1704

1705

Future beam info reporting

# FIG. 18

CSI reporting

1801

1$^{st}$beam   2$^{st}$ beam     F—th beam

time

X

1804

L ——1803

T ——1802

# FIG. 19

| R | Serving Cell ID | BWP ID | OCT 1 |
|---|---|---|---|
| Application Time Indication | | | OCT 2 |

# FIG. 20

| R | Serving Cell ID | | | | | BWP ID | | OCT 1 |
|---|---|---|---|---|---|---|---|---|
| $T_7$ | $T_6$ | $T_5$ | $T_4$ | $T_3$ | $T_2$ | $T_1$ | $T_0$ | OCT 2 |
| $T_{15}$ | $T_{14}$ | $T_{13}$ | $T_{12}$ | $T_{11}$ | $T_{10}$ | $T_9$ | $T_8$ | OCT 3 |

⋮

| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ | OCT N |

# FIG. 21

| R | Serving Cell ID | | | | | BWP ID | | OCT 1 |
|---|---|---|---|---|---|---|---|---|
| R | R | CSI−Report Configuration ID | | | | | | OCT 2 |
| $T_7$ | $T_6$ | $T_5$ | $T_4$ | $T_3$ | $T_2$ | $T_1$ | $T_0$ | OCT 3 |
| $T_{15}$ | $T_{14}$ | $T_{13}$ | $T_{12}$ | $T_{11}$ | $T_{10}$ | $T_9$ | $T_8$ | OCT 4 |

$$\vdots$$

| $T_{(N-3)\times8+7}$ | $T_{(N-3)\times8+6}$ | $T_{(N-3)\times8+5}$ | $T_{(N-3)\times8+4}$ | $T_{(N-3)\times8+3}$ | $T_{(N-3)\times8+2}$ | $T_{(N-3)\times8+1}$ | $T_{(N-3)\times8}$ | OCT N |
|---|---|---|---|---|---|---|---|---|

# FIG. 22

# FIG. 23

SP CSI report
(CSI 1, CSI 2, CSI F, [X1, X2,...XF])
2301

SP CSI report deactivation
2302

SP CSI report activation
2303

SP CSI RS activation
2304

SP CSI-RSs

SP CSI-RS deactivation
2304

T = X1 + X2 + ... + XF

Γ1(SP CSI-RS)

Γ2(SP CSIreport)

EP 4 550 685 A1

## FIG. 24

P CSI report
(CSI 1, CSI 2, CSI F, [X1, X2,...XF])
2401

Drop PCS report
2402

P CSI report
2403

P CSI-RSs

No measureP CSI-RS
2304

2405

× 2304

×

T = t1 + t2 + ... + tF

Γ1

Γ2

EP 4 550 685 A1

FIG. 25

## FIG. 26

```
        2603                    2601
   ┌──────────┐          ┌──────────────┐
   │          │ ◄─────── │ TRANSCEIVER  │
   │          │          └──────────────┘
   │PROCESSOR │                    2602
   │          │          ┌──────────────┐
   │          │ ───────► │   MEMORY     │
   └──────────┘          └──────────────┘
```

## INTERNATIONAL SEARCH REPORT

| | International application No. |
|---|---|
| | **PCT/KR2023/011260** |

### A. CLASSIFICATION OF SUBJECT MATTER

**H04B 7/06**(2006.01)i; **H04B 7/0408**(2017.01)i; **H04B 7/08**(2006.01)i; **H04B 17/309**(2015.01)i; **H04W 24/08**(2009.01)i; **H04W 24/10**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/06(2006.01); G06N 20/00(2019.01); H04B 17/345(2015.01); H04L 5/00(2006.01); H04W 24/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 보고(report), 어플리케이션 시간(application time), 예측(predict)

### C. DOCUMENTS CONSIDERED TO BE RELEVANT

| Category* | Citation of document, with indication, where appropriate, of the relevant passages | Relevant to claim No. |
|---|---|---|
| Y | US 2021-0351885 A1 (SAMSUNG ELECTRONICS CO., LTD.) 11 November 2021 (2021-11-11)<br>See paragraphs [0107], [0123]-[0124], [0139], [0149], [0178] and [0180]; and figures 8 and 13A-13B. | 1-15 |
| Y | VIVO. Other aspects on AI/ML for CSI feedback enhancement. R1-2203551, 3GPP TSG RAN WG1 #109-e, e-Meeting. 29 April 2022.<br>See section 3.4. | 1-15 |
| Y | US 2022-0077999 A1 (COMCAST CABLE COMMUNICATIONS, LLC) 10 March 2022 (2022-03-10)<br>See paragraph [0452]. | 7-8 |
| A | US 2022-0131588 A1 (QUALCOMM INCORPORATED) 28 April 2022 (2022-04-28)<br>See paragraphs [0075]-[0228]; and figures 2-17. | 1-15 |
| A | WO 2022-084469 A1 (TELEFONAKTIEBOLAGET LM ERICSSON (PUBL)) 28 April 2022 (2022-04-28)<br>See paragraphs [0072]-[0078]; and figures 6-7. | 1-15 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 October 2023** | **27 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011260**

| Patent document cited in search report | | | Publication date (day/month/year) | Patent family member(s) | | | Publication date (day/month/year) |
|---|---|---|---|---|---|---|---|
| US | 2021-0351885 | A1 | 11 November 2021 | WO | 2020-213964 | A1 | 22 October 2020 |
| US | 2022-0077999 | A1 | 10 March 2022 | CA | 3028778 | A1 | 29 June 2019 |
| | | | | CA | 3029574 | A1 | 10 July 2019 |
| | | | | EP | 3512265 | A1 | 17 July 2019 |
| | | | | EP | 3512265 | B1 | 11 May 2022 |
| | | | | EP | 4040863 | A1 | 10 August 2022 |
| | | | | US | 10681648 | B2 | 09 June 2020 |
| | | | | US | 10979982 | B2 | 13 April 2021 |
| | | | | US | 11153060 | B2 | 19 October 2021 |
| | | | | US | 11388679 | B2 | 12 July 2022 |
| | | | | US | 2019-0207737 | A1 | 04 July 2019 |
| | | | | US | 2019-0215781 | A1 | 11 July 2019 |
| | | | | US | 2020-0305090 | A1 | 24 September 2020 |
| | | | | US | 2021-0235388 | A1 | 29 July 2021 |
| | | | | US | 2022-0046550 | A1 | 10 February 2022 |
| | | | | US | 2023-0083325 | A1 | 16 March 2023 |
| US | 2022-0131588 | A1 | 28 April 2022 | CN | 116349167 | A | 27 June 2023 |
| | | | | EP | 4233213 | A1 | 30 August 2023 |
| | | | | WO | 2022-087189 | A1 | 28 April 2022 |
| WO | 2022-084469 | A1 | 28 April 2022 | EP | 4232971 | A1 | 30 August 2023 |

Form PCT/ISA/210 (patent family annex) (July 2022)